# EUROPEAN PATENT APPLICATION

(11) **EP 4 579 320 A1**
(43) Date of publication of application: **02.07.2025**
(21) Application number: 24755946.1
(22) Date of filing: 27.01.2024
(51) Int. Cl.: G02B 27/64

(54) **MOTOR, CAMERA MODULE, AND ELECTRONIC DEVICE**

(30) Priority: 15.02.2023 CN 202310146129; 21.03.2023 CN 202310312152
(71) Applicant: Huawei Technologies Co., Ltd., Shenzhen, Guangdong 518129 (CN)
(72) Inventor: HOU, Qing, Shenzhen, Guangdong 518129 (CN); ZHENG, Ke, Shenzhen, Guangdong 518129 (CN); LIU, Bin, Shenzhen, Guangdong 518129 (CN); TANG, Wei, Shenzhen, Guangdong 518129 (CN); QIN, Shixin, Shenzhen, Guangdong 518129 (CN); LI, Dengfeng, Shenzhen, Guangdong 518129 (CN); WANG, Peng, Shenzhen, Guangdong 518129 (CN); ZHANG, Bailiang, Shenzhen, Guangdong 518129 (CN)
(74) Representative: Epping - Hermann - Fischer
(86) International application number: PCT/CN2024/074352
(87) International publication number: WO 2024/169571

(57) **Abstract**

This application provides a motor, a camera module, and an electronic device. A first image stabilization magnetic piece of the motor is fastened to a first edge portion of an image stabilization bracket. A second image stabilization magnetic piece is fastened to a second edge portion of the image stabilization bracket. A first image stabilization coil and a second image stabilization coil are both fastened to a base, are disposed facing the first image stabilization magnetic piece and the second image stabilization magnetic piece respectively, and are configured to drive the image stabilization bracket to move relative to the base along a first direction and/or a second direction. The first image stabilization magnetic piece, the first image stabilization coil, the second image stabilization magnetic piece, and the second image stabilization coil are all arranged along a third direction. The third direction is perpendicular to the first direction and the second direction. A guide bracket of the motor is L-shaped. Three support portions of the guide bracket are all located between the image stabilization bracket and the base, are disposed in a one-to-one correspondence with three corner portions of the image stabilization bracket, and are connected to the base and the image stabilization bracket through support pieces. The motor can implement a large-stroke design for optical image stabilization.

## Description

This application claims priorities to Chinese Patent Application No. 202310146129.2, filed with the China National Intellectual Property Administration on February 15, 2023 and entitled "MOTOR, CAMERA MODULE, AND ELECTRONIC DEVICE", and to Chinese Patent Application No. 202310312152.4, filed with the China National Intellectual Property Administration on March 21, 2023 and entitled "MOTOR, CAMERA MODULE, AND ELECTRONIC DEVICE", both of which are incorporated herein by reference in their entireties.

### TECHNICAL FIELD

This application relates to the field of camera technologies, and in particular, to a motor, a camera module, and an electronic device.

### BACKGROUND

As a photographing function of a smartphone camera (camera) becomes increasingly powerful, an optical image stabilization (optical image stabilization, OIS) technology gradually becomes one of main selling points and competitive edges of a mobile phone camera. The optical image stabilization technology is used to detect and feed back, in real time, jitter of a mobile phone within a specific frequency and amplitude range and perform reverse compensation during photographing. The compensation is usually implemented by correcting an optical path through an optical lens (lens). Therefore, compared with a manner of increasing a gain according to a software algorithm, this technology achieves quite small loss in image quality, and therefore well ensures image quality.

A current optical image stabilization technology is mainly implemented by using a voice coil motor (voice coil motor, VCM). However, a structural design of a conventional voice coil motor makes it difficult to implement large-stroke optical image stabilization. Consequently, in some application scenarios, image quality is affected, and image shooting experience of a user is poor.

### SUMMARY

An objective of embodiments of this application is to provide a motor, a camera module, and an electronic device. The motor can implement a large-stroke design for optical image stabilization, to achieve better image shooting experience.

According to a first aspect, this application provides a motor, including a base, an image stabilization bracket, a first image stabilization magnetic piece, a second image stabilization magnetic piece, a first image stabilization coil, and a second image stabilization coil. The image stabilization bracket includes a first corner portion, a first edge portion, a second corner portion, a second edge portion, and a third corner portion that are sequentially connected. The first edge portion and the second edge portion are arranged at an included angle. The first image stabilization magnetic piece is fastened to the first edge portion. The second image stabilization magnetic piece is fastened to the second edge portion.

The image stabilization bracket is movably connected to the base. Both the first image stabilization coil and the second image stabilization coil are fastened to the base. The first image stabilization coil is disposed facing the first image stabilization magnetic piece and is configured to drive the image stabilization bracket to move relative to the base along a first direction. The second image stabilization coil is disposed facing the second image stabilization magnetic piece and is configured to drive the image stabilization bracket to move relative to the base along a second direction. The second direction intersects with the first direction. The first image stabilization magnetic piece and the first image stabilization coil are arranged along a third direction. The second image stabilization magnetic piece and the second image stabilization coil are arranged along the third direction. The third direction is perpendicular to the first direction and the second direction.

The motor further includes a guide bracket. The guide bracket is L-shaped. The guide bracket includes three support portions that are spaced apart. The three support portions are all located between the image stabilization bracket and the base and are disposed in a one-to-one correspondence with the first corner portion, the second corner portion, and the third corner portion. The three support portions are connected to the base through a plurality of first support pieces and are connected to the image stabilization bracket through a plurality of second support pieces. In this way, a relative movement direction of the image stabilization bracket and the guide bracket is different from a relative movement direction of the guide bracket and the base.

In this application, driven by the first image stabilization magnetic piece, the first image stabilization coil, the second image stabilization magnetic piece, and the second image stabilization coil, the image stabilization bracket can drive a focusing bracket and a lens to move relative to the base along the first direction and/or the second direction, to implement movement on a plane perpendicular to an optical axis. In this case, the motor can implement optical image stabilization for a camera module. Based on related designs, such as arrangement positions, of the first image stabilization magnetic piece, the first image stabilization coil, the second image stabilization magnetic piece, and the second image stabilization coil, during movement of the image stabilization bracket relative to the base along the first direction, a movement direction of the image stabilization bracket is perpendicular to a magnetic gap between the first image stabilization magnetic piece and the first image stabilization coil; and during movement of the image stabilization bracket relative to the base along the second direction, a movement direction of the image stabilization bracket is perpendicular to a magnetic gap between the second image stabilization magnetic piece and the second image stabilization coil. The magnetic gap is not affected by a movement action of the image stabilization bracket. Therefore, a problem that a driving force rapidly decreases due to an increase in the magnetic gap can be avoided, to ensure that an image stabilization driving force of the motor is large and the driving force is stable. This facilitates a large-stroke design for an optical image stabilization function of the motor, to achieve better image shooting experience.

In addition, both coils and magnetic pieces of an image stabilization drive mechanism of the motor are approximately arranged on a plane perpendicular to the optical axis. With an increase in widths of the magnetic pieces (to be specific, a size of the first image stabilization magnetic piece along the first direction and a size of the second image stabilization magnetic piece along the second direction), a movement stroke of the image stabilization bracket along the first direction and/or the second direction can be increased. This helps implement a large-stroke design for optical image stabilization without increasing a height of the motor. In addition, resistance to movement of the motor during optical image stabilization is mainly sliding friction between a support piece and a fitting mechanical part, and is irrelevant to a movement stroke. Therefore, the resistance does not significantly increase during large-stroke optical image stabilization, so that a large-stroke design for optical image stabilization can be implemented without greatly increasing a driving force.

In this application, the guide bracket is L-shaped. Compared with a frame structure, the guide bracket has a significantly smaller size, so that space on two sides can be saved. This facilitates miniaturization of the motor and the camera module. In addition, the three support portions of the guide bracket are disposed in correspondence with the three corner portions of the image stabilization bracket, the first image stabilization magnetic piece and the first image stabilization coil are located between a first support portion and a second support portion, and the second image stabilization magnetic piece and the second image stabilization coil are located between the second support portion and a third support portion. Therefore, the guide bracket can ensure reliability of a connection between the image stabilization bracket and the base when a size is reduced, and can implement stable supporting and accurate guiding to ensure stability of relative positions of the first image stabilization magnetic piece and the first image stabilization coil and stability of relative positions of the second image stabilization magnetic piece and the second image stabilization coil. In this way, optical image stabilization movement of the motor is stable and reliable.

In addition, a double-layer bracket design with the guide bracket and the image stabilization bracket is used for the motor. Each layer of bracket cooperates with a support piece and an adjacent mechanical part to implement guiding along one direction. No crosstalk occurs between guiding along two directions. This helps implement precise guiding for optical image stabilization. Based on a guiding function of the plurality of first support pieces, the guide bracket and the image stabilization bracket can move together relative to the base along the second direction. Based on a guiding function of the plurality of second support pieces, the image stabilization bracket can move relative to the guide bracket along the first direction. Therefore, the motor can implement precise guiding during optical image stabilization through a fitting structure of the base, the first support pieces, the guide bracket, the second support pieces, and the image stabilization bracket. This resolves a problem that a lens greatly tilts when a conventional motor performs optical image stabilization.

The first image stabilization magnetic piece may have two opposite polarity directions, and the polarity directions of the first image stabilization magnetic piece are perpendicular to a winding plane of the first image stabilization coil. Coils in two regions of the first image stabilization coil may be disposed in correspondence with the two polarity directions of the first image stabilization magnetic piece respectively. Current flow directions in the coils in the two regions are opposite to each other. A side, facing the first image stabilization coil, of the first image stabilization magnetic piece includes a north pole (N) and a south pole (S). A side, backing a focusing coil, of the first image stabilization magnetic piece includes a south pole (S) and a north pole (N) correspondingly.

For example, the second image stabilization magnetic piece may have two opposite polarity directions, and the polarity directions of the second image stabilization magnetic piece are perpendicular to a winding plane of the second image stabilization coil. Coils in two regions of the second image stabilization coil may be disposed in correspondence with the two polarity directions of the second image stabilization magnetic piece respectively. Current flow directions in the coils in the two regions are opposite to each other. A side, facing the second image stabilization coil, of the second image stabilization magnetic piece includes a north pole (N) and a south pole (S). A side, backing the focusing coil, of the second image stabilization magnetic piece includes a south pole (S) and a north pole (N) correspondingly.

In some possible implementations, the image stabilization bracket further includes a third edge portion and a fourth edge portion. The third edge portion is connected to the third corner portion and is disposed opposite to the first edge portion. The fourth edge portion is connected to the first corner portion and is disposed opposite to the second edge portion. The motor further includes a focusing bracket, a focusing magnetic piece, and the focusing coil. The focusing bracket is located on an inner side of the image stabilization bracket. The focusing magnetic piece is fastened to the focusing bracket. The focusing coil is fastened to the third edge portion or the fourth edge portion, is disposed facing the focusing magnetic piece, and is configured to drive the focusing bracket to move relative to the image stabilization bracket along the third direction.

In this implementation, in the motor, the image stabilization drive mechanism and the guide bracket are arranged at two edge positions corresponding to the first edge portion and the second edge portion of the image stabilization bracket, a focusing drive mechanism is arranged at an edge position corresponding to the third edge portion of the image stabilization bracket, and no drive mechanism is arranged at an edge position corresponding to the fourth edge portion of the image stabilization bracket. Therefore, the three edge positions of the motor can be fully utilized for arranging drive mechanisms, and a size of the remaining edge position is minimized, to facilitate overall miniaturization of the motor.

The first image stabilization magnetic piece, the second image stabilization magnetic piece, and a circuit board assembly are fastened to the first edge portion, the second edge portion, and the third edge portion of the image stabilization bracket respectively, and each uses a fitting structure of at least partial embedding. In this way, a structural arrangement of a plurality of components is compact, and space utilization is high. When no other fitting component is disposed on the fourth edge portion of the image stabilization bracket, a size of the fourth edge portion is kept small. For example, a width of the fourth edge portion is less than a width of the first edge portion and a width of the second edge portion. This helps reduce a size of the image stabilization bracket.

In this implementation, during movement of the focusing bracket relative to the image stabilization bracket, a movement direction of the focusing bracket is perpendicular to a magnetic gap between the focusing magnetic piece and the focusing coil, and the magnetic gap is not affected by a movement action of the focusing bracket. Therefore, a problem that a driving force rapidly decreases due to an increase in the magnetic gap can be avoided, to ensure that a focusing driving force of the motor is large and the driving force is stable. This facilitates a large-stroke design for a focusing function of the motor.

In this implementation, both the focusing drive mechanism and the image stabilization drive mechanism of the motor are designed in a dynamic magnetic manner, and driving of the motor along each of the first direction, the second direction, and the third direction is separately controlled by a group of actuators (including a coil and a magnetic piece). During movement of the focusing bracket of the motor relative to the image stabilization bracket along the third direction for autofocus, relative positions of the image stabilization bracket and the base are not affected, and a width of a magnetic gap of the image stabilization drive mechanism does not change. Similarly, during movement of the image stabilization bracket relative to the base along the first direction and/or the second direction for optical image stabilization, the focusing bracket moves along with the image stabilization bracket, relative positions of the focusing bracket and the image stabilization bracket are not affected, and a width of a magnetic gap of the focusing drive mechanism does not change. Therefore, the focusing drive mechanism and the image stabilization drive mechanism of the motor are decoupled from each other, and do not interfere with each other during movement. This helps ensure driving precision of the motor.

In addition, the focusing bracket is located on the inner side of the image stabilization bracket, the focusing coil is fastened to the image stabilization bracket, and the focusing magnetic piece is fastened to the focusing bracket. Therefore, in the motor, a mover assembly for optical image stabilization is wrapped around a mover assembly for focusing. The focusing bracket is located on the inner side of the image stabilization bracket. It can be understood that, when the focusing bracket is located on the inner side of the image stabilization bracket, the image stabilization bracket may be disposed around the focusing bracket. The being disposed around may be that the image stabilization bracket is disposed fully around the focusing bracket, or may be that a part of the image stabilization bracket is disposed around the focusing bracket. In this implementation, the image stabilization bracket is frame-shaped. In this case, the image stabilization bracket is disposed around the focusing bracket.

A plane around which a conducting wire of the focusing coil is wound (that is, a winding plane) may be parallel to the third direction. In this case, the focusing coil is arranged vertically, so that the focusing coil can occupy a small area on a plane perpendicular to the optical axis. This facilitates miniaturization of the motor. The focusing magnetic piece may include two opposite polarity directions, and both polarity directions are perpendicular to the third direction. In this case, the focusing magnetic piece may be arranged vertically, to reduce space occupied by the focusing magnetic piece on a - plane. This facilitates a miniaturization design of the motor.

In some possible implementations, the third edge portion or the fourth edge portion is provided with a through hole, the focusing coil is at least partially located in the through hole, the motor further includes a focusing circuit board, and the focusing coil is fastened to the image stabilization bracket through the focusing circuit board. In this case, a structural arrangement of the focusing coil and the image stabilization bracket is compact. This helps improve space utilization.

In some implementations, a distance between a center axis of the focusing bracket and an outer side surface of the fourth edge portion of the image stabilization bracket may be less than a distance between the center axis of the focusing bracket and an outer side surface of the third edge portion of the image stabilization bracket. In this implementation, large space is reserved on the third edge portion of the image stabilization bracket for arranging the focusing coil and the focusing magnetic piece, and small space is reserved on the fourth edge portion to reduce a size. This facilitates a miniaturization design of the motor.

In some possible implementations, the three support portions include the first support portion, the second support portion, and the third support portion, the guide bracket further includes a first connection portion and a second connection portion, the first connection portion connects the first support portion to the second support portion, and the second connection portion connects the second support portion to the third support portion.

The first edge portion of the image stabilization bracket is disposed in correspondence with the first connection portion of the guide bracket, and is arranged in correspondence with an edge of the base. The second edge portion of the image stabilization bracket is disposed in correspondence with the second connection portion of the guide bracket, and is arranged in correspondence with another edge of the base. Therefore, the image stabilization bracket and the guide bracket are arranged compactly, space of three corner regions and two edge regions of the base can be fully utilized for arrangement, and space of the other two edge regions of the base is narrowed. This facilitates a miniaturization design of the motor.

The image stabilization bracket has movement space. The first connection portion is located on a side, backing the movement space, of the first edge portion and the first image stabilization magnetic piece. The second connection portion is located on a side, backing the movement space, of the second edge portion and the second image stabilization magnetic piece.

In this implementation, the first connection portion and the second connection portion of the image stabilization bracket are arranged around a periphery, and are staggered with the first edge portion and the second edge portion of the image stabilization bracket along the third direction. This helps reduce a height of the motor and implement miniaturization.

In some possible implementations, the first connection portion includes a first body and a first reinforcing piece embedded in the first body, and strength of the first reinforcing piece is greater than strength of the first body. The first body is plate-shaped, and a size of the first body along the third direction is greater than a size of the first body along the first direction. The first reinforcing piece is plate-shaped, and a size of the first reinforcing piece along the third direction is less than a size of the first reinforcing piece along the first direction.

In this embodiment, the first reinforcing piece can increase strength of the first connection portion, so that relative positions of the first support portion and the second support portion are more stable. In addition, a plane on which the first reinforcing piece is laid intersects with, or is even approximately perpendicular to, a plane on which the first body stands upright. Therefore, the first reinforcing piece significantly increases strength of the first connection portion.

In some possible implementations, the motor further includes an image stabilization magnetic-attractive piece. The image stabilization magnetic-attractive piece is fastened to the base and is disposed facing the first image stabilization magnetic piece and the second image stabilization magnetic piece. Magnetic forces between the image stabilization magnetic-attractive piece and the first image stabilization magnetic piece and a magnetic force between the image stabilization magnetic-attractive piece and the second image stabilization magnetic piece make the base, the first support piece, the guide bracket, the second support piece, and the image stabilization bracket keep in contact.

In this implementation, a magnetic force between a first image stabilization magnetic-attractive piece and the first image stabilization magnetic piece and a magnetic force between a second image stabilization magnetic-attractive piece and the second image stabilization magnetic piece make the image stabilization bracket tend to approach the base. This ensures that the base, the second support piece, the guide bracket, the first support piece, and the image stabilization bracket keep in contact, and implements pre-tightening.

In some possible implementations, the image stabilization magnetic-attractive piece includes the first image stabilization magnetic-attractive piece and the second image stabilization magnetic-attractive piece. The first image stabilization magnetic-attractive piece is disposed facing the first image stabilization magnetic piece, and a center distance between the first image stabilization magnetic-attractive piece and the first corner portion is less than a center distance between the first image stabilization magnetic-attractive piece and the second corner portion. The second image stabilization magnetic-attractive piece is disposed facing the second image stabilization magnetic piece, and a center distance between the second image stabilization magnetic-attractive piece and the third corner portion is less than a center distance between the second image stabilization magnetic-attractive piece and the second corner portion.

In this implementation, the first image stabilization magnetic-attractive piece is located between the first support portion and the second support portion, and the second image stabilization magnetic-attractive piece is located between the second support portion and the third support portion. Therefore, the magnetic force between the first image stabilization magnetic-attractive piece and the first image stabilization magnetic piece and the magnetic force between the second image stabilization magnetic-attractive piece and the second image stabilization magnetic piece can better ensure that the three support portions of the guide bracket are connected to the base and the image stabilization bracket through the support pieces. This improves reliability of an optical image stabilization process of the motor. The first image stabilization magnetic-attractive piece is disposed close to the first corner portion, and the second image stabilization magnetic-attractive piece is disposed close to the third corner portion. In this way, pre-tightening forces between the three support portions of the guide bracket and the base and between the three support portions of the guide bracket and the image stabilization bracket can be more balanced and reliable.

In some possible implementations, the first image stabilization magnetic-attractive piece is disposed directly facing the first image stabilization magnetic piece, and a size of the first image stabilization magnetic-attractive piece along the first direction is greater than a size of the first image stabilization magnetic piece along the first direction. In this case, the first image stabilization magnetic-attractive piece protrudes relative to two sides of the first image stabilization magnetic piece along the first direction. During optical image stabilization of the motor, the first image stabilization magnetic piece and the first image stabilization magnetic piece can still be in a direct-facing relationship or an approximate direct-facing relationship, to ensure stability of a magnetic attraction force.

In some possible implementations, the second image stabilization magnetic-attractive piece directly faces the second image stabilization magnetic piece, and a size of the second image stabilization magnetic-attractive piece along the second direction is greater than a size of the second image stabilization magnetic piece along the second direction. In this case, the second image stabilization magnetic-attractive piece protrudes relative to two sides of the second image stabilization magnetic piece along the second direction. During optical image stabilization of the motor, the second image stabilization magnetic piece and the second image stabilization magnetic piece can still be in a direct-facing relationship or an approximate direct-facing relationship, to ensure stability of a magnetic attraction force.

In some possible implementations, the base includes a bottom plate and a side frame. The side frame is connected to a periphery of the bottom plate. The first image stabilization coil, the second image stabilization coil, and the image stabilization magnetic-attractive piece are all fastened to the bottom plate. The image stabilization bracket is located on an inner side of the side frame. The three support portions are located between the image stabilization bracket and the bottom plate.

In this implementation, the image stabilization bracket tends to approach the bottom plate under a magnetic force. This can ensure that the guide bracket, the plurality of first support pieces, the image stabilization bracket, the plurality of second support pieces, and the bottom plate keep in contact, to implement precise guiding during movement of the image stabilization bracket relative to the base, and improve reliability and precision of optical image stabilization.

In some possible implementations, the motor further includes a plurality of first spring plates. The plurality of first spring plates are arranged on a plane perpendicular to the third direction and are located on a side, backing the bottom plate, of the image stabilization bracket. A part of the first spring plates connect the first edge portion to the side frame, and the other part of the first spring plates connect the second edge portion to the side frame. The plurality of first spring plates may be arranged on a plane perpendicular to the optical axis. The plurality of first spring plates may be arranged in space above the first edge portion and the second edge portion of the image stabilization bracket, to improve space utilization of the motor. The plurality of first spring plates are configured to: when the image stabilization bracket moves relative to the base and leaves a balanced position, provide an elastic force to make the image stabilization bracket move back to the balanced position. In some implementations, the first spring plate may be made of a conductive material, to provide also a signal transmission function.

In some possible implementations, the base includes a bottom plate, a side frame, and a top plate. The top plate and the bottom plate are disposed opposite to each other. The side frame is connected between the bottom plate and the top plate. The first image stabilization coil and the second image stabilization coil are fastened to the bottom plate. The image stabilization magnetic-attractive piece is fastened to the top plate. The image stabilization bracket is located on an inner side of the side frame. The three support portions are located between the image stabilization bracket and the top plate.

In this implementation, the image stabilization bracket tends to approach the top plate under a magnetic force. This can ensure that the top plate, the plurality of first support pieces, the guide bracket, the plurality of second support pieces, and the image stabilization keep in contact, to implement precise guiding during movement of the image stabilization bracket relative to the base, and improve reliability and precision of optical image stabilization. When the image stabilization bracket is subject to a driving force parallel to a guiding direction of the first support piece, the image stabilization bracket and the guide bracket move together relative to the base along the guiding direction of the first support piece. When the image stabilization bracket is subject to a driving force parallel to a guiding direction of the second support piece, the guide bracket remains stationary relative to the base, and the image stabilization bracket moves relative to the guide bracket and the base along the guiding direction of the second support piece.

In some possible implementations, the motor further includes a plurality of first spring plates. The plurality of first spring plates are arranged on a plane parallel to the third direction and are located on a side, backing the first edge portion or the second edge portion, of the image stabilization bracket. The plurality of first spring plates connect the image stabilization bracket to the bottom plate. In this case, the plurality of first spring plates, the base, and the image stabilization bracket are arranged compactly. This helps reduce a height of the motor and implement miniaturization of the motor.

In some possible implementations, the top plate may be L-shaped. For example, the top plate may include three corner regions that are spaced away from each other and two edge regions that connect the three corner regions, and the two edge regions are arranged at an included angle. The top plate is disposed in correspondence with the guide bracket. For example, the three corner regions of the top plate are arranged in correspondence with the three support portions of the guide bracket, and the two edge regions of the top plate are arranged in correspondence with the two connection portions of the guide bracket. In this case, when the top plate cooperates with another structure to implement a guiding function, the top plate has a small size. This facilitates a miniaturization design of the motor. It can be understood that, in some other implementations, the top plate may alternatively be frame-shaped.

In some possible implementations, the image stabilization magnetic-attractive piece is located on a side, backing the guide bracket, of the top plate, and the image stabilization magnetic-attractive piece is an integrated mechanical part. In this case, a quantity of image stabilization magnetic-attractive pieces is small, and assembly is convenient. In addition, an area of the image stabilization magnetic-attractive piece is large. This can ensure a magnitude and stability of the magnetic forces between the image stabilization magnetic-attractive piece and the first image stabilization magnetic piece and between the image stabilization magnetic-attractive piece and the second image stabilization magnetic piece, to improve reliability of optical image stabilization of the motor.

In some possible implementations, the first image stabilization coil includes a first sub-coil and a second sub-coil, and the base includes a bottom plate, a side frame, and a top plate. The top plate is disposed opposite to the bottom plate. The side frame is connected between the bottom plate and the top plate. The image stabilization bracket is located on an inner side of the side frame. The first sub-coil is fastened to the bottom plate and is disposed facing the first image stabilization magnetic piece. The second sub-coil is fastened to the top plate and is disposed facing the first image stabilization magnetic piece.

In this implementation, a dual-coil driving solution is used for the image stabilization drive mechanism of the motor, so that a larger driving force can be provided. This helps improve driving efficiency and increase a stroke for optical image stabilization. In addition, because the first sub-coil and the second sub-coil are respectively located on two sides of the first image stabilization magnetic piece that back each other, accompanying forces of driving forces of the first sub-coil and the second sub-coil can counteract each other, to implement a more accurate driving action.

In some possible implementations, the first sub-coil, the first image stabilization magnetic piece, and the second sub-coil are disposed in alignment with each other along the third direction. To be specific, a center of the first sub-coil, a center of the first image stabilization magnetic piece, and a center of the second sub-coil are aligned or approximately aligned along the third direction. In this case, driving forces between the first sub-coil and the first image stabilization magnetic piece and between the second sub-coil and the first image stabilization magnetic piece are large, and arrangement space of the first sub-coil, the first image stabilization magnetic piece, and the second sub-coil on the - plane is small. This facilitates miniaturization of the motor.

In some possible implementations, along the first direction, the first sub-coil is disposed with a deviation toward one side relative to the first image stabilization magnetic piece, and the second sub-coil is disposed with a deviation toward the other side relative to the second image stabilization magnetic piece.

In this case, the first sub-coil, the second image stabilization magnetic piece, and the second sub-coil are approximately arranged along the third direction. However, a center of the first sub-coil, a center of the first image stabilization magnetic piece, and a center of the second sub-coil are in a non-aligned position relationship along the third direction. The first sub-coil and the second sub-coil may be disposed with deviations toward two sides relative to the first image stabilization magnetic piece along the first direction, to balance magnetic forces.

In some possible implementations, the first image stabilization magnetic piece includes a first magnetic sub-piece and a second magnetic sub-piece that are arranged along the third direction, polarity direction arrangements of the first magnetic sub-piece and the second magnetic sub-piece are consistent, and the first magnetic sub-piece and the second magnetic sub-piece each have two opposite polarity directions. Alternatively, the first image stabilization magnetic piece includes a first magnet and a second magnet, the first magnet and the second magnet are arranged along the first direction, and a polarity direction of the first magnet is opposite to a polarity direction of the second magnet. Alternatively, the first image stabilization magnetic piece is a Halbach magnet array. Alternatively, the first image stabilization magnetic piece includes one magnet, and the magnet includes two parts with opposite polarity directions.

In some possible implementations, the first image stabilization magnetic piece includes a first magnetic sub-piece and a second magnetic sub-piece, and the motor further includes a first image stabilization magnetic-conductive piece. The first image stabilization magnetic-conductive piece includes a first part and a second part connected to the first part. The first part is embedded in the first edge portion. The second part is exposed relative to the image stabilization bracket. The first magnetic sub-piece is fastened to a side surface of the second part. The second magnetic sub-piece is fastened to another side surface of the second part. The first magnetic sub-piece, the first image stabilization magnetic-conductive piece, and the second magnetic sub-piece are arranged along the third direction. In this implementation, an assembly structure of the first image stabilization magnetic piece and the first image stabilization magnetic-conductive piece is simple and easy to implement, and has low costs.

According to a second aspect, an implementation of this application further provides a camera module, including a lens, an image sensor, and the motor according to any one of the foregoing implementations. The lens is mounted on the motor, and the image sensor is located on a light exit side of the lens. The motor of the camera module can implement large-stroke image stabilization. The camera module has high imaging quality, to improve image shooting experience.

In some possible implementations, the camera module further includes a variable-aperture stop, and the variable-aperture stop is located on a light entrance side of the lens. The variable-aperture stop has an aperture hole, and a size of the aperture hole is automatically adjustable. Light may enter the lens through the aperture hole of the variable-aperture stop. The variable-aperture stop is configured to adjust an amount of light entering the lens, so that the camera module can maintain constant image shooting quality under a plurality of luminance conditions.

According to a third aspect, an implementation of this application further provides an electronic device, including a device housing and the camera module according to any one of the foregoing implementations. The camera module is disposed in the device housing. Image shooting experience with the electronic device is good.

### BRIEF DESCRIPTION OF DRAWINGS

To describe technical solutions in embodiments of this application or in the background more clearly, the following describes accompanying drawings used in embodiments of this application or in the background.
FIG. 1 is a diagram of a structure of an electronic device according to an embodiment of this application;
FIG. 2 is a schematic cross-sectional view of a partial structure of an electronic device shown in FIG. 1 that is cut along A-A according to some embodiments;
FIG. 3 is a diagram of a structure of a camera module shown in FIG. 1 according to some embodiments;
FIG. 4 is a partial schematic exploded view of a camera module shown in FIG. 3 according to some embodiments;
FIG. 5 is a diagram of a structure of a motor shown in FIG. 4 according to some embodiments;
FIG. 6 is a diagram of a structure of a base shown in FIG. 5 according to some embodiments;
FIG. 7 is a first diagram of a partial structure of a motor shown in FIG. 4;
FIG. 8 is a diagram of a structure of a guide bracket shown in FIG. 5;
FIG. 9 is a diagram of a structure of a guide bracket shown in FIG. 8 at another angle;
FIG. 10 is a diagram of a partial structure of a guide bracket shown in FIG. 9;
FIG. 11 is a second diagram of a partial structure of a motor shown in FIG. 4;
FIG. 12 is a diagram of a structure of an image stabilization bracket shown in FIG. 5;
FIG. 13 is a diagram of a structure of an image stabilization bracket shown in FIG. 12 at another angle;
FIG. 14 is a diagram of an assembly structure of a circuit board assembly shown in FIG. 5;
FIG. 15 is a third diagram of a partial structure of a motor shown in FIG. 4;
FIG. 16 is a fourth diagram of a partial structure of a motor shown in FIG. 4;
FIG. 17 is a diagram of a structure of a focusing bracket shown in FIG. 5;
FIG. 18 is a fifth diagram of a partial structure of a motor shown in FIG. 4;
FIG. 19 is a sixth diagram of a partial structure of a motor shown in FIG. 4;
FIG. 20 is a seventh diagram of a partial structure of a motor shown in FIG. 4;
FIG. 21 is a diagram of a structure of a motor shown in FIG. 4 at another angle;
FIG. 22 is a schematic cross-sectional view of a structure of a motor shown in FIG. 21 that is cut along B-B;
FIG. 23 is a diagram of a partial structure of a structure shown in FIG. 22;
FIG. 24 is a diagram of a structure of a first image stabilization magnetic piece shown in FIG. 22 according to some embodiments;
FIG. 25 is a schematic cross-sectional view of a structure of a motor shown in FIG. 21 that is cut along C-C;
FIG. 26 is a schematic cross-sectional view of a structure of a motor shown in FIG. 21 that is cut along D-D;
FIG. 27 is a schematic cross-sectional view of a structure of a motor shown in FIG. 21 that is cut along E-E;
FIG. 28 is a diagram of a partial structure of a motor shown in FIG. 4 according to some other embodiments;
FIG. 29 is a schematic exploded view of a structure of a structure shown in FIG. 28;
FIG. 30 is a diagram of a partial structure of a motor shown in FIG. 4 according to some other embodiments;
FIG. 31 is a schematic exploded view of a structure of a structure shown in FIG. 30;
FIG. 32 is a diagram of a structure of a top plate shown in FIG. 31 at another angle;
FIG. 33 is a diagram of a structure of an image stabilization bracket shown in FIG. 31 at another angle;
FIG. 34 is a schematic cross-sectional view of a structure of a structure shown in FIG. 30 that is cut along F-F;
FIG. 35 is a schematic cross-sectional view of a structure of a structure shown in FIG. 30 that is cut along G-G;
FIG. 36 is a diagram of a partial structure of a motor shown in FIG. 4 according to some other embodiments;
FIG. 37 is a schematic exploded view of a structure of a structure shown in FIG. 36;
FIG. 38 is a diagram of a structure of a structure shown in FIG. 37 at another angle;
FIG. 39 is a schematic cross-sectional view of a structure of a structure shown in FIG. 36 that is cut along H-H;
FIG. 40 is a diagram of a partial structure of a structure shown in FIG. 39 according to some other embodiments;
FIG. 41 is a diagram of a partial structure of a structure shown in FIG. 39 according to some other embodiments;
FIG. 42 is a schematic exploded view of a partial structure of a motor shown in FIG. 4;
FIG. 43 is a diagram of a structure of a partial structure of a structure shown in FIG. 42 at another angle;
FIG. 44 is a diagram of a structure of a partial structure of a motor shown in FIG. 5 according to some other embodiments;
FIG. 45 is a simplified diagram of forces applied to a focusing magnetic-attractive piece shown in FIG. 44 and a focusing magnetic piece and a focusing bracket shown in FIG. 5 during movement along a positive direction of a third direction;
FIG. 46 is a simplified diagram of forces applied to a focusing magnetic-attractive piece shown in FIG. 44 and a focusing magnetic piece and a focusing bracket shown in FIG. 5 during movement along a negative direction of a third direction;
FIG. 47 is a partial cross-sectional view of a camera module shown in FIG. 3 at a line I-I according to an embodiment;
FIG. 48 is a diagram of structures of a base shown in FIG. 5 at different angles according to an embodiment;
FIG. 49 is a diagram of a structure of lines for electrically connecting a focusing drive chip shown in FIG. 5 to external structures according to an embodiment;
FIG. 50 is a diagram of a partial structure of a motor shown in FIG. 4 according to an embodiment;
FIG. 51 is a diagram of a partial structure of a motor shown in FIG. 4 according to an embodiment;
FIG. 52 is a diagram of a structure of lines for electrically connecting a focusing drive chip shown in FIG. 5 to external structures according to another embodiment;
FIG. 53 is a diagram of an electrical connection relationship between a controller of a motor, a focusing drive chip, and a drive chip of a variable-aperture stop shown in FIG. 4 according to an embodiment;
FIG. 54 is a partial schematic exploded view of a camera module shown in FIG. 3 according to another embodiment;
FIG. 55 is a partial schematic exploded view of a motor shown in FIG. 54 according to an embodiment; and
FIG. 56 is a diagram of a partial structure of a camera module shown in FIG. 3 according to another embodiment.

### DESCRIPTION OF EMBODIMENTS

The following describes embodiments of this application with reference to accompanying drawings in embodiments of this application.

In descriptions of embodiments of this application, it should be noted that the terms "mounting" and "connection" should be understood in a broad sense, unless otherwise specified and limited. For example, the "connection" may be a detachable connection or a non-detachable connection, or may be a direct connection or a connection through an intermediate medium. "Fastening" means that two parts are connected to each other and a relative position relationship remains unchanged after the two parts are connected to each other. "Rotatable connection" means that two parts are connected to each other and can rotate relative to each other after being connected to each other. "Slidable connection" means that two parts are connected to each other and can slide relative to each other after being connected to each other. Orientation terms mentioned in embodiments of this application, for example, "above", "below", "inner", "outer", "top", "bottom", and "side", merely indicate directions with reference to accompanying drawings. Therefore, the orientation terms are used to better and more clearly describe and understand embodiments of this application, but not to indicate or imply that a specified apparatus or element needs to have a specific orientation or be constructed or operated in a specific orientation. Therefore, this cannot be construed as a limitation on embodiments of this application. "A plurality of" means at least two. In embodiments of this application, the terms "first", "second", "third", and "fourth" are merely intended for a purpose of description, and shall not be understood as an indication or implication of relative importance or an implicit indication of a quantity of indicated technical features. Therefore, a feature limited by "first", "second", "third", or "fourth" may explicitly or implicitly include one or more features.

In addition, limitations on relative position relationships, for example, being parallel, perpendicular, or aligned, are mentioned in embodiments of this application. These limitations are all defined based on a current technique level, but are not absolutely strict limitations. A small deviation is allowed, and being approximately parallel, approximately perpendicular, approximately aligned, or the like is allowed. For example, that A is parallel to B means that A is parallel or approximately parallel to B, and an included angle between A and B may range from 0 degrees to 10 degrees. For example, that A is perpendicular to B means that A is perpendicular or approximately perpendicular to B, and an included angle between A and B may range from 80 degrees to 100 degrees.

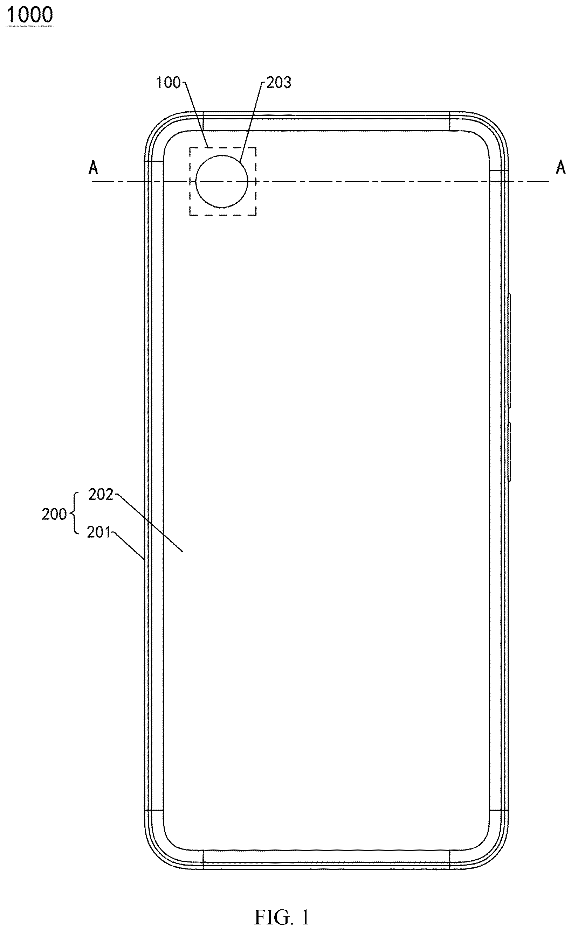

FIG. 1 is a diagram of a structure of an electronic device 1000 according to an embodiment of this application.

In some embodiments, the electronic device 1000 may be a device with a camera function, for example, a mobile phone, a tablet personal computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. In the embodiment shown in FIG. 1, an example in which the electronic device 1000 is a mobile phone is used for description.

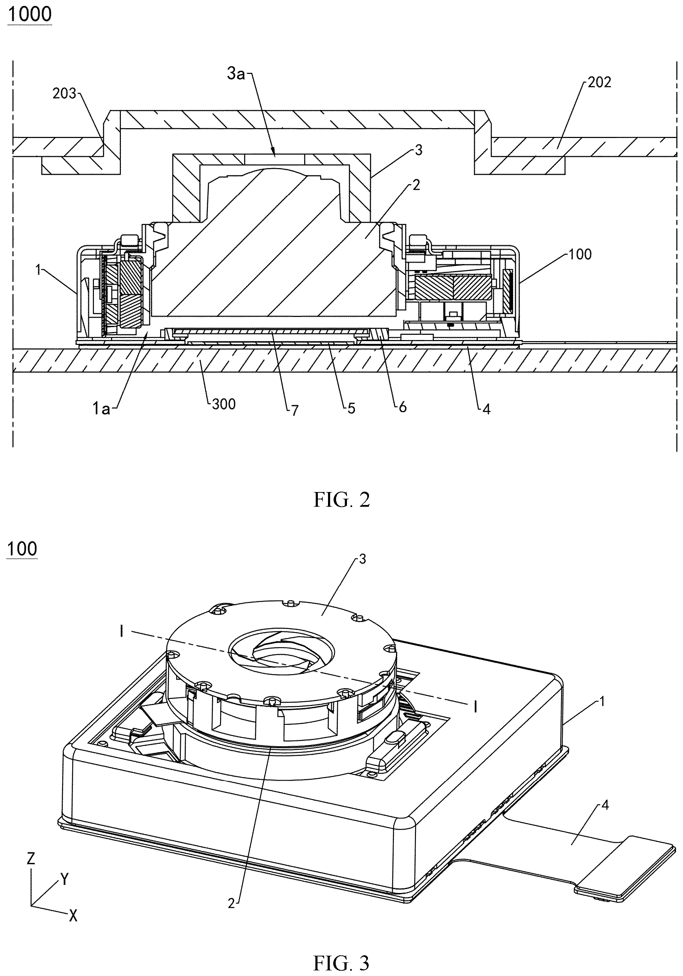

Refer to FIG. 1 and FIG. 2. FIG. 2 is a schematic cross-sectional view of a partial structure of the electronic device 1000 shown in FIG. 1 that is cut along A-A according to some embodiments.

In some embodiments, the electronic device 1000 may include a camera module 100, a device housing 200, and a screen 300. The camera module 100 may be a rear-facing camera module or a front-facing camera module. It should be noted that FIG. 1 and related accompanying drawings in the following descriptions merely show some components included in the electronic device 1000 as an example. Actual shapes, actual sizes, actual positions, and actual structures of the components are not limited by FIG. 1 or the accompanying drawings in the following descriptions. In addition, when the electronic device 1000 is a device in another form, the electronic device 1000 may alternatively not include the screen 300.

The device housing 200 may include a frame 201 and a rear cover 202. The rear cover 202 is fastened to the frame 201. For example, the rear cover 202 may be fastened to the frame 201 through bonding, clamping, or the like. The rear cover 202 and the frame 201 may alternatively be of an integrated structure. In other words, the rear cover 202 and the frame 201 are of a whole structure.

In some embodiments, the screen 300 may be located on a side, away from the rear cover 202, of the frame 201. In this case, the screen 300 and the rear cover 202 may be located on two sides of the frame 201 respectively. The screen 300, the frame 201, and the rear cover 202 together enclose an inside of the electronic device 1000. The inside of the electronic device 1000 may be used for placing a component, for example, a battery, a receiver, or a microphone, of the electronic device 1000. The screen 300 may be a flat screen or a curved screen.

For example, the camera module 100 may be located in the electronic device 1000. The camera module 100 may be located on a side, facing the rear cover 202, of the screen 300. The rear cover 202 may be provided with a light transmission hole 203. A shape of the light transmission hole 203 is not limited to a circular shape shown in FIG. 1. The light transmission hole 203 is used for communication between the inside of the electronic device 1000 and an outside of the electronic device 1000. Light outside the electronic device 1000 may enter the electronic device 1000 through the light transmission hole 203. The camera module 100 may capture the light that enters the electronic device 1000.

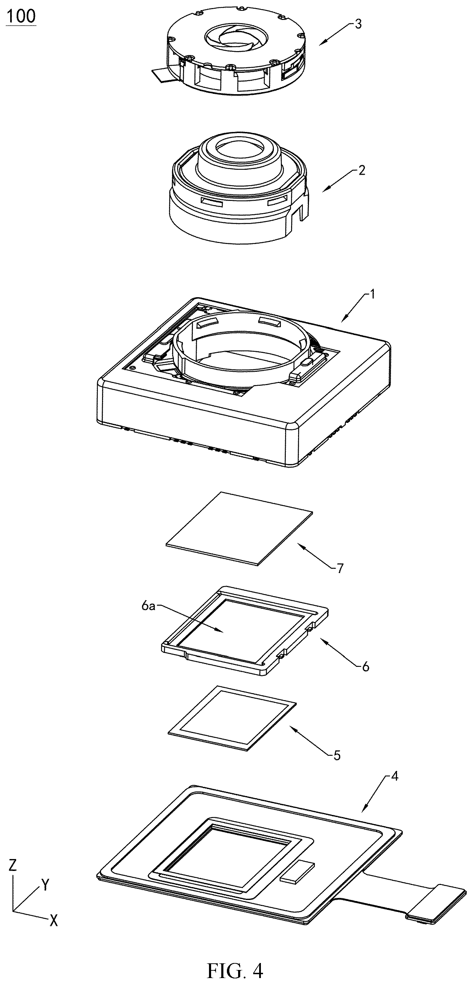

FIG. 3 is a diagram of a structure of the camera module 100 shown in FIG. 1 according to some embodiments. FIG. 4 is a partial schematic exploded view of the camera module 100 shown in FIG. 3 according to some embodiments.

In some embodiments, the camera module 100 may include a motor 1, a lens 2, a variable-aperture stop 3, a module circuit board 4, an image sensor 5, a filter bracket 6, and a filter 7. It can be understood that the image sensor 5 is also referred to as a photosensitive chip or a photosensitive element. The image sensor 5 is configured to capture ambient light, and convert image information carried in the ambient light into an electrical signal. For ease of description, in the following descriptions, the camera module 100 is defined to have a first direction X, a second direction Y, and a third direction Z. The first direction X may be a width direction of the camera module 100. The second direction Y may be a length direction of the camera module 100, and the second direction Y is perpendicular to the first direction X. The third direction Z may be a height direction of the camera module 100, and the third direction Z is perpendicular to the first direction X and the second direction Y. In another implementation, a coordinate system of the camera module 100 may be flexibly set according to a specific actual requirement.

For example, the lens 2 may be mounted to the motor 1. An optical-axis direction of the lens 2 is parallel to the third direction Z of the camera module 100. The optical-axis direction of the lens 2 and an optical-axis direction of the camera module 100 are a same direction.

The motor 1 may control the lens 2 to move along the third direction Z, to implement autofocus (autofocus, AF). In addition, the motor 1 may further control the lens 2 to move along a plane (namely, an X-Y plane) perpendicular to the third direction Z. In this way, when the camera module 100 captures ambient light, if the electronic device 1000 shakes on the X-Y plane due to an external force, the motor 1 may control movement of the lens 2 on the X-Y plane, to counteract a shake stroke produced by the lens 2 on the X-Y plane, and avoid or reduce a position offset of the lens 2 that is caused by the shake. In other words, the camera module 100 in this application may control movement of the lens 2 on the X-Y plane through the motor 1, to implement optical image stabilization (optical image stabilization, OIS) for the camera module 100, and improve imaging quality of the camera module 100.

For example, as shown in FIG. 2, the variable-aperture stop 3 may be located on a light entrance side of the lens 2. The variable-aperture stop 3 has an aperture hole 3a, and a size of the aperture hole 3a is automatically adjustable. Light may enter the lens 2 through the aperture hole 3a of the variable-aperture stop 3. The variable-aperture stop 3 is configured to adjust an amount of light entering the lens, so that the camera module 100 can maintain constant image shooting quality under a plurality of luminance conditions.

As shown in FIG. 2 and FIG. 4, in some embodiments, the image sensor 5 may be fastened to the module circuit board 4 and electrically connected to the module circuit board 4. In this case, the image sensor 5 and the module circuit board 4 may transmit signals to each other. The filter bracket 6 is fastened to the module circuit board 4. The filter bracket 6 and the image sensor 5 are located on a same side of the module circuit board 4. The filter bracket 6 is provided with a light transmission hole 6a. The filter 7 is fastened to the filter support 6. The filter 7 may be located in the light transmission hole 6a. The filter 7 is further disposed opposite to the image sensor 5. The filter 7 may be configured to filter out infrared light, blue light, or the like from light before the light enters the image sensor 5, to ensure good imaging quality of the image sensor 5.

As shown in FIG. 2, in some embodiments, the motor 1 is fastened to the module circuit board 4, and the motor 1 and the image sensor 5 are located on a same side of the module circuit board 4. Along the third direction Z, the image sensor 5, the filter 7, the lens 2, and the variable-aperture stop 3 are sequentially arranged. In this case, the image sensor 5 is located on a light exit side of the lens 2. The filter 7 is located between the lens 2 and the image sensor 5.

It can be understood that, compared with a solution in which the motor 1 is fastened to the filter bracket 6, in this embodiment, the motor 1 is fastened to the module circuit board 4, so that stacking of the motor 1 and the filter bracket 6 along the third direction Z can be avoided. To be specific, the motor 1 and the filter bracket 6 may be disposed on the X-Y plane in a staggered manner. This reduces a height of the camera module 100 to a large extent.

As shown in FIG. 2, in some embodiments, the motor 1 has an avoidance hole 1a. A part of the filter bracket 6 may pass through the avoidance hole 1a and enter the drive motor 1. In this case, a part of the filter bracket 6 is located in the drive motor 1. In this way, along the third direction Z, the filter bracket 6 and the drive motor 1 have an overlapping region. This can reduce the height of the camera module 100 to a large extent.

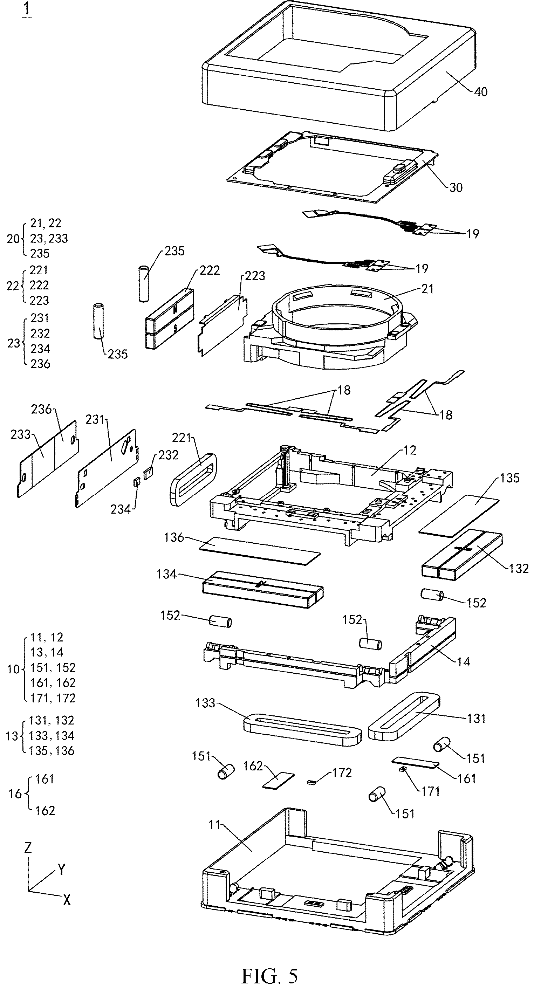

FIG. 5 is a diagram of a structure of the motor shown in FIG. 4 according to some embodiments.

In some embodiments, the motor 1 includes an image stabilization drive module 10 and a focusing drive module 20. The image stabilization drive module 10 drives the lens 2 to perform optical image stabilization. The focusing drive module 20 drives the lens 2 to perform autofocus. The image stabilization drive module 10 and the focusing drive module 20 form an integrated motor. In this way, compared with a split-type motor in which the image stabilization drive module 10 and the focusing drive module 20 are separately disposed, the motor 1 in this embodiment has a smaller size. This facilitates miniaturization of the motor 1, and therefore helps save internal space of the electronic device 1000.

For example, the image stabilization drive module 10 may include a base 11, an image stabilization bracket 12, an image stabilization drive mechanism 13, a guide bracket 14, a first support piece 151, a second support piece 152, a first image stabilization magnetic-attractive piece 161, a second image stabilization magnetic-attractive piece 162, a first image stabilization sensor 171, and a second image stabilization sensor 172. The image stabilization drive mechanism 13 includes a first image stabilization coil 131, a first image stabilization magnetic piece 132, a second image stabilization coil 133, and a second image stabilization magnetic piece 134. The image stabilization drive mechanism 13 may further include a first image stabilization magnetic-conductive piece 135 and a second image stabilization magnetic-conductive piece 136. The first image stabilization coil 131, the first image stabilization magnetic piece 132, and the first image stabilization magnetic-conductive piece 135 are disposed in correspondence with each other to form a drive mechanism. The second image stabilization coil 133, the second image stabilization magnetic piece 134, and the second image stabilization magnetic-conductive piece 136 are disposed in correspondence with each other to form another drive mechanism. The first image stabilization magnetic-attractive piece 161 and the second image stabilization magnetic-attractive piece 162 each are a part of the image stabilization magnetic-attractive piece 16 of the motor 1. There are a plurality of first support pieces 151 and a plurality of second support pieces 152. For example, in this embodiment, an example in which there are three first support pieces 151 and three second support pieces 152 is used for description.

The focusing drive module 20 may include a focusing bracket 21, a focusing drive mechanism 22, a circuit board assembly 23, a focusing magnetic-attractive piece 233, and a third support piece 235. For example, the focusing drive mechanism 22 may include a focusing coil 221 and a focusing magnetic piece 222. The focusing drive mechanism 22 may further include a focusing magnetic-conductive piece 223. The circuit board assembly 23 includes a focusing circuit board 231, a focusing drive chip 232, a focusing sensor 234, and a reinforcing piece 236. In another implementation, the circuit board assembly 23 may alternatively not include the focusing sensor 234 and/or the reinforcing piece 236. There may be two third support pieces 235.

For example, the motor 1 may further include a plurality of first spring plates 18 and a plurality of second spring plates 19. There may be four or another quantity of first spring plates 18. There may be four or another quantity of second spring plates 19. For example, the motor 1 may further include a position-limiting bracket 30 and a housing 40.

It can be understood that, in the following accompanying drawings, for simplified illustration, when the accompanying drawings include a same structure, the structure may be numbered in some accompanying drawings and not numbered in some accompanying drawings, or the structure may be numbered in all of the accompanying drawings.

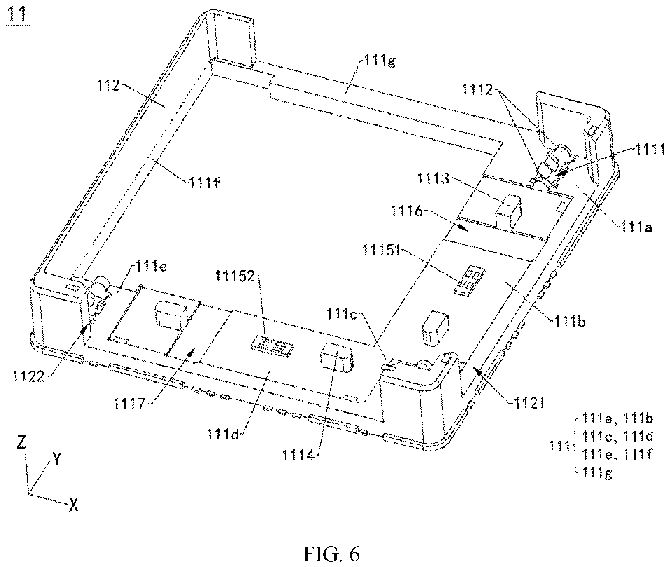

FIG. 6 is a diagram of a structure of the base 11 shown in FIG. 5 according to some embodiments.

In some embodiments, the base 11 may include a bottom plate 111 and a side frame 112, and the side frame 112 is connected to a periphery of the bottom plate 111. The bottom plate 111 may be approximately frame-shaped. To be specific, a through hole is provided in the middle of the bottom plate 111. The bottom plate 111 may include a first corner region 111a, a first edge region 111b, a second corner region 111c, a second edge region 111d, and a third corner region 111e that are sequentially connected, and the first edge region 111b and the second edge region 111d are arranged at an included angle. The bottom plate 111 may further include a third edge region 111f and a fourth edge region 111g. The third edge region 111f is connected to the third corner region 111e and is disposed opposite to the first edge region 111b. The fourth edge region 111g is connected to the first corner region 111a and is disposed opposite to the second edge region 111d. For example, a width of the first edge region 111b and a width of the second edge region 111d are greater than a width of the third edge region 111f and a width of the fourth edge region 111g.

For example, the bottom plate 111 may have an upper surface, and the upper surface of the bottom plate 111 is arranged facing the side frame 112. The bottom plate 111 may be provided with a plurality of first grooves 1111. For example, there may be three first grooves 1111, and the three first grooves 1111 may be located in the first corner region 111a, the second corner region 111c, and the third corner region 111e of the bottom plate 111 respectively. The first groove 1111 may be recessed from the upper surface of the bottom plate 111 to an inside of the bottom plate 111, and an extension direction of the first groove 1111 is parallel to the second direction Y. The bottom plate 111 may include a plurality of first stopper groups. The plurality of first stopper groups are disposed in a one-to-one correspondence with the plurality of first grooves 1111. Each first stopper group includes two first stoppers 1112 that protrude from the upper surface of the bottom plate 111. The two first stoppers 1112 are respectively located at two ends of a corresponding first groove 1111. For example, an arrangement direction of the two first stoppers 1112 may be parallel to the extension direction of the first groove 1111.

For example, the bottom plate 111 may further include a plurality of first positioning posts 1113 and a plurality of second positioning posts 1114. The plurality of first positioning posts 1113 are located in the first edge region 111b of the bottom plate 111. The plurality of first positioning posts 1113 may be spaced apart and protrude relative to the upper surface of the bottom plate 111. The plurality of second positioning posts 1114 are located in the second edge region 111d of the bottom plate 111. The plurality of second positioning posts 1114 may be spaced apart and protrude relative to the upper surface of the bottom plate 111.

For example, the base 11 may include an insulation body and a conductor. The conductor is embedded in the insulation body, and may form a plurality of transmission channels to implement signal transmission. The insulation body may form bodies of the bottom plate 111 and the side frame 112. The conductor may be arranged in the bottom plate 111 and the side frame 112. For example, a part of terminals of the conductor may be exposed from an outer periphery of the bottom plate 111, a part of terminals of the conductor may be exposed from the upper surface of the bottom plate 111, and a part of terminals of the conductor may be exposed from an upper surface of the side frame 112.

The base 11 may include a first solder pad 11151 and a second solder pad 11152. The first solder pad 11151 may be formed by a part of terminals of the conductor. The second solder pad 11152 may be formed by another part of terminals of the conductor. The first solder pad 11151 is located in the first edge region 111b of the bottom plate 111 and is exposed relative to the upper surface of the bottom plate 111. The first solder pad 11151 may be located between two adjacent first positioning posts 1113. The second solder pad 11152 is located in the second edge region 111d of the bottom plate 111 and is exposed relative to the upper surface of the bottom plate 111. The second solder pad 11152 may be located between two adjacent second positioning posts 1114.

For example, the bottom plate 111 may be further provided with a first recessed groove 1116 and a second recessed groove 1117, and both the first recessed groove 1116 and the second recessed groove 1117 may be exposed toward the upper surface of the bottom plate 111. For example, the first recessed groove 1116 is located in the first edge region 111b of the bottom plate 111, and the first recessed groove 1116 may be located between two adjacent first positioning posts 1113. The first recessed groove 1116 is closer to the first corner region 111a of the bottom plate 111 than to the second corner region 111c of the bottom plate 111. A center distance between the first recessed groove 1116 and the first corner region 111a is less than a center distance between the first recessed groove 1116 and the second corner region 111c. In this embodiment of this application, a center distance between two structures is a distance between centers of the two structures. For example, the second recessed groove 1117 is located in the second edge region 111d of the bottom plate 111, and the second recessed groove 1117 may be located between two adjacent second positioning posts 1114. The second recessed groove 1117 is closer to the third corner region 111e of the bottom plate 111 than to the second corner region 111c of the bottom plate 111. A center distance between the second recessed groove 1117 and the third corner region 111e is less than a center distance between the second recessed groove 1117 and the second corner region 111c.

For example, the side frame 112 may have first avoidance space 1121 and second avoidance space 1122, the first avoidance space 1121 is arranged in correspondence with the first edge region 111b of the bottom plate 111, and the second avoidance space 1122 is arranged in correspondence with the second edge region 111d of the bottom plate 111.

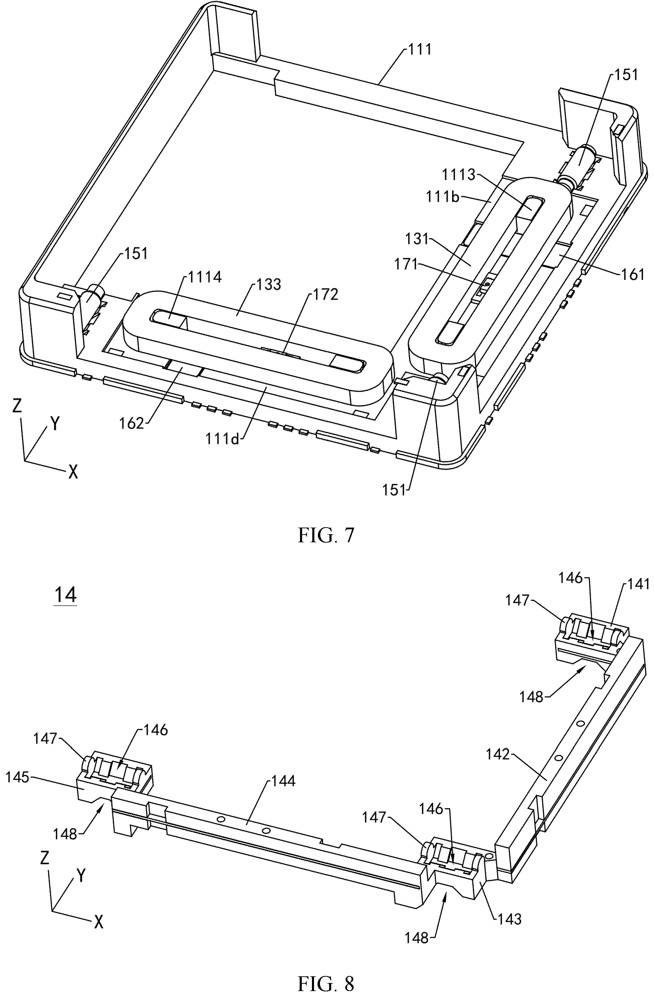

Refer to FIG. 5 to FIG. 7. FIG. 7 is a first diagram of a partial structure of the motor 1 shown in FIG. 4.

In some embodiments, the plurality of first support pieces 151 may be mounted in the plurality of first grooves 1111 in a one-to-one correspondence. A part of an outer surface of the first support piece 151 protrudes relative to the upper surface of the bottom plate 111. The first support piece 151 is located between two corresponding first stoppers 1112, and the two first stoppers 1112 are configured to limit a position of the first support piece 151. In this way, relative positions of the first support piece 151 and the base 11 are more stable, to prevent the first support piece 151 from being detached. In some embodiments, the first support piece 151 may alternatively be fastened to the base 11 through glue dispensing, welding, or the like.

For example, the first support piece 151 may be arranged in a sliding shaft structure, for example, a cylindrical structure. When the first support piece 151 is mounted in the first groove 1111, an axial direction of the sliding shaft is parallel to the extension direction of the first groove 1111. Alternatively, the first support piece 151 may be arranged in a ball structure. In this case, the first support piece 151 may include a plurality of balls. When the first support piece 151 is mounted in the first groove 1111, an arrangement direction of the plurality of balls is parallel to the extension direction of the first groove 1111. The plurality of first support pieces 151 may be all in a sliding shaft structure or a ball structure, or in a combined sliding shaft and ball structure. This is not strictly limited in this embodiment of this application. In this case, the plurality of first support pieces 151 may include at least one of a sliding shaft or a ball.

In some other embodiments, the plurality of first support pieces 151 and the base 11 may alternatively form an integrated mechanical part. Details are not described herein.

In some embodiments, the first image stabilization magnetic-attractive piece 161 may be mounted in the first recessed groove 1116, to be fastened to the base 11. The first image stabilization magnetic-attractive piece 161 may be bonded to a bottom wall of the first recessed groove 1116. A size of the first image stabilization magnetic-attractive piece 161 along the first direction X may be greater than a size of the first image stabilization magnetic-attractive piece 161 along the second direction Y. For example, the first image stabilization magnetic-attractive piece 161 may be approximately in a rectangular shape, a long edge of the first image stabilization magnetic-attractive piece 161 may be parallel to or approximately parallel to the first direction X, and a short edge of the first image stabilization magnetic-attractive piece 161 may be parallel to or approximately parallel to the second direction Y. The first image stabilization magnetic-attractive piece 161 may be made of a material that can generate a magnetic attraction force with a magnet or another magnetic component, for example, a ferromagnetic material.

The second image stabilization magnetic-attractive piece 162 may be mounted in the second recessed groove 1117, to be fastened to the base 11. The second image stabilization magnetic-attractive piece 162 may be bonded to a bottom wall of the second recessed groove 1117. A size of the second image stabilization magnetic-attractive piece 162 along the second direction Y may be greater than a size of the second image stabilization magnetic-attractive piece 162 along the first direction X. For example, the second image stabilization magnetic-attractive piece 162 may be approximately in a rectangular shape, a long edge of the second image stabilization magnetic-attractive piece 162 may be parallel to or approximately parallel to the second direction Y, and a short edge of the second image stabilization magnetic-attractive piece 162 may be parallel to or approximately parallel to the first direction X. The second image stabilization magnetic-attractive piece 162 may be made of a material that can generate a magnetic attraction force with a magnet or another magnetic component, for example, a ferromagnetic material.

It can be understood that, in some other embodiments, the size of the first image stabilization magnetic-attractive piece 161 along the first direction X may alternatively be less than or equal to the size of the first image stabilization magnetic-attractive piece 161 along the second direction Y, the size of the second image stabilization magnetic-attractive piece 162 along the second direction Y may alternatively be less than or equal to the size of the second image stabilization magnetic-attractive piece 162 along the first direction X, and the first image stabilization magnetic-attractive piece 161 and the second image stabilization magnetic-attractive piece 162 may alternatively be in other shapes. This is not strictly limited in this embodiment of this application.

In some embodiments, the first image stabilization coil 131 is mounted to the first edge region 111b of the bottom plate 111, to be fastened to the base 11. The first image stabilization coil 131 may be disposed around the plurality of first positioning posts 1113, and the plurality of first positioning posts 1113 are configured to limit a position of the first image stabilization coil 131. In this case, the first image stabilization magnetic-attractive piece 161 is located on a side, close to the bottom plate 111, of the first image stabilization coil 131. The second image stabilization coil 133 is mounted to the second edge region 111d of the bottom plate 111, to be fastened to the base 11. The second image stabilization coil 133 may be disposed around the plurality of second positioning posts 1114, and the plurality of second positioning posts 1114 are configured to limit a position of the second image stabilization coil 133. In this case, the second image stabilization magnetic-attractive piece 162 is located on a side, close to the bottom plate 111, of the second image stabilization coil 133.

In some embodiments, the first image stabilization sensor 171 is fastened to the first edge region 111b of the bottom plate 111 and is located on an inner side of the first image stabilization coil 131. The first image stabilization sensor 171 may be welded to the first solder pad 11151, to implement structural fastening and an electrical connection. The first image stabilization sensor 171 is configured to implement position detection, and the first image stabilization sensor 171 may be a Hall (hall) sensor or a tunnel magneto-resistance (tunnel magneto-resistance, TMR) sensor.

The second image stabilization sensor 172 is fastened to the second edge region 111d of the bottom plate 111 and is located on an inner side of the second image stabilization coil 133. The second image stabilization sensor 172 may be welded to the second solder pad 11152, to implement structural fastening and an electrical connection. The second image stabilization sensor 172 is configured to implement position detection, and the second image stabilization sensor 172 may be a Hall (hall) sensor or a tunnel magneto-resistance (tunnel magneto-resistance, TMR) sensor.

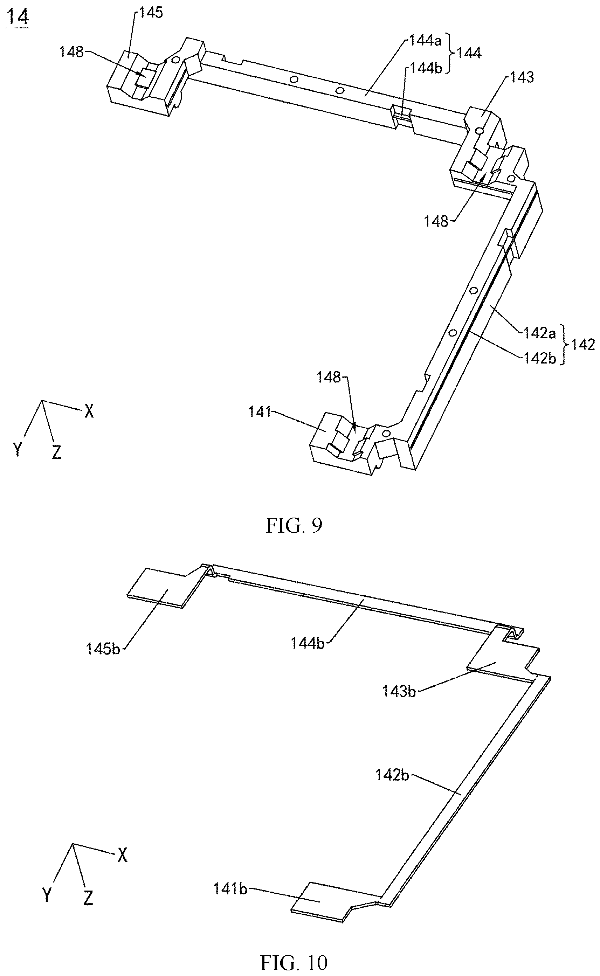

FIG. 8 is a diagram of a structure of the guide bracket 14 shown in FIG. 5. FIG. 9 is a diagram of a structure of the guide bracket 14 shown in FIG. 8 at another angle.

In some embodiments, the guide bracket 14 may be approximately L-shaped. The guide bracket 14 includes three support portions (141, 143, and 145) that are spaced apart and two connection portions (142 and 144) that connect the three support portions (141, 143, and 145). The guide bracket 14 may include a first support portion 141, a first connection portion 142, a second support portion 143, a second connection portion 144, and a third support portion 145. The first support portion 141, the second support portion 143, and the third support portion 145 are spaced away from each other. The first connection portion 142 connects the first support portion 141 to the second support portion 143. The second connection portion 144 connects the second support portion 143 to the third support portion 145. The first connection portion 142 and the second connection portion 144 may be arranged at an included angle. For example, the first connection portion 142 and the second connection portion 144 may be arranged to be perpendicular to or approximately perpendicular to each other.

For example, as shown in FIG. 8, the guide bracket 14 may be provided with a plurality of second grooves 146. The plurality of second grooves 146 are arranged facing a same side of the guide bracket 14. There may be three second grooves 146. The three second grooves 146 are located in the first support portion 141, the second support portion 143, and the third support portion 145 respectively. An extension direction of the second groove 146 may be parallel to the first direction X. The second groove 146 may be recessed from a side surface of a corresponding support portion to an inside of the support portion. The guide bracket 14 may further include a plurality of second stopper groups. The plurality of second stopper groups are disposed in a one-to-one correspondence with the plurality of second grooves 146. Each second stopper group includes two second stoppers 147 that are disposed in a protruding manner. The two second stoppers 147 are respectively located at two ends of a corresponding second groove 146. For example, an arrangement direction of the two second stoppers 147 may be parallel to the extension direction of the second groove 146.

For example, as shown in FIG. 8 and FIG. 9, the guide bracket 14 may be further provided with a plurality of first sliding grooves 148, and the plurality of first sliding grooves 148 are arranged backing the plurality of second grooves 146. There may be three first sliding grooves 148. The three first sliding grooves 148 are located in the first support portion 141, the second support portion 143, and the third support portion 145 respectively. An extension direction of the first sliding groove 148 may be parallel to the second direction Y. The first sliding groove 148 may be recessed from another side surface of a corresponding support portion to an inside of the support portion. The first sliding groove 148 may pass through the corresponding support portion along the extension direction of the first sliding groove 148, to form a through slot.

For example, as shown in FIG. 8 and FIG. 9, the first support portion 141 and the second support portion 143 may be located on a side of the first connection portion 142 along the first direction X. To be specific, the first connection portion 142 is disposed away from space that is exactly between the first support portion 141 and the second support portion 143, and the first support portion 141, the first connection portion 142, and the second support portion 143 may approximately form a "U" shape. The second support portion 143 and the third support portion 145 may be located on a side of the second connection portion 144 along the second direction Y. To be specific, the second connection portion 144 is disposed away from space that is exactly between the second support portion 143 and the third support portion 145, and the second support portion 143, the second connection portion 144, and the third support portion 145 may approximately form a "U" shape.

Refer to FIG. 9 and FIG. 10. FIG. 10 is a diagram of a partial structure of the guide bracket 14 shown in FIG. 9.

In some embodiments, the guide bracket 14 includes a body and a reinforcing piece embedded in the body. Strength of the reinforcing piece is greater than strength of the body, to increase overall structural strength of the guide bracket 14. For example, the body may be made of a plastic material, and the reinforcing piece may be made of a metal material.

For example, the first connection portion 142 includes a first body 142a and a first reinforcing piece 142b embedded in the first body 142a, and strength of the first reinforcing piece 142b is greater than strength of the first body 142a. The first body 142a may be approximately plate-shaped, and a size of the first body 142a along the third direction Z is greater than a size of the first body 142a along the first direction X. In this case, the first body 142a approximately stands upright on a Y-Z plane. The first reinforcing piece 142b may be approximately plate-shaped, and a size of the first reinforcing piece 142b along the third direction Z is less than a size of the first reinforcing piece 142b along the first direction X. In this case, the first reinforcing piece 142b is approximately laid on the X-Y plane. In this embodiment, the first reinforcing piece 142b can increase strength of the first connection portion 142, so that relative positions of the first support portion 141 and the second support portion 143 are more stable. In addition, a plane on which the first reinforcing piece 142b is laid intersects with, or is even approximately perpendicular to, a plane on which the first body 142a stands upright. Therefore, the first reinforcing piece 142b significantly increases strength of the first connection portion 142.

The second connection portion 144 may include a second body 144a and a second reinforcing piece 144b embedded in the second body 144a, and strength of the second reinforcing piece 144b is greater than strength of the second body 144a. The second body 144a may be approximately plate-shaped, and a size of the second body 144a along the third direction Z is greater than a size of the second body 144a along the second direction Y. In this case, the second body 144a approximately stands upright on an X-Z plane. The second reinforcing piece 144b may be approximately plate-shaped, and a size of the second reinforcing piece 144b along the third direction Z is less than a size of the first reinforcing piece 142b along the second direction Y. In this case, the first reinforcing piece 142b is approximately laid on the X-Y plane. In this embodiment, the second reinforcing piece 144b can increase strength of the second connection portion 144, so that relative positions of the second support portion 143 and the third support portion 145 are more stable. In addition, a plane on which the second reinforcing piece 144b is laid intersects with, or is even approximately perpendicular to, a plane on which the second body 144a stands upright. Therefore, the second reinforcing piece 144b significantly increases strength of the second connection portion 144.

In some embodiments, the reinforcing piece may further include a third reinforcing piece 141b, a fourth reinforcing piece 143b, and a fifth reinforcing piece 145b. The fourth reinforcing piece 143b connects the first reinforcing piece 142b to the second reinforcing piece 144b. The fourth reinforcing piece 143b may be located in the second support portion 143. The third reinforcing piece 141b is connected to an end, away from the second reinforcing piece 144b, of the first reinforcing piece 142b. The third reinforcing piece 141b may be located in the first support portion 141. The fifth reinforcing piece 145b is connected to an end, away from the second reinforcing piece 144b, of the second reinforcing piece 144b. The fifth reinforcing piece 145b may be located in the third support portion 145. In this case, the third reinforcing piece 141b, the first reinforcing piece 142b, the fourth reinforcing piece 143b, the second reinforcing piece 144b, and the fifth reinforcing piece 145b are sequentially connected, and the reinforcing piece is of an integrated structure. For example, the reinforcing piece may be formed by bending or stamping an integrated metal piece.

In some other embodiments, the first reinforcing piece 142b and the second reinforcing piece 144b may alternatively not be connected to each other, and are independent of each other. The first reinforcing piece 142b may stand upright on the Y-Z plane, and the second reinforcing piece 144b may stand upright on the X-Z plane. A specific structure of the reinforcing piece is not strictly limited in this embodiment of this application.

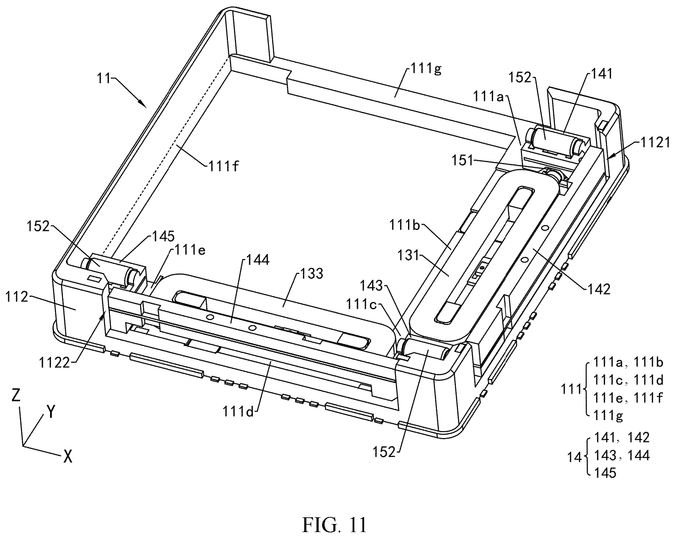

Refer to FIG. 7 to FIG. 9 and FIG. 11. FIG. 11 is a second diagram of a partial structure of the motor 1 shown in FIG. 4.

In some embodiments, the guide bracket 14 is mounted to the base 11. The first support portion 141 is disposed in correspondence with the first corner region 111a of the bottom plate 111. The second support portion 143 is disposed in correspondence with the second corner region 111c of the bottom plate 111. The third support portion 145 is disposed in correspondence with the third corner region 111e of the bottom plate 111. The three first sliding grooves 148 of the guide bracket 14 are arranged in a one-to-one correspondence with the three first grooves 1111 of the base 11. The first support piece 151 mounted in the first groove 1111 is partially embedded in the first sliding groove 148. In this case, the first support portion 141, the second support portion 143, and the third support portion 145 of the guide bracket 14 are connected to the base 11 through the plurality of first support pieces 151. The guide bracket 14 is slidably connected to the base 11 through the plurality of first support pieces 151, and a relative sliding direction of the guide bracket 14 and the base 11 is parallel to a guiding direction of the first support piece 151. When the first support piece 151 is in the sliding shaft structure, the axial direction of the sliding shaft is the guiding direction of the first support piece 151. When the first support piece 151 is in the ball structure, the arrangement direction of the plurality of balls is the guiding direction of the first support piece 151.

When the first support piece 151 is in the sliding shaft structure, the guide bracket 14 is in line contact with the first support piece 151 during relative movement, so that a risk of a dent caused by excessively large impact pressure can be avoided, and reliability is improved. In some embodiments, a width of a contact position between the first support piece 151 and the guide bracket 14 may be increased to further improve reliability of structural fitting.

For example, as shown in FIG. 7, guiding directions of the plurality of first support pieces 151 are parallel to the second direction Y. Therefore, the guide bracket 14 may slide relative to the base 11 along the second direction Y. In some embodiments, the first support piece 151 may also limit positions of other mechanical parts along a direction perpendicular to the guiding direction of the first support piece 151. For example, the first support piece 151 is disposed, so that the guide bracket 14 and the base 11 limit positions of each other along the first direction X.

For example, the first connection portion 142 is disposed in correspondence with the first edge region 111b of the bottom plate 111, and the first connection portion 142 may be located on a side, away from the third edge region 111f of the bottom plate 111, of the first image stabilization coil 131. The first connection portion 142 may be at least partially located in the first avoidance space 1121 of the side frame 112 of the base 11, to improve space utilization of the motor 1. The second connection portion 144 is disposed in correspondence with the second edge region 111d of the bottom plate 111, and the second connection portion 144 may be located on a side, away from the fourth edge region 111g of the bottom plate 111, of the second image stabilization coil 133. The second connection portion 144 may be at least partially located in the second avoidance space 1122 of the side frame 112 of the base 11, to improve space utilization of the motor 1.

In some embodiments, fitting between the first connection portion 142 and the side frame 112 and between the second connection portion 144 and the side frame 112 may further meet a requirement for movable avoidance and/or a requirement for position limiting. For example, the guide bracket 14 and the base 11 can slide relative to each other along the second direction Y, and space that allows the first connection portion 142 to move is reserved between the first connection portion 142 and the side frame 112, to implement movable avoidance. The guide bracket 14 and the base 11 can limit positions of each other along the first direction X, and the second connection portion 144 and the side frame 112 may form a position-limiting structure, for example, a fitting structure between the second connection portion 144 and a wall surface of the second avoidance space 1122. Certainly, the guide bracket 14 and the base 11 may alternatively implement position limiting along the first direction X by using another structure. This is not strictly limited in this embodiment of this application.

Refer to FIG. 7, FIG. 8, and FIG. 11. In some embodiments, the plurality of second support pieces 152 may be mounted in the plurality of second grooves 146 of the guide bracket 14 in a one-to-one correspondence. In this case, the three second support pieces 152 are mounted to the first support portion 141, the second support portion 143, and the third support portion 145 of the guide bracket 14 respectively. A part of an outer surface of the second support piece 152 protrudes relative to a surface of a corresponding support portion of the guide bracket 14. The second support piece 152 is located between two corresponding second stoppers 147, and the two second stoppers 147 are configured to limit a position of the second support piece 152. In this way, relative positions of the second support piece 152 and the guide bracket 14 are more stable, to prevent the second support piece 152 from being detached. In some embodiments, the second support piece 152 may alternatively be fastened to the guide bracket 14 through glue dispensing, welding, or the like.

For example, the second support piece 152 may be arranged in a sliding shaft structure, for example, a cylindrical structure. When the second support piece 152 is mounted in the second groove 146, an axial direction of the sliding shaft is parallel to the extension direction of the second groove 146. Alternatively, the second support piece 152 may be arranged in a ball structure. In this case, the second support piece 152 may include a plurality of balls. When the second support piece 152 is mounted in the second groove 146, an arrangement direction of the plurality of balls is parallel to the extension direction of the second groove 146. Alternatively, the plurality of second support pieces 152 are in a combined sliding shaft and ball structure. For the sliding shaft structure and the ball structure, refer to the foregoing structures. Details are not described herein again. In this case, the plurality of second support pieces 152 may include at least one of a sliding shaft or a ball.

In some other embodiments, the plurality of second support pieces 152 and the guide bracket 14 may alternatively form an integrated mechanical part. Details are not described herein.

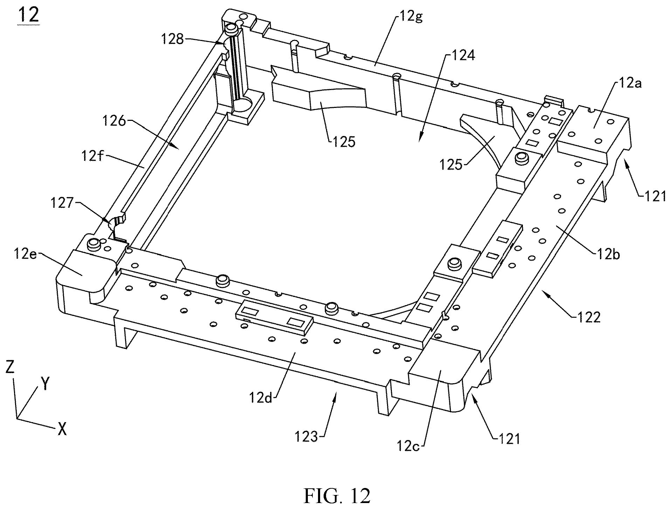

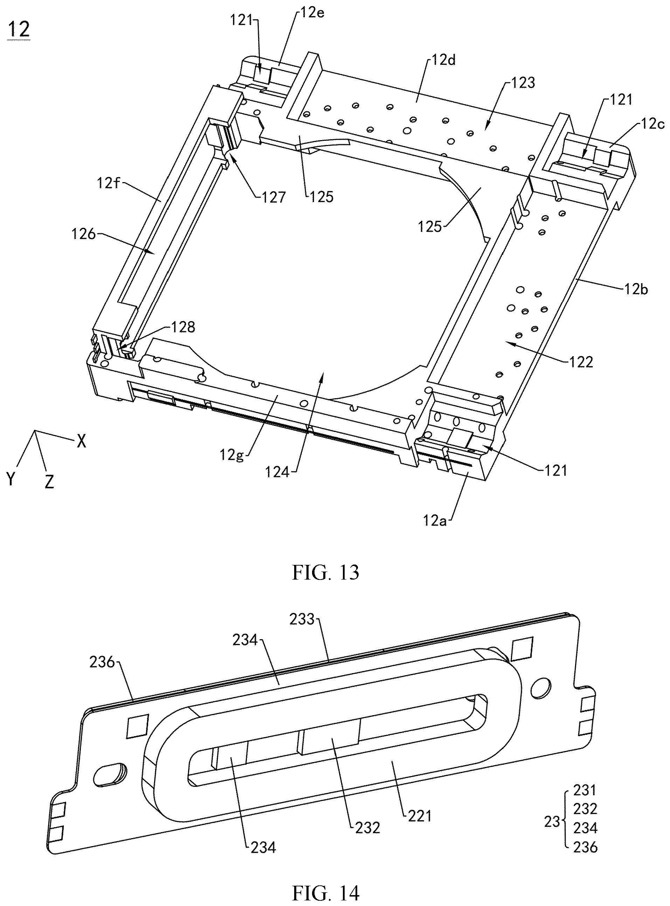

FIG. 12 is a diagram of a structure of the image stabilization bracket 12 shown in FIG. 5. FIG. 13 is a diagram of a structure of the image stabilization bracket 12 shown in FIG. 12 at another angle.

In some embodiments, the image stabilization bracket 12 may be approximately frame-shaped. For example, the image stabilization bracket 12 may include a first corner portion 12a, a first edge portion 12b, a second corner portion 12c, a second edge portion 12d, and a third corner portion 12e that are sequentially connected, and the first edge portion 12b and the second edge portion 12d are arranged at an included angle. The image stabilization bracket 12 further includes a third edge portion 12f and a fourth edge portion 12g. The third edge portion 12f is connected to the third corner portion 12e and is disposed opposite to the first edge portion 12b. The fourth edge portion 12g is connected to the first corner portion 12a and is disposed opposite to the second edge portion 12d. In some embodiments, the first edge portion 12b and the second edge portion 12d may be arranged to be perpendicular to each other, the third edge portion 12f may be parallel to the first edge portion 12b, and the fourth edge portion 12g may be parallel to the second edge portion 12d.

It can be understood that the first edge portion 12b and the second edge portion 12d may be directly connected or may be indirectly connected through the second corner portion 12c, the second corner portion 12c is connected to the first edge portion 12b and/or the second edge portion 12d, the second edge portion 12d and the third edge portion 12f may be directly connected or may be indirectly connected through the third corner portion 12e, the third corner portion 12e is connected to the first edge portion 12b and/or the second edge portion 12d, the fourth edge portion 12g and the first edge portion 12b may be directly connected or may be indirectly connected through the first corner portion 12a, the first corner portion 12a is connected to the first edge portion 12b and/or the second edge portion 12d, and the third edge portion 12f and the fourth edge portion 12g may be directly connected or may be connected through a corner portion. A specific structure of the image stabilization bracket 12 is not strictly limited in this embodiment of this application.

For example, the image stabilization bracket 12 may be provided with a plurality of second sliding grooves 121, and the plurality of second sliding grooves 121 are disposed facing a same side of the image stabilization bracket 12. There may be three second sliding grooves 121. The three second sliding grooves 121 are located in the first corner portion 12a, the second corner portion 12c, and the third corner portion 12e respectively. An extension direction of the second sliding groove 121 may be parallel to the first direction X.

For example, the first edge portion 12b is provided with a first mounting slot 122, the first mounting slot 122 is located between two second sliding grooves 121, the second edge portion 12d is provided with a second mounting slot 123, and the second mounting slot 123 is located between two second sliding grooves 121. The second mounting slot 123 and the first mounting slot 122 are arranged facing a same side of the image stabilization bracket 12.

For example, the image stabilization bracket 12 has movement space 124, and the movement space 124 is located between the first edge portion 12b and the third edge portion 12f, and is located between the second edge portion 12d and the fourth edge portion 12g. To be specific, the first edge portion 12b, the second edge portion 12d, the third edge portion 12f, and the fourth edge portion 12g are disposed around the movement space 124. The movement space 124 passes through the image stabilization bracket 12 along the third direction Z. The image stabilization bracket 12 may further include a first stop block 125. The first stop block 125 is located in the movement space 124 and is fastened to a plurality of edge portions of the image stabilization bracket 12. There may be a plurality of first stop blocks 125, and the plurality of first stop blocks 125 may be arranged on a periphery of the movement space 124 at spacings. Alternatively, there may be one first stop block 125. This is not strictly limited in this embodiment of this application.

For example, the third edge portion 12f of the image stabilization bracket 12 is provided with a through hole 126, the through hole 126 passes through the third edge portion 12f along the first direction X, and the through hole 126 communicates with the movement space 124. The third edge portion 12f may be further provided with a third mounting slot 127 and a fourth mounting slot 128. The third mounting slot 127 and the fourth mounting slot 128 are spaced apart and are respectively located on two sides of the through hole 126. Extension directions of the third mounting slot 127 and the fourth mounting slot 128 may be parallel to the third direction Z.

Refer to FIG. 5 and FIG. 14. FIG. 14 is a diagram of an assembly structure of the circuit board assembly 23 shown in FIG. 5.

In some embodiments, both the focusing drive chip 232 and the focusing sensor 234 of the circuit board assembly 23 are fastened to the focusing circuit board 231 and are electrically connected to the focusing circuit board 231. The focusing coil 221 is fastened to the focusing circuit board 231 and is electrically connected to the focusing circuit board 231. It can be understood that an input end and an output end of the focusing coil 221 may form a current loop with the focusing drive chip 232 through the focusing circuit board 231. In this case, the focusing drive chip 232 may control a current status (for example, whether a current is supplied, or a current value in a case in which a current is supplied) of the focusing coil 221 through the focusing circuit board 231. For example, the focusing coil 221 may be disposed around the focusing drive chip 232 and the focusing sensor 234. In this way, the focusing drive chip 232 and the focusing sensor 234 can effectively utilize inner space of the focusing coil 221, to improve space utilization of the motor 1 to a large extent.

For example, the focusing magnetic-attractive piece 233 is fastened to a side, backing the focusing coil 221, of the focusing circuit board 231. The focusing magnetic-attractive piece 233 is made of a material that can generate a magnetic attraction force with a magnet or another magnetic component, for example, a ferromagnetic material. The reinforcing piece 236 is fastened to a side, backing the focusing coil 221, of the focusing circuit board 231, and is configured to increase structural strength of the circuit board assembly 23, to reduce a risk of deformation of the focusing circuit board 231. For example, the reinforcing piece 236 and the focusing magnetic-attractive piece 233 may be fastened to different regions on the focusing circuit board 231, and the focusing magnetic-attractive piece 233 may also be configured to increase structural strength of the circuit board assembly 23, to reduce a risk of deformation of the focusing circuit board 231. In this case, the reinforcing piece 236 and the focusing magnetic-attractive piece 233 may be spliced or spaced apart. When the reinforcing piece 236 and the focusing magnetic-attractive piece 233 are spliced, the reinforcing piece 236 and the focusing magnetic-attractive piece 233 may be an integrated mechanical part, or an integrated structure formed through assembly.

In some other embodiments, the reinforcing piece 236 is fastened to a side, backing the focusing coil 221, of the focusing circuit board 231, and an area of the reinforcing piece 236 is large, to increase overall strength of the focusing circuit board 231. The focusing magnetic-attractive piece 233 is fastened to a side, backing the focusing circuit board 231, of the reinforcing piece 236. In this case, the focusing magnetic-attractive piece 233 and the reinforcing piece 236 are in a stacked state.

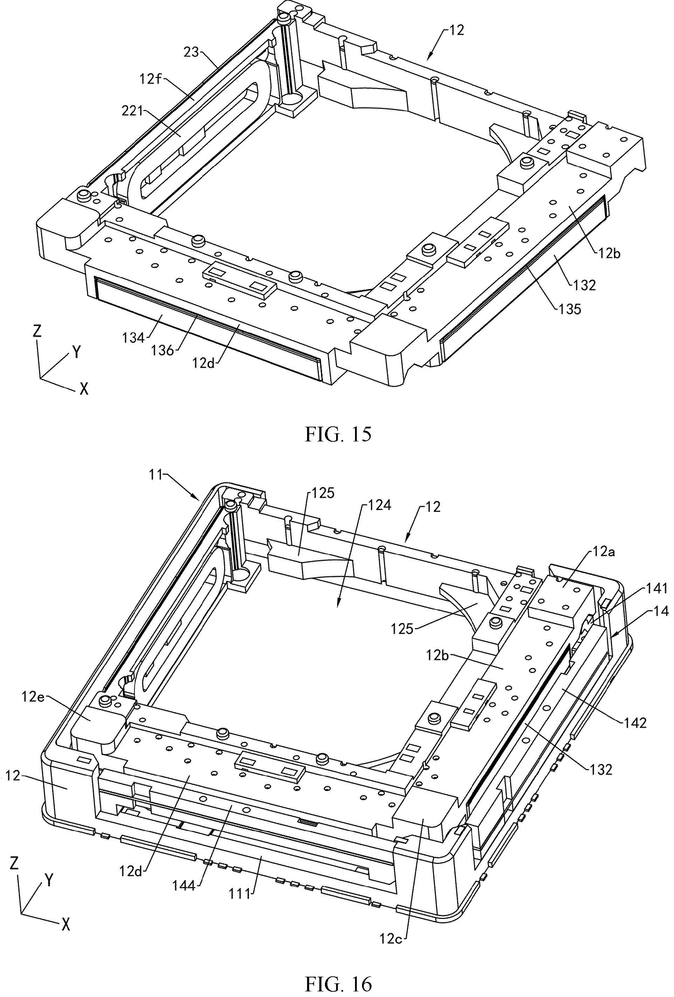

Refer to FIG. 5, FIG. 12, FIG. 14, and FIG. 15. FIG. 15 is a third diagram of a partial structure of the motor 1 shown in FIG. 4.

In some embodiments, the first image stabilization magnetic piece 132 and the first image stabilization magnetic-conductive piece 135 may be mounted in the first mounting slot 122 of the first edge portion 12b of the image stabilization bracket 12, to be fastened to the first edge portion 12b. The first image stabilization magnetic piece 132 may be a magnet or another magnetic component. The first image stabilization magnetic-conductive piece 135 is made of a magnetic-conductive material, for example, a silicon steel sheet, or an alloy formed by various iron products and rare earth elements. The first image stabilization magnetic-conductive piece 135 may be located between the first image stabilization magnetic piece 132 and a bottom wall of the first mounting slot 122. The first image stabilization magnetic-conductive piece 135 may be fastened to the image stabilization bracket 12 through bonding or the like, or may form an integrated mechanical part with the image stabilization bracket 12 through in-mold injection molding (insert-molding) or the like. The first image stabilization magnetic piece 132 may be fastened to the first image stabilization magnetic-conductive piece 135 through bonding or the like.

For example, the second image stabilization magnetic piece 134 and the second image stabilization magnetic-conductive piece 136 may be mounted in the second mounting slot 123 of the second edge portion 12d of the image stabilization bracket 12, to be fastened to the second edge portion 12d. The second image stabilization magnetic piece 134 may be a magnet or another magnetic component. The second image stabilization magnetic-conductive piece 136 is made of a magnetic-conductive material, for example, a silicon steel sheet, or an alloy formed by various iron products and rare earth elements. The second image stabilization magnetic-conductive piece 136 may be located between the second image stabilization magnetic piece 134 and a bottom wall of the second mounting slot 123. The second image stabilization magnetic-conductive piece 136 may be fastened to the image stabilization bracket 12 through bonding or the like, or may form an integrated mechanical part with the image stabilization bracket 12 through in-mold injection molding (insert-molding) or the like. The second image stabilization magnetic piece 134 may be fastened to the second image stabilization magnetic-conductive piece 136 through bonding or the like.

For example, the circuit board assembly 23 is mounted to the third edge portion 12f of the image stabilization bracket 12, to be fastened to the image stabilization bracket 12. In this case, the focusing coil 221 is fastened to the third edge portion 12f of the image stabilization bracket 12 through the focusing circuit board 231. The focusing coil 221 is at least partially located in the through hole 126, so that a structural arrangement of the circuit board assembly 23 and the image stabilization bracket 12 is compact. This helps improve space utilization.

In this embodiment, the first image stabilization magnetic piece 132, the second image stabilization magnetic piece 134, and the circuit board assembly 23 are fastened to the first edge portion 12b, the second edge portion 12d, and the third edge portion 12f of the image stabilization bracket 12 respectively, and each uses a fitting structure of at least partial embedding. In this way, a structural arrangement of a plurality of components is compact, and space utilization is high. When no other fitting component is disposed on the fourth edge portion 12g of the image stabilization bracket 12, a size of the fourth edge portion 12g is kept small. For example, a width of the fourth edge portion 12g is less than a width of the first edge portion 12b and a width of the second edge portion 12d. This helps reduce a size of the image stabilization bracket 12.

Refer to FIG. 11, FIG. 15, and FIG. 16. FIG. 16 is a fourth diagram of a partial structure of the motor 1 shown in FIG. 4.

In some embodiments, the image stabilization bracket 12 is movably connected to the base 11, and the image stabilization bracket 12 is located on a side, backing the bottom plate 111 of the base 11, of the three support portions (141, 143, and 145) of the guide bracket 14, and may be located on an inner side of the side frame 112 of the base 11. The first corner portion 12a of the image stabilization bracket 12 is disposed in correspondence with the first support portion 141 of the guide bracket 14. The second corner portion 12c of the image stabilization bracket 12 is disposed in correspondence with the second support portion 143 of the guide bracket 14. The third corner portion 12e of the image stabilization bracket 12 is disposed in correspondence with the third support portion 145 of the guide bracket 14. In this case, the three support portions (141, 143, and 145) of the guide bracket 14 are located between the image stabilization bracket 12 and the base 11, and are disposed in a one-to-one correspondence with the first corner portion 12a, the second corner portion 12c, and the third corner portion 12e. The first image stabilization magnetic piece 132 is disposed opposite to the first image stabilization coil 131. The second image stabilization magnetic piece 134 is disposed opposite to the second image stabilization coil 133.

The three second sliding grooves 121 of the image stabilization bracket 12 are arranged in a one-to-one correspondence with the three second grooves 146 of the guide bracket 14. The second support piece 152 mounted in the second groove 146 is at least partially embedded in the second sliding groove 121. In this case, the first support portion 141, the second support portion 143, and the third support portion 145 of the guide bracket 14 are connected to the image stabilization bracket 12 through the plurality of second support pieces 152. The image stabilization bracket 12 is slidably connected to the guide bracket 14 through the plurality of second support pieces 152, and a relative sliding direction of the image stabilization bracket 12 and the guide bracket 14 is parallel to a guiding direction of the second support piece 152. When the second support piece 152 is in the sliding shaft structure, the axial direction of the sliding shaft is the guiding direction of the second support piece 152. When the second support piece 152 is in the ball structure, the arrangement direction of the plurality of balls is the guiding direction of the second support piece 152.

When the second support piece 152 is in the sliding shaft structure, the image stabilization bracket 12 is in line contact with the second support piece 152 during relative movement, so that a risk of a dent caused by excessively large impact pressure can be avoided, and reliability is improved. In some embodiments, a width of a contact position between the second support piece 152 and the image stabilization bracket 12 may be increased to further improve reliability of structural fitting.

For example, as shown in FIG. 11, guiding directions of the plurality of second support pieces 152 are parallel to the first direction X. Therefore, the image stabilization bracket 12 may slide relative to the guide bracket 14 along the first direction X. In some embodiments, the second support piece 152 may also limit positions of other mechanical parts along a direction perpendicular to the guiding direction of the second support piece 152. For example, the second support piece 152 is disposed, so that the image stabilization bracket 12 and the guide bracket 14 limit positions of each other along the second direction Y. In some other embodiments, another position-limiting structure may alternatively be used between the image stabilization bracket 12 and the guide bracket 14 to limit positions of the image stabilization bracket 12 and the guide bracket 14 along the second direction Y. This is not strictly limited in this embodiment of this application.

In this embodiment of this application, the guiding directions of the plurality of first support pieces 151 are different from the guiding directions of the plurality of second support pieces 152. In this way, a relative movement direction of the image stabilization bracket 12 and the guide bracket 14 is different from a relative movement direction of the guide bracket 14 and the base 11, and the image stabilization bracket 12 can move relative to the base 11 on the X-Y plane. The guiding directions of the plurality of first support pieces 151 and the guiding directions of the plurality of second support pieces 152 may be perpendicular to each other, or may intersect with but is not perpendicular to each other. This is not strictly limited in this embodiment of this application.

In the foregoing embodiments, the guiding directions of the plurality of first support pieces 151 are parallel to the first direction X, and the guiding directions of the plurality of second support pieces 152 are parallel to the second direction Y, so that the image stabilization bracket 12 can move relative to the guide bracket 14 along the second direction Y, and the image stabilization bracket 12 and the guide bracket 14 together can move relative to the base 11 along the first direction X.

In some other embodiments, the guiding directions of the plurality of first support pieces 151 may alternatively be parallel to the second direction Y, and the guiding directions of the plurality of second support pieces 152 may alternatively be parallel to the first direction X, so that the image stabilization bracket 12 can move relative to the guide bracket 14 along the first direction X, and the image stabilization bracket 12 and the guide bracket 14 together can move relative to the base 11 along the second direction Y. In this case, extension directions of the plurality of first grooves 1111 of the base 11 and directions of the plurality of first sliding grooves 148 of the guide bracket 14 change with the guiding directions of the plurality of first support pieces 151, to be specific, change to be parallel to the second direction Y; and extension directions of the plurality of second grooves 146 of the guide bracket 14 and directions of the plurality of second sliding grooves 121 of the image stabilization bracket 12 change with the guiding directions of the plurality of second support pieces 152, to be specific, change to be parallel to the first direction X.

As shown in FIG. 16, in some embodiments, the first edge portion 12b of the image stabilization bracket 12 is disposed in correspondence with the first connection portion 142 of the guide bracket 14, and is arranged in correspondence with an edge of the base 11; and the second edge portion 12d of the image stabilization bracket 12 is disposed in correspondence with the second connection portion 144 of the guide bracket 14, and is arranged in correspondence with another edge of the base 11. Therefore, the image stabilization bracket 12 and the guide bracket 14 are arranged compactly, space of three corner regions and two edge regions of the base 11 can be fully utilized for arrangement, and space of the other two edge regions of the base 11 is reduced. This facilitates a miniaturization design of the motor 1.

As shown in FIG. 15 and FIG. 16, in some embodiments, the first connection portion 142 is located on a side, backing the movement space 124, of the first edge portion 12b and the first image stabilization magnetic piece 132, and the second connection portion 144 is located on a side, backing the movement space 124, of the second edge portion 12d and the second image stabilization magnetic piece 134. In this embodiment, the first connection portion 142 and the second connection portion 144 of the image stabilization bracket 12 are arranged around a periphery, and are staggered with the first edge portion 12b and the second edge portion 12d of the image stabilization bracket 12 along the third direction Z. This helps reduce a height of the motor 1 and implement miniaturization.

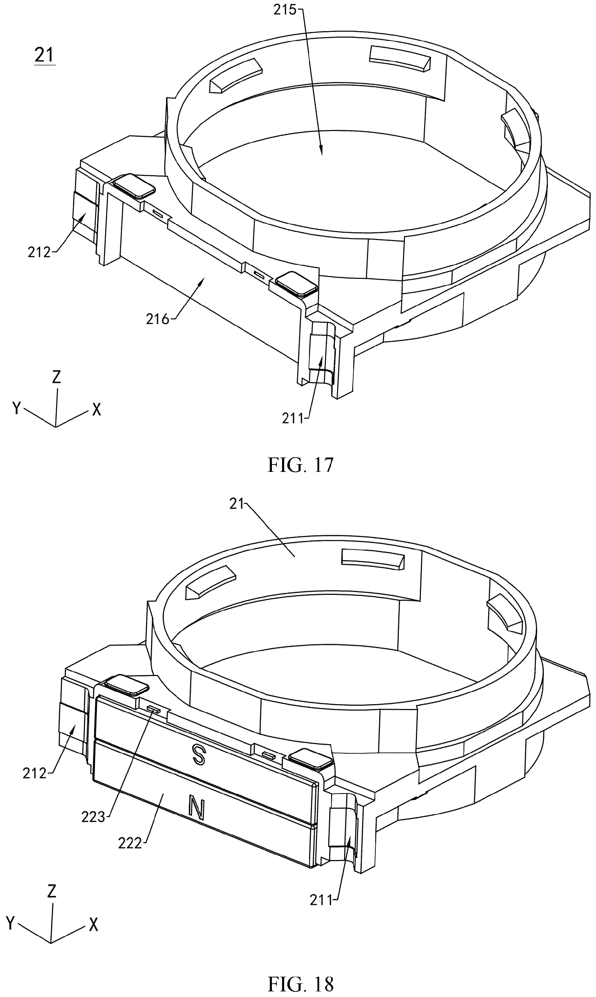

FIG. 17 is a diagram of a structure of the focusing bracket 21 shown in FIG. 5.

In some embodiments, the focusing bracket 21 may be approximately frame-shaped, and the focusing bracket 21 has mounting space 215. The focusing bracket 21 is provided with a fifth mounting slot 216, a first sliding slot 211, and a second sliding slot 212. The fifth mounting slot 216 is disposed backing the mounting space 215. For example, the first sliding slot 211 and the second sliding slot 212 are spaced apart, are both arranged backing the mounting space 215, and are respectively located on two sides of the fifth mounting slot 216. Extension directions of the first sliding slot 211 and the second sliding slot 212 may be parallel to the third direction Z.

Refer to FIG. 5, FIG. 17, and FIG. 18. FIG. 18 is a fifth diagram of a partial structure of the motor 1 shown in FIG. 4.

In some embodiments, the focusing magnetic piece 222 and the focusing magnetic-conductive piece 223 may be mounted in the fifth mounting slot 216 of the focusing bracket 21, to be fastened to the focusing bracket 21. A main part of the focusing magnetic-conductive piece 223 may be located between the focusing magnetic piece 222 and a bottom wall of the fifth mounting slot 216. The focusing magnetic-conductive piece 223 may be fastened to the focusing bracket 21 through bonding or the like, or may form an integrated mechanical part with the focusing bracket 21 through in-mold injection molding (insert-molding) or the like. The focusing magnetic piece 222 may be fastened to the focusing magnetic-conductive piece 223 through bonding or the like.

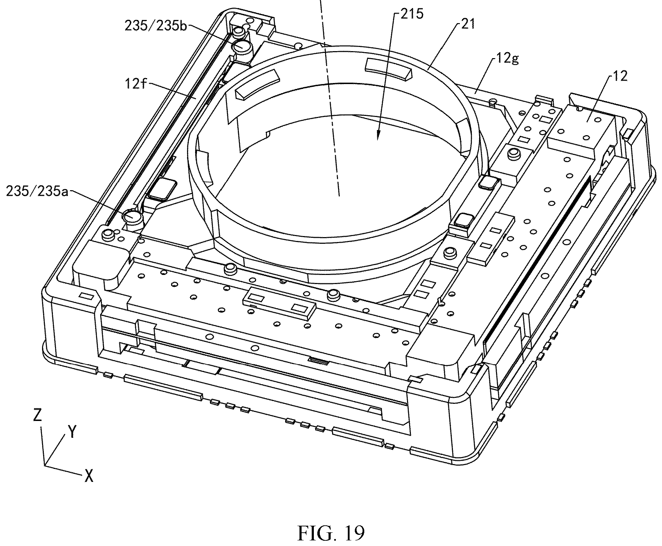

Refer to FIG. 16, FIG. 18, and FIG. 19. FIG. 19 is a sixth diagram of a partial structure of the motor 1 shown in FIG. 4.

In some embodiments, the focusing bracket 21 is mounted on an inner side of the image stabilization bracket 12, and the focusing magnetic piece 222 is disposed opposite to the focusing coil 221. The first sliding slot 211 of the focusing bracket 21 is arranged in correspondence with the third mounting slot 127 of the image stabilization bracket 12. The second sliding slot 212 of the focusing bracket 21 is arranged in correspondence with the fourth mounting slot 128 of the image stabilization bracket 12. One third support piece 235 is mounted in the third mounting slot 127 and is at least partially embedded in the first sliding slot 211. The other third support piece 235 is mounted in the fourth mounting slot 128 and is partially embedded in the second sliding slot 212. The third support piece 235 may be fastened to the image stabilization bracket 12 through bonding or the like. The focusing bracket 21 is slidably connected to the image stabilization bracket 12 through the third support piece 235, and a relative sliding direction of the focusing bracket 21 and the image stabilization bracket 12 is parallel to a guiding direction of the third support piece 235, namely, the third direction Z. When the third support piece 235 is in a sliding shaft structure, an axial direction of the sliding shaft is the guiding direction of the third support piece 235. When the third support piece 235 is in a ball structure, an arrangement direction of a plurality of balls is the guiding direction of the third support piece 235. For example, the third support piece 235 may include a first sliding shaft 235a and a second sliding shaft 235b, the first sliding shaft 235a is mounted in the third mounting slot 127, and the second sliding shaft 235b is mounted in the fourth mounting slot 128.

For example, the mounting space 215 of the focusing bracket 21 is used for mounting the lens 2, and a center axis of the focusing bracket 21 is parallel to an optical axis of the lens 2. In some embodiments, a distance between the center axis of the focusing bracket 21 and an outer side surface of the fourth edge portion 12g of the image stabilization bracket 12 may be less than a distance between the center axis of the focusing bracket 21 and an outer side surface of the third edge portion 12f of the image stabilization bracket 12. In this embodiment, large space is reserved on the third edge portion 12f of the image stabilization bracket 12 for arranging the focusing coil 221 and the focusing magnetic piece 222, and small space is reserved on the fourth edge portion 12g to reduce a size. This facilitates a miniaturization design of the motor 1. Certainly, in some other embodiments, a distance between the center axis of the focusing bracket 21 and an outer side surface of the fourth edge portion 12g of the image stabilization bracket 12 may alternatively be greater than or equal to a distance between the center axis of the focusing bracket 21 and an outer side surface of the third edge portion 12f of the image stabilization bracket 12.

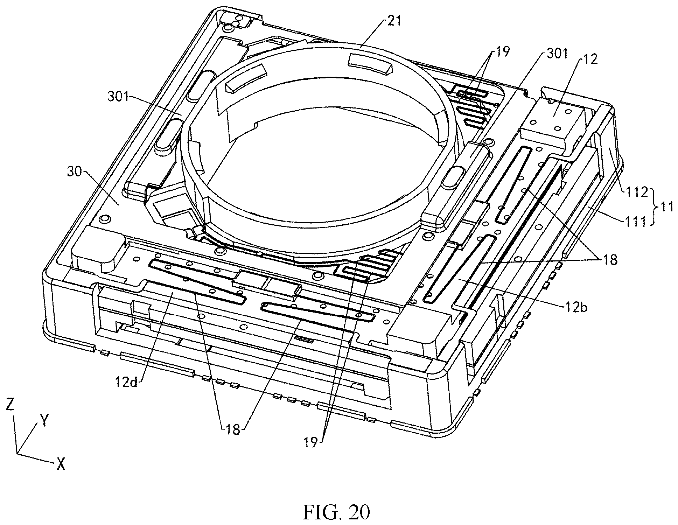

FIG. 20 is a seventh diagram of a partial structure of the motor 1 shown in FIG. 4.

In some embodiments, the plurality of first spring plates 18 may be arranged on a plane perpendicular to the third direction Z, and are located on a side, backing the bottom plate 111, of the image stabilization bracket 12. To be specific, the plurality of first spring plates 18 may be arranged on the X-Y plane. A part of the first spring plates 18 connect the first edge portion 12b to the side frame 112 of the base 11, and the other part of the first spring plates 18 connect the second edge portion 12d to the side frame 112 of the base 11. The plurality of first spring plates 18 may be arranged in space above the first edge portion 12b and the second edge portion 12d of the image stabilization bracket 12, to improve space utilization of the motor 1. The plurality of first spring plates 18 are configured to: when the image stabilization bracket 12 moves relative to the base 11 and leaves a balanced position, provide an elastic force to make the image stabilization bracket 12 move back to the balanced position. In some embodiments, the first spring plate 18 may be made of a conductive material, to provide a signal transmission function.

In some embodiments, the plurality of second spring plates 19 may be arranged on a plane perpendicular to the third direction Z, and are located on a side, backing the bottom plate 111, of the focusing bracket 21. To be specific, the plurality of second spring plates 19 may be arranged on the X-Y plane. The plurality of second spring plates 19 connect the image stabilization bracket 12 to the focusing bracket 21. The plurality of second spring plates 19 are configured to: when the focusing bracket 21 moves relative to the image stabilization bracket 12 and leaves a balanced position, provide an elastic force to make the focusing bracket 21 move back to the balanced position. In some embodiments, the second spring plate 19 may be made of a conductive material, to provide a signal transmission function.

In some embodiments, the position-limiting bracket 30 is fastened to a side, backing the bottom plate 111, of the image stabilization bracket 12. The position-limiting bracket 30 includes a second stop block 301, and the second stop block 301 is disposed directly facing the focusing bracket 21. There may be one or more second stop blocks 301, and the plurality of second stop blocks 301 may be arranged in correspondence with a periphery of the focusing bracket 21 at spacings. Refer to FIG. 16 and FIG. 20. The first stop block 125 of the image stabilization bracket 12 may cooperate with the second stop block 301 of the position-limiting bracket 30 to limit a movement stroke of the focusing bracket 21 along the third direction Z, to prevent the focusing bracket 21 from being detached from the position-limiting bracket 30, so that relative movement actions of the focusing bracket 21 and the position-limiting bracket 30 are more reliable.

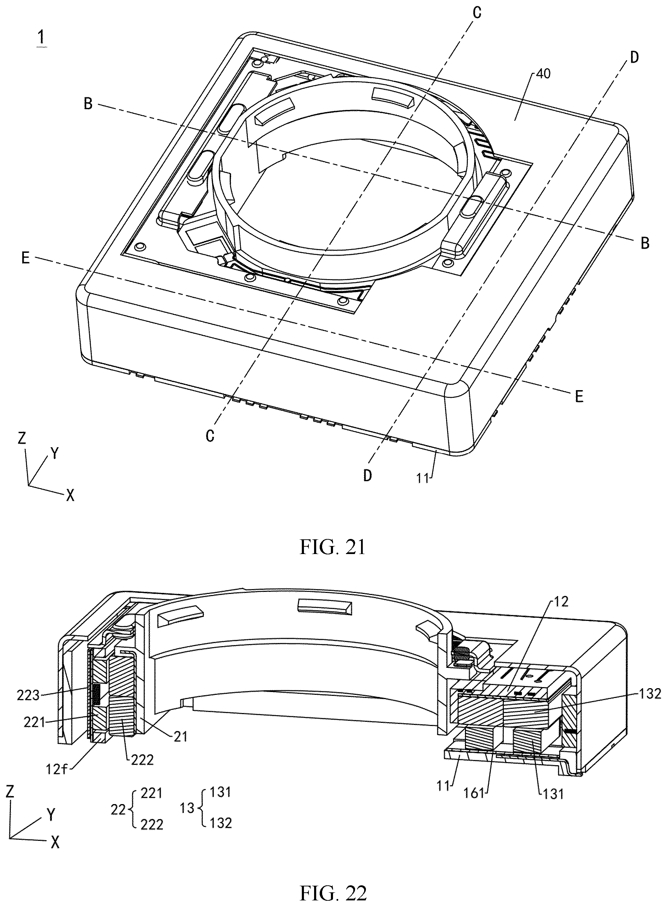

FIG. 21 is a diagram of a structure of the motor 1 shown in FIG. 4 at another angle.

In some embodiments, the housing 40 and the base 11 are assembled and matched, and the housing 40 covers the base 11. The housing 40 may cover the side frame 112 of the base 11 (refer to FIG. 20). The housing 40 and the base 11 cooperate to jointly package and protect an internal structure of the motor 1. The housing 40 is provided with a via, and a partial structure of the motor 1 is exposed from the via, for example, a partial structure of the focusing bracket 21 is exposed.

FIG. 22 is a schematic cross-sectional view of a structure of the motor 1 shown in FIG. 21 that is cut along B-B.

In some embodiments, the focusing coil 221 is fastened to the image stabilization bracket 12, the focusing magnetic piece 222 is fastened to the focusing bracket 21, and the focusing coil 221 is disposed facing the focusing magnetic piece 222 and is configured to drive the focusing bracket 21 to move relative to the image stabilization bracket 12 along the third direction Z. When the focusing bracket 21 moves relative to the image stabilization bracket 12 along the third direction Z, the focusing bracket 21 may drive the lens 2 mounted on the focusing bracket 21 to move along the third direction Z. In this case, the motor 1 can implement autofocus for the camera module 100. That the focusing coil 221 is disposed facing the focusing magnetic piece 222 means that a winding plane of the focusing coil 221 faces the focusing magnetic piece 222. For example, the focusing sensor 234 (refer to FIG. 14) fastened to the focusing circuit board 231 may be configured to detect a position change of the focusing bracket 21 along the third direction Z.

In this embodiment, during movement of the focusing bracket 21 relative to the image stabilization bracket 12, a movement direction of the focusing bracket 21 is perpendicular to a magnetic gap between the focusing magnetic piece 222 and the focusing coil 221, and the magnetic gap is not affected by a movement action of the focusing bracket 21. Therefore, a problem that a driving force rapidly decreases due to an increase in the magnetic gap can be avoided, to ensure that a focusing driving force of the motor 1 is large and the driving force is stable. This facilitates a large-stroke design for a focusing function of the motor 1.

The focusing magnetic piece 222 may have two opposite polarity directions, and the polarity directions of the focusing magnetic piece 222 are arranged to be perpendicular to the winding plane of the focusing coil 221. Coils in two regions of the focusing coil 221 may be disposed in correspondence with the two polarity directions of the focusing magnetic piece 222 respectively. Current flow directions in the coils in the two regions are opposite to each other. It can be understood that a polarity direction may be a direction from a north pole (N) to a south pole (S), or a direction from a south pole (S) to a north pole (N). In this case, a side, facing the focusing coil 221, of the focusing magnetic piece 222 includes a north pole (N) and a south pole (S); and a side, backing the focusing coil 221, of the focusing magnetic piece 222 includes a south pole (S) and a north pole (N) correspondingly.

For example, the focusing magnetic piece 222 may include one or more magnets, and the focusing magnetic piece 222 may be implemented in a plurality of structures. For example, in some embodiments, a dual-magnet solution may be used for the focusing magnetic piece 222. For example, the focusing magnetic piece 222 includes two magnets, and the two magnets are arranged along the third direction Z and have opposite polarity directions. In some other embodiments, the focusing magnetic piece 222 is a Halbach magnet array. In some other embodiments, a single-magnet solution may be used for the focusing magnetic piece 222. For example, the focusing magnetic piece 222 includes one magnet, and the magnet includes two parts with opposite polarity directions. The magnet may be made by using a bipolar magnetization technique.

In some embodiments, as shown in FIG. 19 and FIG. 22, a magnetic attraction force is formed between the focusing magnetic piece 222 and the focusing magnetic-conductive piece 223, so that the focusing bracket 21 trends to approach the third edge portion 12f of the image stabilization bracket 12, the focusing bracket 21, the third support piece 235, and the image stabilization bracket 12 keep in contact, and the third support piece 235 can better guide the focusing bracket 21 to move relative to the image stabilization bracket 12 along the third direction Z.

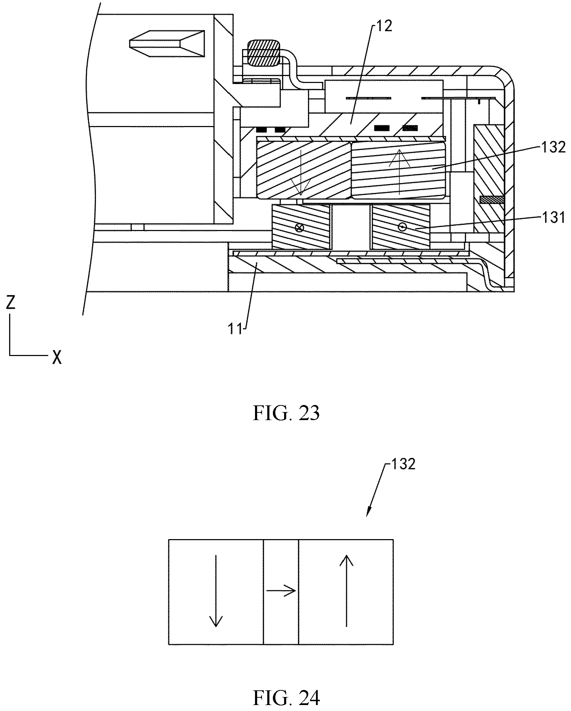

Refer to FIG. 22 and FIG. 23. FIG. 23 is a diagram of a partial structure of the structure shown in FIG. 22.

In some embodiments, the first image stabilization magnetic piece 132 is fastened to the image stabilization bracket 12, the first image stabilization coil 131 is fastened to the base 11, the first image stabilization coil 131 is disposed facing the first image stabilization magnetic piece 132 and is configured to drive the image stabilization bracket 12 to move relative to the base 11 along the first direction X, and the first image stabilization magnetic piece 132 and the first image stabilization coil 131 are arranged along the third direction Z. That the first image stabilization coil 131 is disposed facing the first image stabilization magnetic piece 132 means that a winding plane of the first image stabilization coil 131 faces the first image stabilization magnetic piece 132. For example, the winding plane of the first image stabilization coil 131 may be arranged to be parallel to the X-Y plane. For example, the first image stabilization sensor 171 (refer to FIG. 7) fastened to the bottom plate 111 of the base 11 may be configured to detect a position change of the image stabilization bracket 12 along the first direction X.

In this embodiment, during movement of the image stabilization bracket 12 relative to the base 11 along the first direction X, a movement direction of the image stabilization bracket 12 is perpendicular to a magnetic gap between the first image stabilization magnetic piece 132 and the first image stabilization coil 131, and the magnetic gap is not affected by a movement action of the image stabilization bracket 12. Therefore, a problem that a driving force rapidly decreases due to an increase in the magnetic gap can be avoided, to ensure that an image stabilization driving force of the motor 1 is large and the driving force is stable. This facilitates a large-stroke design for an optical image stabilization function of the motor 1.

The first image stabilization magnetic piece 132 may have two opposite polarity directions (as indicated by arrows in FIG. 23), and the polarity directions of the first image stabilization magnetic piece 132 are arranged to be perpendicular to the winding plane of the first image stabilization coil 131. Coils in two regions of the first image stabilization coil 131 may be disposed in correspondence with the two polarity directions of the first image stabilization magnetic piece 132 respectively. Current flow directions in the coils in the two regions are opposite to each other. A side, facing the first image stabilization coil 131, of the first image stabilization magnetic piece 132 includes a north pole (N) and a south pole (S). A side, backing the focusing coil 221, of the first image stabilization magnetic piece 132 includes a south pole (S) and a north pole (N) correspondingly.

For example, the first image stabilization magnetic piece 132 may include one or more magnets, and the first image stabilization magnetic piece 132 may be implemented in a plurality of structures. For example, in some embodiments, as shown in FIG. 23, a dual-magnet structure may be used for the first image stabilization magnetic piece 132. For example, the first image stabilization magnetic piece 132 includes two magnets, and the two magnets are arranged along the first direction X and have opposite polarity directions. In some other embodiments, refer to FIG. 24. FIG. 24 is a diagram of a structure of the first image stabilization magnetic piece 132 shown in FIG. 22 according to some embodiments. The first image stabilization magnetic piece 132 is a Halbach magnet array. For example, the first image stabilization magnetic piece 132 may include at least three magnets. Among three adjacent magnets, polarization directions of two magnets located on sides are opposite to each other and are perpendicular to an arrangement direction of the three magnets, and a polarization direction of a magnet located in the middle is from one magnet to the other magnet. In some other embodiments, a single-magnet structure may alternatively be used for the first image stabilization magnetic piece 132. For example, the first image stabilization magnetic piece 132 includes one magnet, and the magnet includes two parts with opposite polarity directions. The magnet may be made by using a bipolar magnetization technique.

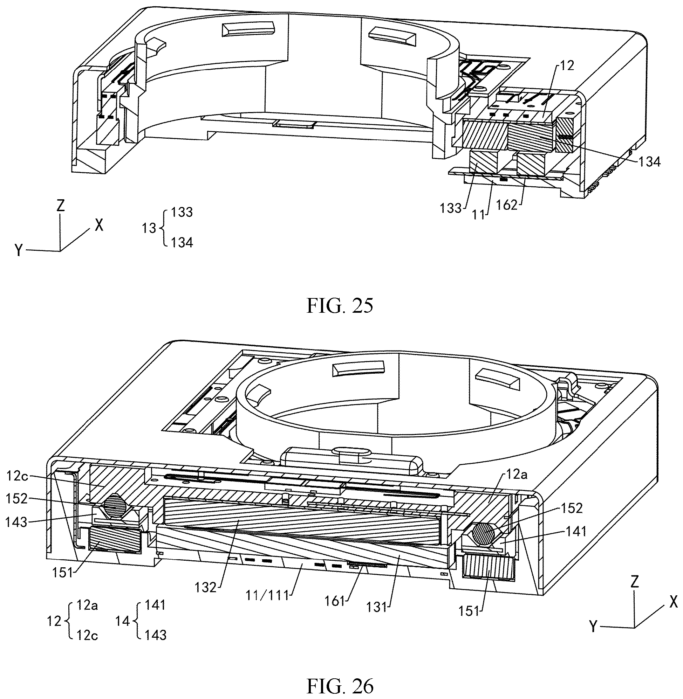

FIG. 25 is a schematic cross-sectional view of a structure of the motor 1 shown in FIG. 21 that is cut along C-C.

In some embodiments, the second image stabilization magnetic piece 134 is fastened to the image stabilization bracket 12, the second image stabilization coil 133 is fastened to the base 11, the second image stabilization coil 133 is disposed facing the second image stabilization magnetic piece 134 and is configured to drive the image stabilization bracket 12 to move relative to the base 11 along the second direction Y, and the second image stabilization magnetic piece 134 and the second image stabilization coil 133 are arranged along the third direction Z. That the second image stabilization coil 133 is disposed facing the second image stabilization magnetic piece 134 means that a winding plane of the second image stabilization coil 133 faces the second image stabilization magnetic piece 134. For example, the winding plane of the second image stabilization coil 133 may be arranged to be parallel to the X-Y plane. For example, the second image stabilization sensor 172 (refer to FIG. 7) fastened to the bottom plate 111 of the base 11 may be configured to detect a position change of the image stabilization bracket 12 along the second direction Y.

In this embodiment, during movement of the image stabilization bracket 12 relative to the base 11 along the second direction Y, a movement direction of the image stabilization bracket 12 is perpendicular to a magnetic gap between the second image stabilization magnetic piece 134 and the second image stabilization coil 133, and the magnetic gap is not affected by a movement action of the image stabilization bracket 12. Therefore, a problem that a driving force rapidly decreases due to an increase in the magnetic gap can be avoided, to ensure that an image stabilization driving force of the motor 1 is large and the driving force is stable. This facilitates a large-stroke design for an optical image stabilization function of the motor 1.

Driven by the first image stabilization magnetic piece 132, the first image stabilization coil 131, the second image stabilization magnetic piece 134, and the second image stabilization coil 133, the image stabilization bracket 12 can drive the focusing bracket 21 and the lens 2 to move relative to the base 11 along the first direction X and/or the second direction Y, to implement movement on the X-Y plane. In this case, the motor 1 can implement optical image stabilization for the camera module 100. In addition, based on related designs such as arrangement positions of the first image stabilization magnetic piece 132, the first image stabilization coil 131, the second image stabilization magnetic piece 134, and the second image stabilization coil 133, the motor 1 can implement a large-stroke design for optical image stabilization, to achieve better image shooting experience.

In this embodiment, a direction in which the first image stabilization coil 131 and the first image stabilization magnetic piece 132 drive the image stabilization bracket 12 to move is perpendicular to a direction in which the second image stabilization coil 133 and the second image stabilization magnetic piece 134 drive the image stabilization bracket 12 to move. In some other embodiments, a direction in which the first image stabilization coil 131 and the first image stabilization magnetic piece 132 drive the image stabilization bracket 12 to move may alternatively intersect with but is not perpendicular to a direction in which the second image stabilization coil 133 and the second image stabilization magnetic piece 134 drive the image stabilization bracket 12 to move.

For example, the second image stabilization magnetic piece 134 may have two opposite polarity directions, and the polarity directions of the second image stabilization magnetic piece 134 are perpendicular to the winding plane of the second image stabilization coil 133. Coils in two regions of the second image stabilization coil 133 may be disposed in correspondence with the two polarity directions of the second image stabilization magnetic piece 134 respectively. Current flow directions in the coils in the two regions are opposite to each other. A side, facing the second image stabilization coil 133, of the second image stabilization magnetic piece 134 includes a north pole (N) and a south pole (S). A side, backing the focusing coil 221, of the second image stabilization magnetic piece 134 includes a south pole (S) and a north pole (N) correspondingly.

For example, the second image stabilization magnetic piece 134 may include one or more magnets, and the second image stabilization magnetic piece 134 may be implemented in a plurality of structures. For example, in some embodiments, as shown in FIG. 25, a dual-magnet structure may be used for the second image stabilization magnetic piece 134. For example, the second image stabilization magnetic piece 134 includes two magnets, and the two magnets are arranged along the second direction Y and have opposite polarity directions. In some other embodiments, the second image stabilization magnetic piece 134 is a Halbach magnet array. For example, the second image stabilization magnetic piece 134 may include at least three magnets. Among three adjacent magnets, polarization directions of two magnets located on sides are opposite to each other and are perpendicular to an arrangement direction of the three magnets, and a polarization direction of a magnet located in the middle is from one magnet to the other magnet. In some other embodiments, a single-magnet structure may alternatively be used for the second image stabilization magnetic piece 134. For example, the second image stabilization magnetic piece 134 includes one magnet, and the magnet includes two parts with opposite polarity directions. The magnet may be made by using a bipolar magnetization technique.

As shown in FIG. 22 and FIG. 25, both coils and magnetic pieces of the image stabilization drive mechanism 13 of the motor 1 are approximately arranged on the X-Y plane. With an increase in widths of the magnetic pieces (to be specific, a size of the first image stabilization magnetic piece 132 along the first direction X and a size of the second image stabilization magnetic piece 134 along the second direction Y), a movement stroke of the image stabilization bracket 12 along the first direction X and/or the second direction Y can be increased. This helps implement a large-stroke design for optical image stabilization without increasing a height of the motor 1. In addition, resistance to movement of the motor 1 during optical image stabilization is mainly sliding friction between a support piece and a fitting mechanical part, and is irrelevant to a movement stroke. Therefore, the resistance does not significantly increase during large-stroke optical image stabilization, so that a large-stroke design for optical image stabilization can be implemented without greatly increasing a driving force.

As shown in FIG. 22 and FIG. 25, both the focusing drive mechanism 22 and the image stabilization drive mechanism 13 of the motor 1 are designed in a dynamic magnetic manner, and driving of the motor 1 along the first direction X, the second direction Y, and the third direction Z is separately controlled by a group of actuators (including a coil and a magnetic piece). During movement of the focusing bracket 21 of the motor 1 relative to the image stabilization bracket 12 along the third direction Z for autofocus, relative positions of the image stabilization bracket 12 and the base 11 are not affected, and a width of a magnetic gap of the image stabilization drive mechanism 13 does not change. Similarly, during movement of the image stabilization bracket 12 relative to the base 11 along the first direction X and/or the second direction Y for optical image stabilization, the focusing bracket 21 moves along with the image stabilization bracket 12, relative positions of the focusing bracket 21 and the image stabilization bracket 12 are not affected, and a width of a magnetic gap of the focusing drive mechanism 22 does not change. Therefore, the focusing drive mechanism 22 and the image stabilization drive mechanism 13 of the motor 1 are decoupled from each other, and do not interfere with each other during movement. This helps ensure driving precision of the motor 1.

In addition, the focusing bracket 21 is located on the inner side of the image stabilization bracket 12, the focusing coil 221 is fastened to the image stabilization bracket 12, and the focusing magnetic piece 222 is fastened to the focusing bracket 21. Therefore, in the motor 1, a mover assembly for optical image stabilization is wrapped around a mover assembly for focusing. The focusing bracket 21 is located on the inner side of the image stabilization bracket 12. It can be understood that, when the focusing bracket 21 is located on the inner side of the image stabilization bracket 12, the image stabilization bracket 12 may be disposed around the focusing bracket 21. The being disposed around may be that the image stabilization bracket 12 is disposed fully around the focusing bracket 21, or may be that a part of the image stabilization bracket 12 is disposed around the focusing bracket 21. In this implementation, the image stabilization bracket 12 is frame-shaped. In this case, the image stabilization bracket 12 is disposed around the focusing bracket 21.

It can be understood that, in some solutions, an image stabilization bracket is located on an inner side of a focusing bracket. In this case, when a camera module needs to perform focusing, the focusing bracket needs to drive the image stabilization bracket, a lens, and a variable-aperture stop to move along a third direction. In this case, a weight of a mover including the focusing bracket, the image stabilization bracket, the lens, and the variable-aperture stop is heavy. Consequently, a size of a focusing drive mechanism needs to be increased to increase a driving force. Therefore, this arrangement is not conducive to a lightweight and miniaturization design of a motor. However, in this embodiment, the focusing bracket 21 is disposed on the inner side of the image stabilization bracket 12. In this case, when the camera module 100 needs to perform focusing, the focusing bracket 21 needs to drive the lens 2 and the variable-aperture stop 3 to move along the third direction Z. In this way, in this implementation, the image stabilization bracket 12 may be omitted from a mover during focusing. To be specific, a weight of a mover including the focusing bracket 21, the lens 2, and the variable-aperture stop 3 is light. This facilitates miniaturization of the focusing drive mechanism 22. In this implementation, lightweight and miniaturization of the motor 1 can be implemented.

In addition, in this embodiment, a distance from a connection position between the focusing bracket 21 and the image stabilization bracket 12 to a center of gravity of the mover including the focusing bracket 21, the lens 2, and the variable-aperture stop 3 is short. This helps reduce a risk of overturning of the mover.

It can be understood that, in the solution in which the image stabilization bracket is located on the inner side of the focusing bracket, at least two image stabilization drive mechanisms need to be used to push the image stabilization bracket to move on an X-Y plane. In this case, at least two sets of lines also need to be arranged in the motor to provide signals and power for the image stabilization drive mechanisms. In addition, the at least two sets of lines need to pass through the focusing bracket. Therefore, a power supply arrangement in this solution is complex, and difficulty in disposing the motor is increased. However, in this embodiment, the focusing bracket 21 is disposed on the inner side of the image stabilization bracket 12. Because one set of focusing drive mechanism 22 needs to be used to push the focusing bracket 21 to move along the third direction Z, one set of lines also needs to be arranged in the motor 1 to provide a signal and power for the focusing drive mechanism 22. To be specific, one set of lines needs to pass through the image stabilization bracket 12. Therefore, a power supply scheme in the solution in this implementation is simple, and difficulty in disposing the motor 1 can be reduced to a large extent.

In addition, the focusing bracket 21 is disposed on the inner side of the image stabilization bracket 12, so that the focusing coil 221 and the focusing magnetic piece 222 can be arranged closer to the lens 2. In this way, when the focusing coil 221 and the focusing magnetic piece 222 are arranged vertically, the focusing coil 221 and the focusing magnetic piece 222 may partially protrude from an upper surface of the motor 1. It can be understood that the protruding part may be disposed in a camera decoration part, to well improve space utilization of the camera decoration part.

As shown in FIG. 22, a plane around which a conducting wire of the focusing coil 221 is wound (that is, the winding plane) may be parallel to the third direction Z. In this case, the focusing coil 221 is arranged vertically, so that the focusing coil 221 can occupy a small area on the X-Y plane. This facilitates miniaturization of the motor 1. The focusing magnetic piece 222 may include two opposite polarity directions, and both polarity directions are perpendicular to the third direction Z. In this case, the focusing magnetic piece 222 may be arranged vertically, to reduce space occupied by the focusing magnetic piece 222 on the X-Y plane. This facilitates a miniaturization design of the motor 1.

In this embodiment of this application, the image stabilization drive mechanism 13 of the motor 1 is arranged in space on two sides of the image stabilization bracket 12, the focusing drive mechanism 22 is arranged in space on a third side of the image stabilization bracket 12, and no drive assembly may be arranged in space on the remaining side of the image stabilization bracket 12. In this way, an overall structural arrangement of the motor 1 can be compact when a focusing function and an image stabilization function are ensured, so that space utilization is high. This facilitates a miniaturization design.

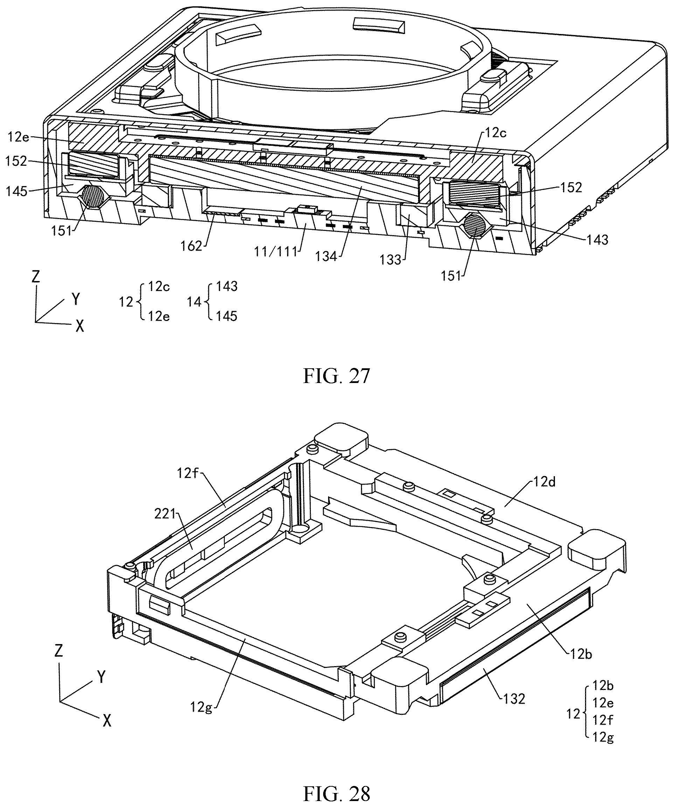

FIG. 26 is a schematic cross-sectional view of a structure of the motor 1 shown in FIG. 21 that is cut along D-D. FIG. 27 is a schematic cross-sectional view of a structure of the motor 1 shown in FIG. 21 that is cut along E-E.

In some embodiments, the first support portion 141 of the guide bracket 14 is located between the first corner portion 12a of the image stabilization bracket 12 and the bottom plate 111 of the base 11. The first support portion 141 is connected to the base 11 through one first support piece 151, and is connected to the image stabilization bracket 12 through one second support piece 152. The second support portion 143 of the guide bracket 14 is located between the second corner portion 12c of the image stabilization bracket 12 and the bottom plate 111 of the base 11. The second support portion 143 is connected to the base 11 through another first support piece 151, and is connected to the image stabilization bracket 12 through another second support piece 152. The third support portion 145 of the guide bracket 14 is located between the third corner portion 12e of the image stabilization bracket 12 and the bottom plate 111 of the base 11. The third support portion 145 is connected to the base 11 through another first support piece 151, and is connected to the image stabilization bracket 12 through another second support piece 152. In this case, the three support portions (141, 143, and 145) of the guide bracket 14 are all located between the image stabilization bracket 12 and the base 11, and are disposed in a one-to-one correspondence with the first corner portion 12a, the second corner portion 12c, and the third corner portion 12e of the image stabilization bracket 12. The three support portions (141, 143, and 145) are connected to the base 11 through the plurality of first support pieces 151. The guiding directions of the plurality of first support pieces 151 are different from the guiding directions of the plurality of second support pieces 152. In this way, a relative movement direction of the image stabilization bracket 12 and the guide bracket 14 is different from a relative movement direction of the guide bracket 14 and the base 11.

In this embodiment, the guide bracket 14 is L-shaped. Compared with a frame structure, the guide bracket 14 has a significantly smaller size, so that space on two sides can be saved. This facilitates miniaturization of the motor 1 and the camera module 100. In addition, the three support portions (141, 143, and 145) of the guide bracket 14 are disposed in correspondence with the three corner portions (12a, 12c, and 12e) of the image stabilization bracket 12, the first image stabilization magnetic piece 132 and the first image stabilization coil 131 are located between the first support portion 141 and the second support portion 143, and the second image stabilization magnetic piece 134 and the second image stabilization coil 133 are located between the second support portion 143 and the third support portion 145. Therefore, the guide bracket 14 can ensure reliability of a connection between the image stabilization bracket 12 and the base 11 when a size is reduced, and can implement stable supporting and accurate guiding to ensure stability of relative positions of the first image stabilization magnetic piece 132 and the first image stabilization coil 131 and stability of relative positions of the second image stabilization magnetic piece 134 and the second image stabilization coil 133. In this way, optical image stabilization movement of the motor 1 is stable and reliable.

In addition, a double-layer bracket design with the guide bracket 14 and the image stabilization bracket 12 is used for the motor 1. Each layer of bracket cooperates with a support piece and an adjacent mechanical part to implement guiding along one direction. No crosstalk occurs between guiding along two directions. This helps implement precise guiding for optical image stabilization. Based on a guiding function of the plurality of first support pieces 151, the guide bracket 14 and the image stabilization bracket 12 can move together relative to the base 11 along the second direction Y. Based on a guiding function of the plurality of second support pieces 152, the image stabilization bracket 12 can move relative to the guide bracket 14 along the first direction X. Therefore, the motor 1 can implement precise guiding during optical image stabilization through a fitting structure of the base 11, the first support pieces 151, the guide bracket 14, the second support pieces 152, and the image stabilization bracket 12. This resolves a problem that the lens 2 greatly tilts (tilt) when a conventional motor 1 performs optical image stabilization.

Still refer to FIG. 16, FIG. 22, and FIG. 25. In some embodiments, in the motor 1, the image stabilization drive mechanism 13 and the guide bracket 14 are arranged at two edge positions corresponding to the first edge portion 12b and the second edge portion 12d of the image stabilization bracket 12, the focusing drive mechanism 22 is arranged at an edge position corresponding to the third edge portion 12f of the image stabilization bracket 12, and no drive mechanism is arranged at an edge position corresponding to the fourth edge portion 12g of the image stabilization bracket 12. Therefore, the three edge positions of the motor 1 can be fully utilized for arranging drive mechanisms, and a size of the remaining edge position is minimized, to facilitate overall miniaturization of the motor 1.

In some embodiments, as shown in FIG. 22 and FIG. 26, the first image stabilization magnetic-attractive piece 161 is fastened to the bottom plate 111 of the base, for example, may be located on a side, backing the first image stabilization magnetic piece 132, of the first image stabilization coil 131. The first image stabilization magnetic-attractive piece 161 is disposed facing the first image stabilization magnetic piece 132. A magnetic force between the first image stabilization magnetic-attractive piece 161 and the first image stabilization magnetic piece 132 makes the image stabilization bracket 12 tend to approach the bottom plate 111 of the base 11. As shown in FIG. 25 and FIG. 27, the second image stabilization magnetic-attractive piece 162 is fastened to the bottom plate 111 of the base, for example, may be located on a side, backing the second image stabilization magnetic piece 134, of the second image stabilization coil 133. The second image stabilization magnetic-attractive piece 162 is disposed facing the second image stabilization magnetic piece 134. A magnetic force between the second image stabilization magnetic-attractive piece 162 and the second image stabilization magnetic piece 134 makes the image stabilization bracket 12 tend to approach the bottom plate 111 of the base 11.

In this embodiment, the magnetic force between the first image stabilization magnetic-attractive piece 161 and the first image stabilization magnetic piece 132 and the magnetic force between the second image stabilization magnetic-attractive piece 162 and the second image stabilization magnetic piece 134 make the image stabilization bracket 12 tend to approach the bottom plate 111 of the base 11. This ensures that the base 11, the second support piece 152, the guide bracket 14, the first support piece 151, and the image stabilization bracket 12 keep in contact, and implements pre-tightening.

For example, as shown in FIG. 22, the first image stabilization magnetic-attractive piece 161 is disposed directly facing the first image stabilization magnetic piece 132, and a size of the first image stabilization magnetic-attractive piece 161 along the first direction X is greater than a size of the first image stabilization magnetic piece 132 along the first direction X. In this case, the first image stabilization magnetic-attractive piece 161 protrudes relative to two sides of the first image stabilization magnetic piece 132 along the first direction X. During optical image stabilization of the motor 1, the first image stabilization magnetic piece 132 and the first image stabilization magnetic piece 132 can still be in a direct-facing relationship or an approximate direct-facing relationship, to ensure stability of a magnetic attraction force. If a projection of the first image stabilization magnetic-attractive piece 161 on the X-Y plane covers a projection of the first image stabilization magnetic piece 132 on the X-Y plane along the first direction X, it can be considered that the first image stabilization magnetic-attractive piece 161 and the first image stabilization magnetic piece 132 are in a direct-facing relationship.

As shown in FIG. 25, along the second direction Y, the second image stabilization magnetic-attractive piece 162 directly faces the second image stabilization magnetic piece 134, and a size of the second image stabilization magnetic-attractive piece 162 is greater than a size of the second image stabilization magnetic piece 134. In this case, the second image stabilization magnetic-attractive piece 162 protrudes relative to two sides of the second image stabilization magnetic piece 134 along the second direction Y. During optical image stabilization of the motor 1, the second image stabilization magnetic piece 134 and the second image stabilization magnetic piece 134 can still be in a direct-facing relationship or an approximate direct-facing relationship, to ensure stability of a magnetic attraction force. If a projection of the second image stabilization magnetic-attractive piece 162 on the X-Y plane covers a projection of the second image stabilization magnetic piece 134 on the X-Y plane along the second direction Y, it can be considered that the second image stabilization magnetic-attractive piece 162 and the second image stabilization magnetic piece 134 are in a direct-facing relationship.

In some embodiments, as shown in FIG. 26 and FIG. 27, the first image stabilization magnetic-attractive piece 161 is located between the first support portion 141 and the second support portion 143, and the second image stabilization magnetic-attractive piece 162 is located between the second support portion 143 and the third support portion 145. Therefore, the magnetic force between the first image stabilization magnetic-attractive piece 161 and the first image stabilization magnetic piece 132 and the magnetic force between the second image stabilization magnetic-attractive piece 162 and the second image stabilization magnetic piece 134 can better ensure that the three support portions (141, 143, and 145) of the guide bracket 14 are connected to the base 11 and the image stabilization bracket 12 through the support pieces. This improves reliability of an optical image stabilization process of the motor 1.

For example, as shown in FIG. 26, along the second direction Y, a center distance between the first image stabilization magnetic-attractive piece 161 and the first corner portion 12a is less than a center distance between the first image stabilization magnetic-attractive piece 161 and the second corner portion 12c. As shown in FIG. 27, along the first direction X, a center distance between the second image stabilization magnetic-attractive piece 162 and the third corner portion 12e is less than a center distance between the second image stabilization magnetic-attractive piece 162 and the second corner portion 12c. In this case, the position arrangement of the first image stabilization magnetic-attractive piece 161 and the second image stabilization magnetic-attractive piece 162 can make pre-tightening forces between the three support portions (141, 143, and 145) of the guide bracket 14 and the base 11 and between the three support portions (141, 143, and 145) of the guide bracket 14 and the image stabilization bracket 12 more balanced and reliable.

It can be understood that, in some other embodiments, sizes, shapes, and positions of the first image stabilization magnetic-attractive piece 161 and the second image stabilization magnetic-attractive piece 162 may alternatively be adjusted. This is not strictly limited in this embodiment of this application.

In some embodiments, fitting between the plurality of first support pieces 151 and the guide bracket 14 includes tight fitting and loose fitting, to reduce assembly difficulty. For example, as shown in FIG. 9, the plurality of first sliding grooves 148 of the guide bracket 14 include at least one "V"-shaped groove and at least one "U"-shaped groove or "L"-shaped groove. During fitting between the "V"-shaped groove and the first support piece 151, a side wall of the first sliding groove 148 is in contact with the first support piece 151, to implement tight fitting. For example, first sliding grooves 148 located in the first support portion 141 and the second support portion 143 are "V"-shaped grooves. During fitting between the "U"-shaped groove or the "L"-shaped groove with the first support piece 151, a bottom wall of the first sliding groove 148 is in contact with the first support piece 151, to implement loose fitting. For example, a first sliding groove 148 located in the third support portion 145 is a "U"-shaped groove.

In some embodiments, fitting between the plurality of second support pieces 152 and the image stabilization bracket 12 includes tight fitting and loose fitting, to reduce assembly difficulty. For example, as shown in FIG. 13, the plurality of second sliding grooves 121 of the image stabilization bracket 12 include at least one "V"-shaped groove and at least one "U"-shaped groove or "L"-shaped groove. During fitting between the "V"-shaped groove and the second support piece 152, a side wall of the second sliding groove 121 is in contact with the second support piece 152, to implement tight fitting. For example, second sliding grooves 121 located in the second corner portion 12c and the third corner portion 12e are "V"-shaped grooves. During fitting between the "U"-shaped groove or the "L"-shaped groove with the second support piece 152, a bottom wall of the second sliding groove 121 is in contact with the second support piece 152, to implement loose fitting. For example, a second sliding groove 121 located in the first corner portion 12a is a "U"-shaped groove.

It can be understood that, in some other embodiments, there may be other implementation solutions for tight fitting and loose fitting designs between the plurality of first support pieces 151 and the guide bracket 14. For example, loose fitting of two first support pieces and tight fitting of one first support piece may be combined, or arrangement positions of tight fitting and loose fitting change. This is not strictly limited in this embodiment of this application. Similarly, in some other embodiments, there may be other implementation solutions for tight fitting and loose fitting designs between the plurality of second support pieces 152 and the image stabilization bracket 12. For example, loose fitting of two second support pieces and tight fitting of one second support piece may be combined, or arrangement positions of tight fitting and loose fitting change. This is not strictly limited in this embodiment of this application.

In the foregoing embodiments, the first edge portion 12b, the second edge portion 12d, the third edge portion 12f, and the fourth edge portion 12g of the image stabilization bracket 12 are arranged clockwise, and positions of the first image stabilization magnetic piece 132, the second image stabilization magnetic piece 134, and the focusing coil 221 are correspondingly arranged clockwise. In some other embodiments, a plurality of edge portions of the image stabilization bracket 12 may alternatively be arranged at different positions. An example is described below.

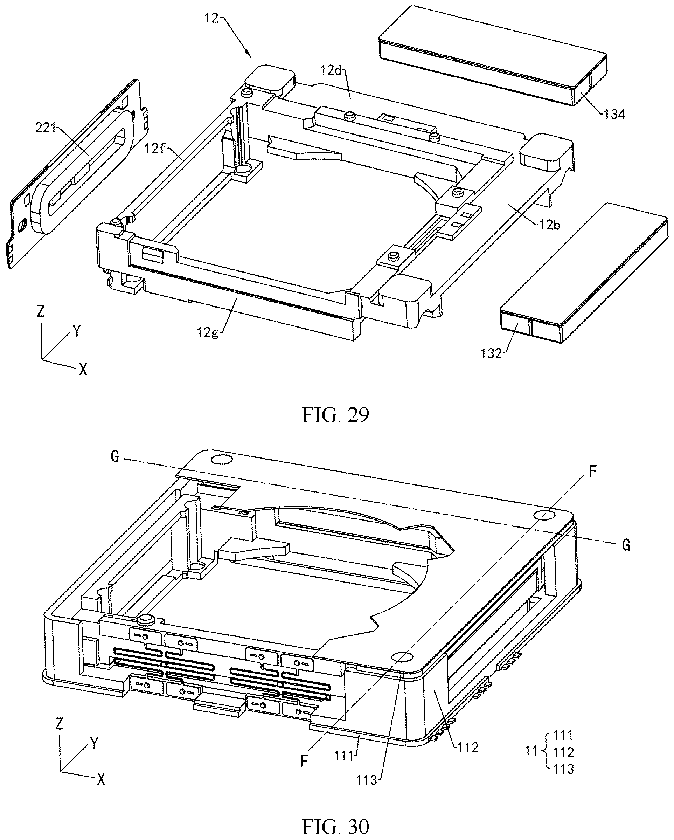

FIG. 28 is a diagram of a partial structure of the motor 1 shown in FIG. 4 according to some other embodiments. FIG. 29 is a schematic exploded view of a structure of the structure shown in FIG. 28. This embodiment may include most of the technical solutions in the foregoing embodiments. The following mainly describes differences between this embodiment and the foregoing embodiments, and most content that is the same between this embodiment and the foregoing embodiments is not described in detail again.

In some embodiments, the first edge portion 12b, the second edge portion 12d, the third edge portion 12f, and the fourth edge portion 12g of the image stabilization bracket 12 are arranged counterclockwise, and positions of the first image stabilization magnetic piece 132, the second image stabilization magnetic piece 134, and the focusing coil 221 are correspondingly arranged clockwise. Other related structures in this embodiment are adaptively adjusted.

In the foregoing embodiments, the image stabilization magnetic piece is fastened to the bottom plate 111 of the base 11, the three support portions (141, 143, and 145) of the guide bracket 14 are located between the image stabilization bracket 12 and the bottom plate 111 of the base 11, the first support piece 151 is located between the three support portions (141, 143, and 145) of the guide bracket 14 and the bottom plate 111 of the base 11, and a lower magnetic attraction solution is used for a pre-tightening structure of the motor 1. In some other embodiments, an upper magnetic attraction solution may alternatively be used for a pre-tightening structure of the motor 1, and a structure of the base 11, a structure and a position of the image stabilization magnetic piece, a structure and a position of the guide bracket 14, and a structure and a position of the image stabilization bracket 12 are adjusted. An example is described below.

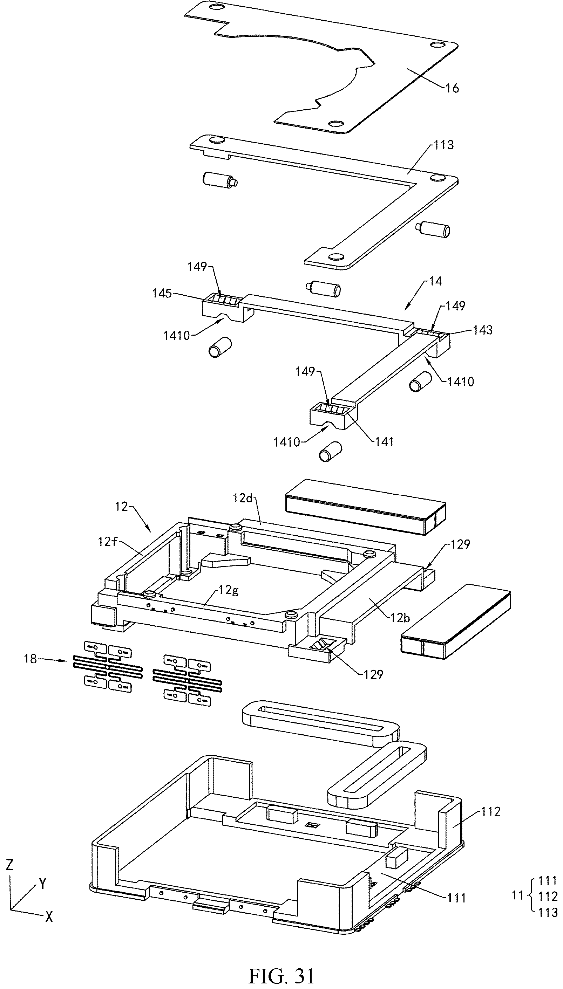

FIG. 30 is a diagram of a partial structure of the motor 1 shown in FIG. 4 according to some other embodiments. FIG. 31 is a schematic exploded view of a structure of the structure shown in FIG. 30. This embodiment may include most of the technical solutions in the foregoing embodiments. The following mainly describes differences between this embodiment and the foregoing embodiments, and most content that is the same between this embodiment and the foregoing embodiments is not described in detail again.

In some embodiments, the base 11 includes a bottom plate 111, a side frame 112, and a top plate 113. The top plate 113 is disposed opposite to the bottom plate 111, and the side frame 112 is connected between the bottom plate 111 and the top plate 113. The top plate 113, a side plate, and the top plate 113 of the base 11 are in a mutually fastened structure. The bottom plate 111 and the side frame 112 may be an integrated mechanical part, and the top plate 113 and the side frame 112 may form an integrated structure through assembly. Alternatively, the top plate 113 and the side frame 112 may be an integrated mechanical part, and the bottom plate 111 and the side frame 112 may form an integrated structure through assembly.

A first image stabilization magnetic piece 132 and a second image stabilization magnetic piece 134 are fastened to an image stabilization bracket 12. A first image stabilization coil 131 and a second image stabilization coil 133 are fastened to the bottom plate 111. The first image stabilization coil 131 is disposed facing the first image stabilization magnetic piece 132. The second image stabilization coil 133 is disposed facing the second image stabilization magnetic piece 134. The image stabilization bracket 12 can move relative to the base 11 along an X-Y plane, to implement optical image stabilization.

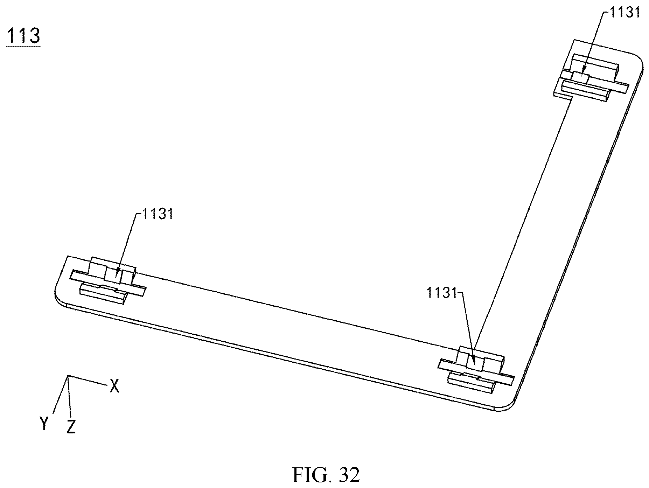

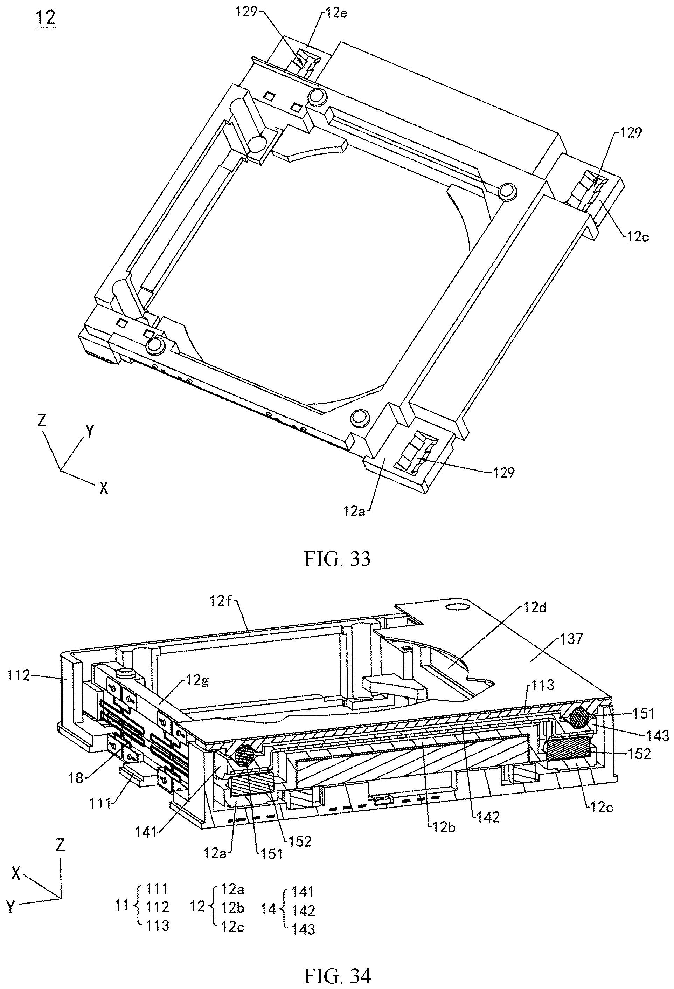

Refer to FIG. 31 to FIG. 33. FIG. 32 is a diagram of a structure of the top plate 113 shown in FIG. 31 at another angle. FIG. 33 is a diagram of a structure of the image stabilization bracket 12 shown in FIG. 31 at another angle.

In some embodiments, three corner regions of the bottom plate 111 of the base 11 may not be provided with grooves. The top plate 113 of the base 11 may be provided with a plurality of third sliding grooves 1131. The plurality of third sliding grooves 1131 may be respectively located in the three corner regions of the top plate 113. An extension direction of the third sliding groove 1131 may be parallel to a first direction X. A guide bracket 14 may be provided with a plurality of third grooves 149 and a plurality of fourth sliding grooves 1410. The plurality of third grooves 149 are respectively located in a first support portion 141, a second support portion 143, and a third support portion 145. An extension direction of the third groove 149 may be parallel to the first direction X. The plurality of fourth sliding grooves 1410 are arranged back to back with the plurality of third grooves 149. The plurality of fourth sliding grooves 1410 are respectively located in the first support portion 141, the second support portion 143, and the third support portion 145. An extension direction of the fourth sliding groove 1410 may be parallel to a second direction Y. The image stabilization bracket 12 is provided with a plurality of fourth grooves 129. The plurality of fourth grooves 129 may be respectively located in a first corner portion 12a, a second corner portion 12c, and a third corner portion 12e. An extension direction of the fourth groove 129 may be parallel to the second direction Y.

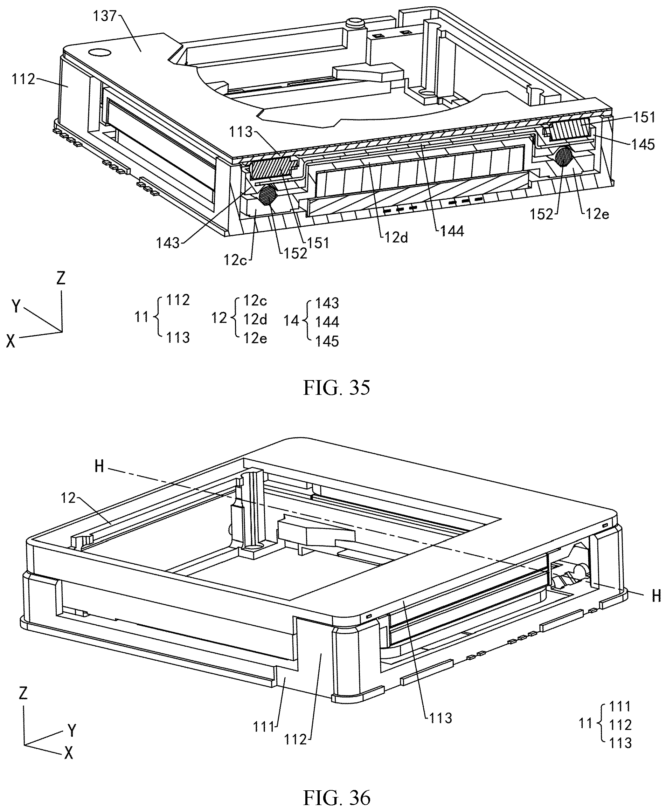

Refer to FIG. 31 to FIG. 35. FIG. 34 is a schematic cross-sectional view of a structure of the structure shown in FIG. 30 that is cut along F-F. FIG. 35 is a schematic cross-sectional view of a structure of the structure shown in FIG. 30 that is cut along G-G.

In some embodiments, an image stabilization drive mechanism 13 includes an image stabilization magnetic-attractive piece 16, and the image stabilization magnetic-attractive piece 16 is fastened to the top plate 113 of the base 11. The image stabilization bracket 12 is located on an inner side of the side frame 112, and the three support portions (141, 143, and 145) of the guide bracket 14 are located between the image stabilization bracket 12 and the top plate 113. Magnetic attraction forces between the image stabilization magnetic-attractive piece 16 and the first image stabilization magnetic piece 132 and between the image stabilization magnetic-attractive piece 16 and the second image stabilization magnetic piece 134 make the image stabilization bracket 12 tend to approach the top plate 113.

The first support portion 141 of the guide bracket 14 is located between the first corner portion 12a of the image stabilization bracket 12 and the top plate 113. The second support portion 143 of the guide bracket 14 is located between the second corner portion 12c of the image stabilization bracket 12 and the top plate 113. The third support portion 145 of the guide bracket 14 is located between the third corner portion 12e of the image stabilization bracket 12 and the top plate 113. A plurality of first support pieces 151 are mounted in the plurality of third grooves 149 of the guide bracket 14 in a one-to-one correspondence. The plurality of third sliding grooves 1131 of the top plate 113 are arranged in a one-to-one correspondence with the plurality of third grooves 149 of the guide bracket 14. The first support piece 151 mounted in the third groove 149 is partially embedded in the first sliding groove 148. The guide bracket 14 is slidably connected to the top plate 113 through the plurality of first support pieces 151, and a relative sliding direction of the guide bracket 14 and the top plate 113 is parallel to guiding directions of the plurality of first support pieces 151. A plurality of second support pieces 152 are mounted in the plurality of fourth grooves 129 of the image stabilization bracket 12 in a one-to-one correspondence. The plurality of fourth sliding grooves 1410 of the guide bracket 14 are arranged in a one-to-one correspondence with the plurality of fourth grooves 129 of the image stabilization bracket 12. The second support piece 152 mounted in the fourth groove 129 is partially embedded in the fourth sliding groove 1410. The image stabilization bracket 12 is slidably connected to the guide bracket 14 through the plurality of second support pieces 152, and a relative sliding direction of the image stabilization bracket 12 and the guide bracket 14 is parallel to guiding directions of the plurality of second support pieces 152.

The guiding directions of the plurality of first support pieces 151 and the guiding directions of the plurality of second support pieces 152 intersect with each other. For example, the guiding directions of the plurality of first support pieces 151 may be parallel to the first direction X, and the guiding directions of the plurality of second support pieces 152 may be parallel to the second direction Y. In some other embodiments, the guiding directions of the plurality of first support pieces 151 and the guiding directions of the plurality of second support pieces 152 may be exchanged, and extension directions of grooves and/or sliding grooves on the top plate 113, the guide bracket 14, and the image stabilization bracket 12 are adaptively changed.

In this embodiment, the image stabilization bracket 12 tends to approach the top plate 113 under a magnetic force. This can ensure that the top plate 113, the plurality of first support pieces 151, the guide bracket 14, the plurality of second support pieces 152, and the image stabilization bracket 12 keep in contact, to implement precise guiding during movement of the image stabilization bracket 12 relative to the base 11, and improve reliability and precision of optical image stabilization. When the image stabilization bracket 12 is subject to a driving force parallel to the guiding direction of the first support piece 151, the image stabilization bracket 12 and the guide bracket 14 move together relative to the base 11 along the guiding direction of the first support piece 151. When the image stabilization bracket 12 is subject to a driving force parallel to the guiding direction of the second support piece 152, the guide bracket 14 remains stationary relative to the base 11, and the image stabilization bracket 12 moves relative to the guide bracket 14 and the base 11 along the guiding direction of the second support piece 152.

As shown in FIG. 31, FIG. 34, and FIG. 35, in some embodiments, the top plate 113 may be L-shaped. For example, the top plate 113 may include three corner regions that are spaced away from each other and two edge regions that connect the three corner regions, and the two edge regions are arranged at an included angle. The top plate 113 is disposed in correspondence with the guide bracket 14. For example, the three corner regions of the top plate 113 are arranged in correspondence with the three support portions (141, 143, and 145) of the guide bracket 14, and the two edge regions of the top plate 113 are arranged in correspondence with two connection portions (142 and 144) of the guide bracket 14. In this case, when the top plate 113 cooperates with another structure to implement a guiding function, the top plate 113 has a small size. This facilitates a miniaturization design of the motor 1. It can be understood that, in some other embodiments, the top plate 113 may alternatively be frame-shaped.

A first connection portion 142 of the guide bracket 14 may be stacked between the first edge portion 12b of the image stabilization bracket 12 and the top plate 113, and a second connection portion 144 of the guide bracket 14 may be stacked between the second edge portion 12d of the image stabilization bracket 12 and the top plate 113. Alternatively, the first connection portion 142 may be located on a side, backing to movement space 124, of the first edge portion 12b, and the second connection portion 144 may be located on a side, backing the movement space 124, of the second edge portion 12d. In this way, arrangement is performed around a periphery, to reduce a height of the motor 1 and implement miniaturization.

For example, the image stabilization magnetic-attractive piece 16 is located on a side, backing the guide bracket 14, of the top plate 113, and the image stabilization magnetic-attractive piece 16 is an integrated mechanical part. In this case, a quantity of image stabilization magnetic-attractive pieces 16 is small, and assembly is convenient. In addition, an area of the image stabilization magnetic-attractive piece 16 is large. This can ensure a magnitude and stability of the magnetic forces between the image stabilization magnetic-attractive piece 16 and the first image stabilization magnetic piece 132 and between the image stabilization magnetic-attractive piece 16 and the second image stabilization magnetic piece 134, to improve reliability of optical image stabilization of the motor 1.

As shown in FIG. 31 and FIG. 34, in some embodiments, the motor 1 further includes a plurality of first spring plates 18. The plurality of first spring plates 18 may be arranged on a plane parallel to a third direction Z, and located on a side, backing the first edge portion 12b or the second edge portion 12d, of the image stabilization bracket 12. For example, the plurality of first spring plates 18 may be disposed close to an outer side of the third edge portion 12f or the fourth edge portion 12g of the image stabilization bracket 12. The plurality of first spring plates 18 connect the image stabilization bracket 12 to the bottom plate 111. In this case, the plurality of first spring plates 18 are arranged on an X-Z plane or a Y-Z plane, and the plurality of first spring plates 18, the base 11, and the image stabilization bracket 12 are arranged compactly. This helps reduce a height of the motor 1 and implement miniaturization of the motor 1.

In the foregoing embodiments, a single-coil driving solution is mainly used for the image stabilization drive mechanism 13 of the motor 1. In some other embodiments, a dual-coil driving solution may alternatively be used for the image stabilization drive mechanism 13 of the motor 1. An example is described below.

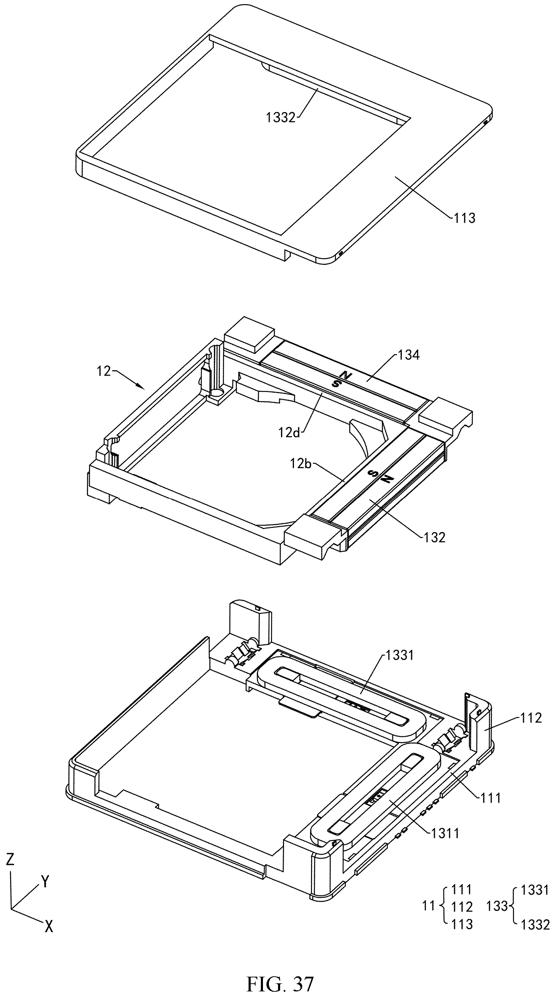

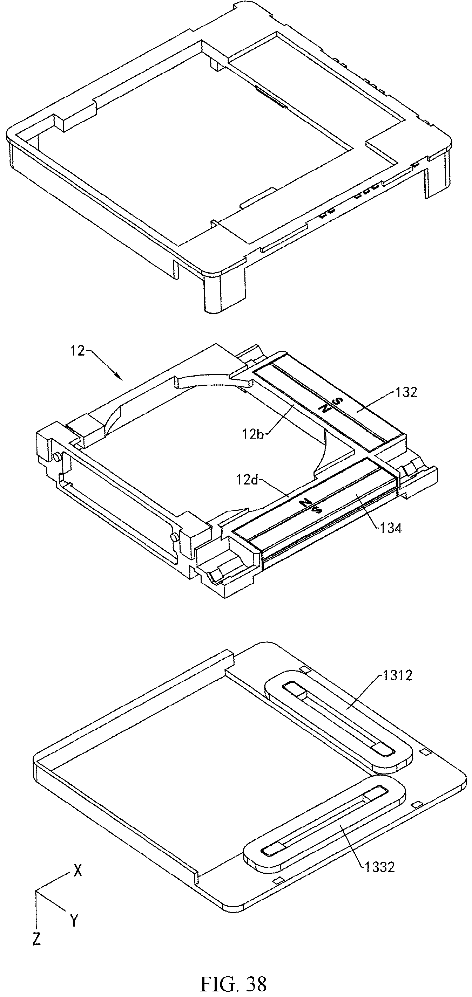

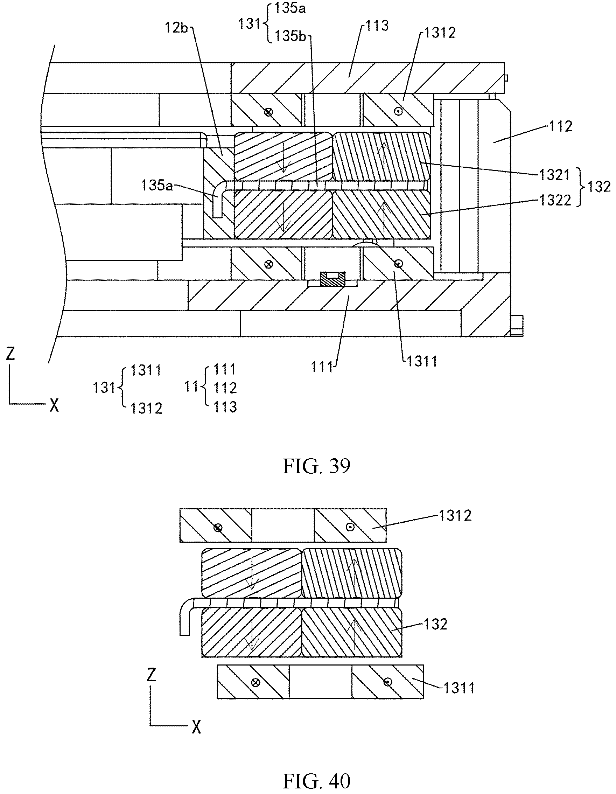

FIG. 36 is a diagram of a partial structure of the motor 1 shown in FIG. 4 according to some other embodiments. FIG. 37 is a schematic exploded view of a structure of the structure shown in FIG. 36. FIG. 38 is a diagram of a structure of the structure shown in FIG. 37 at another angle. FIG. 39 is a schematic cross-sectional view of a structure of the structure shown in FIG. 36 that is cut along H-H. This embodiment may include most of the technical solutions in the foregoing embodiments. The following mainly describes differences between this embodiment and the foregoing embodiments, and most content that is the same between this embodiment and the foregoing embodiments is not described in detail again.

In some embodiments, the base 11 includes a bottom plate 111, a side frame 112, and a top plate 113. The top plate 113 is disposed opposite to the bottom plate 111, and the side frame 112 is connected between the bottom plate 111 and the top plate 113. A first image stabilization magnetic piece 132 is fastened to a first edge portion 12b of an image stabilization bracket 12. A second image stabilization magnetic piece 134 is fastened to a second edge portion 12d of the image stabilization bracket 12. The image stabilization bracket 12 is located on an inner side of the side frame 112. A first image stabilization coil 131 may include a first sub-coil 1311 and a second sub-coil 1312. The first sub-coil 1311 is fastened to the bottom plate 111 and is disposed facing the first image stabilization magnetic piece 132. The second sub-coil 1312 is fastened to the top plate 113 and is disposed facing the first image stabilization magnetic piece 132. The first image stabilization magnetic piece 132 may have two opposite polarity directions (as indicated by arrows in FIG. 39), and the polarity directions of the first image stabilization magnetic piece 132 are arranged to be perpendicular to a winding plane of the first sub-coil 1311 and a winding plane of the second sub-coil 1312. When currents pass through the first sub-coil 1311 and the second sub-coil 1312, the image stabilization bracket 12 is driven to move relative to the base 11 along a first direction X.

A second image stabilization coil 133 may include a third sub-coil 1331 and a fourth sub-coil 1332. The third sub-coil 1331 is fastened to the bottom plate 111 and is disposed facing the second image stabilization magnetic piece 134. The fourth sub-coil 1332 is fastened to the top plate 113 and is disposed facing the first image stabilization magnetic piece 132. When currents pass through the third sub-coil 1331 and the fourth sub-coil 1332, the image stabilization bracket 12 is driven to move relative to the base 11 along the first direction X. The second image stabilization magnetic piece 134 may have two opposite polarity directions (as indicated by arrows in FIG. 39), and the polarity directions of the second image stabilization magnetic piece 134 are arranged to be perpendicular to a winding plane of the third sub-coil 1331 and a winding plane of the fourth sub-coil 1332.

In this embodiment, a dual-coil driving solution is used for the image stabilization drive mechanism 13 of the motor 1, so that a larger driving force can be provided. This helps improve driving efficiency and increase a stroke for optical image stabilization. In addition, because the first sub-coil 1311 and the second sub-coil 1312 are respectively located on two sides of the first image stabilization magnetic piece 132 that back each other, accompanying forces of driving forces of the first sub-coil 1311 and the second sub-coil 1312 can counteract each other, to implement a more accurate driving action. Because the third sub-coil 1331 and the fourth sub-coil 1332 are respectively located on two sides of the second image stabilization magnetic piece 134 that back each other, accompanying forces of driving forces of the first sub-coil 1311 and the second sub-coil 1312 can counteract each other, to implement a more accurate driving action. An accompanying force is a component of a magnetic force along a non-movement direction due to a tilt of a magnetic field line at an edge of a magnetic piece.

A conductor of the base 11 may include a first part arranged on the bottom plate 111, a second part arranged on the side frame 112, and a third part arranged on the top plate 113. The first sub-coil 1311 and the third sub-coil 1331 may be electrically connected to the first part. The third part is electrically connected to the first part through the second part. The second sub-coil 1312 and the fourth sub-coil 1332 may be electrically connected to the third part.

For example, current directions of the first sub-coil 1311 and the second sub-coil 1312 may be the same. For example, the first sub-coil 1311 and the second sub-coil 1312 may be disposed in series. Alternatively, the first sub-coil 1311 and the second sub-coil 1312 may be disposed in parallel, or power may be supplied to the sub-coils separately. Parameters, such as diameters and quantities of turns, of the first sub-coil 1311 and the second sub-coil 1312 may be set to same values or different values.

For example, the third sub-coil 1331 and the fourth sub-coil 1332 may be disposed in series. Alternatively, the third sub-coil 1331 and the fourth sub-coil 1332 may be disposed in parallel, or power may be supplied to the sub-coils separately. Parameters, such as diameters and quantities of turns, of the third sub-coil 1331 and the fourth sub-coil 1332 may be set to same values or different values.

As shown in FIG. 39, in some embodiments, the first sub-coil 1311, the first image stabilization magnetic piece 132, and the second sub-coil 1312 may be disposed in alignment with each other along a third direction Z. To be specific, a center of the first sub-coil 1311, a center of the first image stabilization magnetic piece 132, and a center of the second sub-coil 1312 are aligned or approximately aligned along the third direction Z. In this case, driving forces between the first sub-coil 1311 and the first image stabilization magnetic piece 132 and between the second sub-coil 1312 and the first image stabilization magnetic piece 132 are large, and arrangement space of the first sub-coil 1311, the first image stabilization magnetic piece 132, and the second sub-coil 1312 on an X-Y plane is small. This facilitates miniaturization of the motor 1. The third sub-coil 1331, the second image stabilization magnetic piece 134, and the fourth sub-coil 1332 may be designed in same or similar manners. Details are not described herein again.

FIG. 40 is a diagram of a partial structure of the structure shown in FIG. 39 according to some other embodiments.

In some other embodiments, arrangement positions of the first sub-coil 1311 and the second sub-coil 1312 may be different from those in the embodiment shown in FIG. 39. For example, along the first direction X, the first sub-coil 1311 may be disposed with a deviation toward one side relative to the first image stabilization magnetic piece 132, and the second sub-coil 1312 may be disposed with a deviation toward the other side relative to the second image stabilization magnetic piece 134. In this case, the first sub-coil 1311, the second image stabilization magnetic piece 134, and the second sub-coil 1312 are approximately arranged along the third direction Z. However, a center of the first sub-coil 1311, a center of the first image stabilization magnetic piece 132, and a center of the second sub-coil 1312 are in a non-aligned position relationship along the third direction Z. The first sub-coil 1311 and the second sub-coil 1312 may be disposed with deviations toward two sides relative to the first image stabilization magnetic piece 132 along the first direction X, to balance magnetic forces. The third sub-coil 1331, the second image stabilization magnetic piece 134, and the fourth sub-coil 1332 may be designed in same or similar manners. Details are not described herein again.

Still refer to FIG. 39. In some embodiments, the first image stabilization magnetic piece 132 may include a first magnetic sub-piece 1321 and a second magnetic sub-piece 1322 that are arranged along the third direction Z opposite to each other. Polarity direction arrangements of the first magnetic sub-piece 1321 and the second magnetic sub-piece 1322 are consistent, and the first magnetic sub-piece 1321 and the second magnetic sub-piece 1322 each have two opposite polarity directions. A first image stabilization magnetic-conductive piece 135 of the image stabilization drive mechanism 13 is located between the first magnetic sub-piece 1321 and the second magnetic sub-piece 1322. The first image stabilization magnetic-conductive piece 135 includes a first part 135a and a second part 135b connected to the first part 135a. The first part 135a is embedded in the first edge portion 12b. The second part 135b is exposed relative to the image stabilization bracket 12. The first magnetic sub-piece 1321 is fastened to a side surface of the second part 135b, and the second magnetic sub-piece 1322 is fastened to another side surface of the second part 135b. In this case, the first magnetic sub-piece 1321, the first image stabilization magnetic-conductive piece 135, and the second magnetic sub-piece 1322 are arranged along the third direction Z. The first magnetic sub-piece 1321 may be located between the first image stabilization magnetic-conductive piece 135 and the first sub-coil 1311. The second magnetic sub-piece 1322 may be located between the first image stabilization magnetic-conductive piece 135 and the second sub-coil 1312. In this embodiment, an assembly structure of the first image stabilization magnetic piece 132 and the first image stabilization magnetic-conductive piece 135 is simple and easy to implement, and has low costs.

The first image stabilization magnetic-conductive piece 135 and the image stabilization bracket 12 may form an integrated mechanical part through in-mold injection molding, or may form an integrated structure through assembly. In some other embodiments, in a dual-coil driving solution, the image stabilization drive mechanism 13 may alternatively not be provided with the first image stabilization magnetic-conductive piece 135. In this case, the first magnetic sub-piece 1321 and the second magnetic sub-piece 1322 may be directly fastened to each other and fastened to the image stabilization bracket 12.

The first magnetic sub-piece 1321 and the second magnetic sub-piece 1322 may be a dual-magnet structure, a Halbach magnet array structure, or a single-magnet structure. For a detailed solution, refer to related descriptions in the foregoing embodiments. Details are not described herein again.

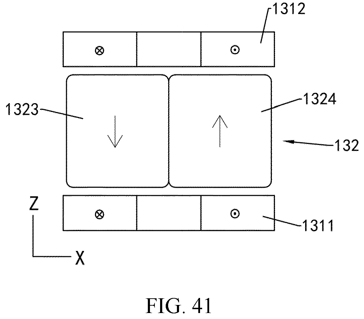

FIG. 41 is a diagram of a partial structure of the structure shown in FIG. 39 according to some other embodiments.

In some embodiments, the first image stabilization magnetic piece 132 may include a first magnet 1323 and a second magnet 1324. The first magnet 1323 and the second magnet 1324 are arranged along the first direction X. A polarity direction of the first magnet 1323 is opposite to a polarity direction of the second magnet 1324. Both the polarity direction of the first magnet 1323 and the polarity direction of the second magnet 1324 are perpendicular to the winding plane of the first sub-coil 1311 and the winding plane of the second sub-coil 1312. In this embodiment, the image stabilization drive mechanism 13 is not provided with a first image stabilization magnetic-conductive piece.

In some other embodiments, the first image stabilization magnetic piece 132 may alternatively be a Halbach magnet array. For example, the first image stabilization magnetic piece 132 may include at least three magnets. Among three adjacent magnets, polarization directions of two magnets located on sides are opposite to each other and are perpendicular to an arrangement direction of the three magnets, and a polarization direction of a magnet located in the middle is from one magnet to the other magnet. In this embodiment, the image stabilization drive mechanism 13 is not provided with a first image stabilization magnetic-conductive piece.

In some other embodiments, the first image stabilization magnetic piece 132 may alternatively include one magnet, and the magnet includes two parts with opposite polarity directions. The magnet may be made by using a bipolar magnetization technique. In this embodiment, the image stabilization drive mechanism 13 is not provided with a first image stabilization magnetic-conductive piece.

It can be understood that the second image stabilization magnetic piece 134 and a second image stabilization magnetic-conductive piece 136 may be designed in a same or similar manner with reference to the foregoing embodiments (including the embodiment shown in FIG. 39 and the embodiment shown in FIG. 41). Details are not described herein again.

In the foregoing embodiments, the focusing coil 221 of the motor 1 is fastened to the third edge portion 12f of the image stabilization bracket 12. In some other embodiments, the focusing coil 221 may alternatively be fastened to the fourth edge portion 12g of the image stabilization bracket 12 and disposed facing the focusing magnetic piece 222, and is configured to drive the focusing bracket 21 to move relative to the image stabilization bracket 12 along the third direction Z. In this case, the fourth edge portion 12g of the image stabilization bracket 12 may be provided with a through hole 126, the circuit board assembly 23 is mounted to the fourth edge portion 12g of the image stabilization bracket 12, the focusing coil 221 may be fastened to the fourth edge portion 12g through a circuit board, and the focusing coil 221 is at least partially located in the through hole 126. In this embodiment, the image stabilization drive mechanism 13 of the motor 1 is arranged in space on two sides of the image stabilization bracket 12, the focusing drive mechanism 22 is arranged in space on a third side of the image stabilization bracket 12, and no drive assembly may be arranged in space on the remaining side of the image stabilization bracket 12. In this way, an overall structural arrangement of the motor 1 can be compact when a focusing function and an image stabilization function are ensured, so that space utilization is high. This facilitates a miniaturization design. A distance between a center axis of the focusing bracket 21 and an outer side surface of the third edge portion 12f may be less than a distance between the center axis of the focusing bracket 21 and an outer side surface of the fourth edge portion 12g. Certainly, in some other embodiments, a distance between the center axis of the focusing bracket 21 and an outer side surface of the third edge portion 12f may alternatively be greater than or equal to a distance between the center axis of the focusing bracket 21 and an outer side surface of the fourth edge portion 12g. For other designs of the motor 1 in this embodiment, refer to related descriptions in the foregoing embodiments. Details are not described herein again.

The following describes some solutions of the focusing drive module 20 of the motor 1 with reference to accompanying drawings.

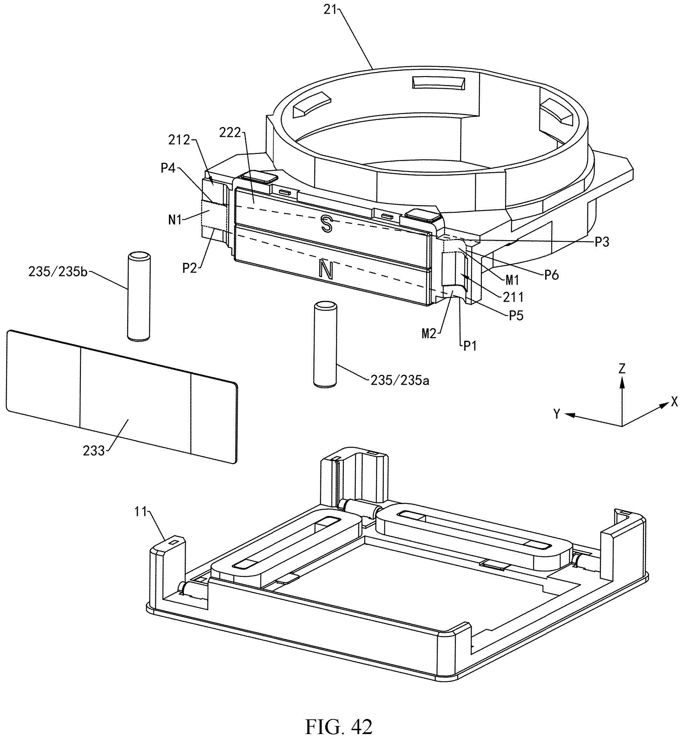

FIG. 42 is a schematic exploded view of a partial structure of the motor 1 shown in FIG. 4. This embodiment may include most of the technical solutions in the foregoing embodiments. The following mainly describes differences between this embodiment and the foregoing embodiments, and most content that is the same between this embodiment and the foregoing embodiments is not described in detail again.

In some embodiments, a part of the first sliding shaft 235a is disposed in the first sliding slot 211 of the focusing bracket 21, and a part of the second sliding shaft 235b is disposed in the second sliding slot 212 of the focusing bracket 21. It can be understood that position limiting is implemented on the focusing bracket 21 along some directions on the X-Y plane through fitting between the first sliding shaft 235a and the first sliding slot 211 and fitting between the second sliding shaft 235b and the second sliding slot 212. To be specific, the focusing bracket 21 is prevented from moving along the directions. This ensures stability of the focusing bracket 21.

In some embodiments, the first sliding shaft 235a may tightly fit the focusing bracket 21, and the second sliding shaft 235b may loosely fit the focusing bracket 21. For example, the first sliding slot 211 is arranged to be "V"-shaped, and the second sliding slot 212 is "L"-shaped, "U"-shaped, or the like. In this way, the "V"-shaped first sliding slot 211 is wrapped around the first sliding shaft 235a. It can be understood that the first sliding shaft 235a is arranged to tightly fit the focusing bracket 21, and the second sliding shaft 235b is arranged to loosely fit the focusing bracket 21, so that difficulty in assembling the focusing bracket 21 and an image stabilization bracket 12 can be reduced.

In other embodiments, the focusing bracket 21 may alternatively be connected to the first sliding shaft 235a and the second sliding shaft 235b in other manners. For example, the focusing bracket 21 is provided with a first via and a second via. Then the first sliding shaft 235a and the second sliding shaft 235b are inserted in the first via and the second via respectively.

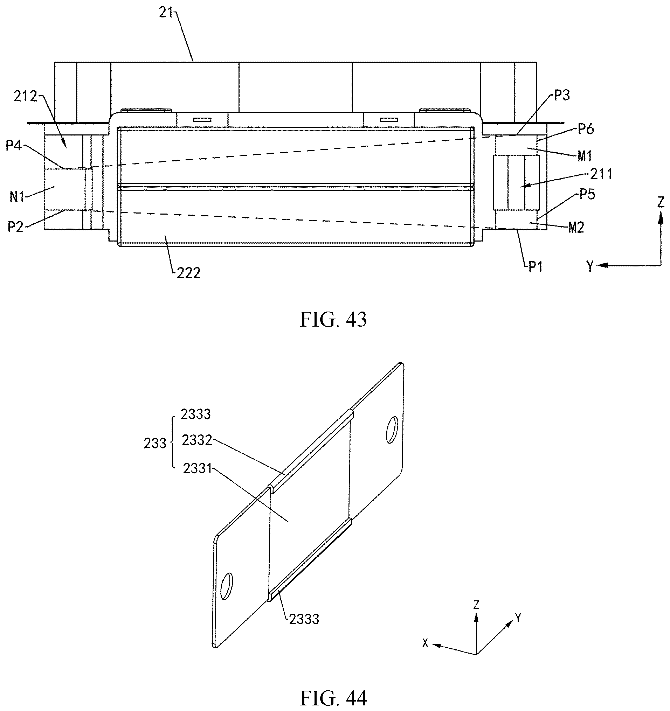

Refer to FIG. 42 and FIG. 43. FIG. 43 is a diagram of a structure of a partial structure of the structure shown in FIG. 42 at another angle.

In some embodiments, there are at least two contact positions between the focusing bracket 21 and the first sliding shaft 235a, for example, including a first contact position M1 (a region enclosed by dashed lines in FIG. 42 and FIG. 43) and a second contact position M2 (a region enclosed by dotted lines in FIG. 42 and FIG. 43). The second contact position M2 is arranged closer to a bottom surface of the base 11 than the first contact position M1. To be specific, a distance between the second contact position M2 and the bottom surface of the base 11 is less than a distance between the first contact position M1 and the bottom surface of the base 11.

There is at least one contact position between the focusing bracket 21 and the second sliding shaft 235b, for example, including a third contact position N1 (a region enclosed by dashed lines in FIG. 42 and FIG. 43). The second contact position M2 is arranged closer to the bottom surface of the base 11 than the third contact position N1. To be specific, a distance between the third contact position N1 and the bottom surface of the base 11 is greater than the distance between the second contact position M2 and the bottom surface of the base 11.

In some embodiments, the focusing magnetic-attractive piece 233 is disposed closer to the first sliding shaft 235a than to the second sliding shaft 235b. In other words, a distance between the focusing magnetic-attractive piece 233 and the first sliding shaft 235a is less than a distance between the focusing magnetic-attractive piece 233 and the second sliding shaft 235b.

It can be understood that, in some solutions, when the focusing magnetic-attractive piece 233 and the focusing magnetic piece 222 are disposed on one side of the focusing bracket 21 and no focusing magnetic-attractive piece 233 or focusing magnetic piece 222 is not disposed on the other side of the focusing bracket 21, during movement of the focusing bracket 21 along the third direction Z, the other side of the focusing bracket 21 is likely to flip with a flipping axis as an axis due to gravity. When the display 300 (refer to FIG. 2) of the electronic device 1000 backs a user (in other words, the camera module 100 faces the user), a first flipping axis is a connection line (a line P1-P2 shown in FIG. 42 and FIG. 43) between a bottom boundary line of the second contact position M2 and a bottom boundary line of the third contact position N1. When the display 300 of the electronic device 1000 faces the user (in other words, the camera module 100 backs the user), a second flipping axis is a connection line (a line P3-P4 shown in FIG. 42 and FIG. 43) between a top boundary line of the first contact position M1 and a top boundary line of the third contact position N1. When the electronic device 1000 stands on a side, a third flipping axis is a connection line (a line P5-P6 shown in FIG. 42 and FIG. 43) between a right boundary line of the first contact position M1 and a right boundary line of the second contact position M2.

In this embodiment, the focusing magnetic-attractive piece 233 is disposed close to the first sliding shaft 235a, so that a center position of a magnetic attraction force generated by the focusing magnetic-attractive piece 233 and the focusing magnetic piece 222 is close to the first sliding shaft 235a. In this way, regardless of whether the focusing bracket 21 flips with the first flipping axis (the line P1-P2) as an axis or the second flipping axis (the line P3-P4) as an axis, a vertical distance between the center position of the magnetic attraction force and the flipping axis (the line P1-P2 or the line P3-P4) (namely, an arm of the magnetic attraction force) becomes longer. In this case, a torque of the magnetic attraction force increases. The torque of the magnetic attraction force is equal to a product of a magnitude of the magnetic attraction force and the arm of the magnetic attraction force. The torque of the magnetic attraction force increases, so that a capability of the focusing bracket 21 to resist flipping caused by gravity is strengthened, and the focusing bracket 21 has better stability during movement along the third direction Z.

In an embodiment, a product of the magnetic attraction force and a vertical distance from the center position of the magnetic attraction force generated by the focusing magnetic-attractive piece 233 and the focusing magnetic piece 222 to the first flipping axis (the line P1-P2) is greater than a gravitational torque of a focusing mover. It can be understood that the focusing mover may be a related structure, for example, the focusing bracket 21, the focusing magnetic piece 222, the lens 2, or the variable-aperture stop 3, along the third direction Z.

In an embodiment, a product of the magnetic attraction force and a vertical distance from the center position of the magnetic attraction force generated by the focusing magnetic-attractive piece 233 and the focusing magnetic piece 222 to the second flipping axis (the line P3-P4) is greater than a gravitational torque of a focusing mover.

In an embodiment, a product of the magnetic attraction force and a vertical distance from the center position of the magnetic attraction force generated by the focusing magnetic-attractive piece 233 and the focusing magnetic piece 222 to the third flipping axis (the line P5-P6) is greater than a gravitational torque of a focusing mover.

In an embodiment, a distance between a center of the focusing magnetic-attractive piece 233 and the first sliding shaft 235a is a, and a distance between the first sliding shaft 235a and the second sliding shaft 235b is b, where a and b meet the following condition: 1/5 b≤a<1/2 b. In this way, the capability of the focusing bracket 21 to resist flipping caused by gravity is strengthened, and the focusing bracket 21 can further tightly fit the first sliding shaft 235a and the second sliding shaft 235b under the action of the magnetic attraction generated by the focusing magnetic-attractive piece 233 and the focusing magnetic piece 222.

FIG. 44 is a diagram of a structure of a partial structure of the motor 1 shown in FIG. 5 according to some other embodiments.

In some embodiments, the focusing magnetic-attractive piece 233 may include a first focusing magnetic-attractive piece 2331, a second focusing magnetic-attractive piece 2332, and a third focusing magnetic-attractive piece 2333. For example, the first focusing magnetic-attractive piece 2331 includes a front surface, and a top surface and a bottom surface that are arranged backing each other. The top surface and the bottom surface may be arranged along the third direction Z, and the front surface is connected between the top surface and the bottom surface. The focusing circuit board 231 may be fastened to the front surface of the first focusing magnetic-attractive piece 2331.

In some embodiments, the second focusing magnetic-attractive piece 2332 is fastened to the top surface of the first focusing magnetic-attractive piece 2331. A part of the second focusing magnetic-attractive piece 2332 protrudes relative to the front surface of the first focusing magnetic-attractive piece 2331. The third focusing magnetic-attractive piece 2333 is fastened to the bottom surface of the first focusing magnetic-attractive piece 2331. A part of the third focusing magnetic-attractive piece 2333 protrudes relative to the front surface of the first focusing magnetic-attractive piece 2331. In this way, along the third direction Z, the second focusing magnetic-attractive piece 2332 and the third focusing magnetic-attractive piece 2333 may be fastened to the first focusing magnetic-attractive piece 2331 at a spacing, and both protrude relative to one side of the first focusing magnetic-attractive piece 2331. It can be understood that the second focusing magnetic-attractive piece 2332 may be fastened to the first focusing magnetic-attractive piece 2331 through bending (a bending angle is not limited), or may be fastened to the first focusing magnetic-attractive piece 2331 in a non-bending manner. In addition, the second focusing magnetic-attractive piece 2332 and the first focusing magnetic-attractive piece 2331 may form an integrated structure. The second focusing magnetic-attractive piece 2332 may alternatively be fastened to the first focusing magnetic-attractive piece 2331 through bonding, welding, or the like. For a connection manner for the third focusing magnetic-attractive piece 2333 and the first focusing magnetic-attractive piece 2331, refer to the connection manner for the second focusing magnetic-attractive piece 2332 and the first focusing magnetic-attractive piece 2331. Details are not described herein again.

In other embodiments, the second focusing magnetic-attractive piece 2332 and the third focusing magnetic-attractive piece 2333 may alternatively be fastened to the front surface of the first focusing magnetic-attractive piece 2331 at a spacing. In other embodiments, the focusing magnetic-attractive piece 233 may alternatively not include the second focusing magnetic-attractive piece 2332 or the third focusing magnetic-attractive piece 2333.

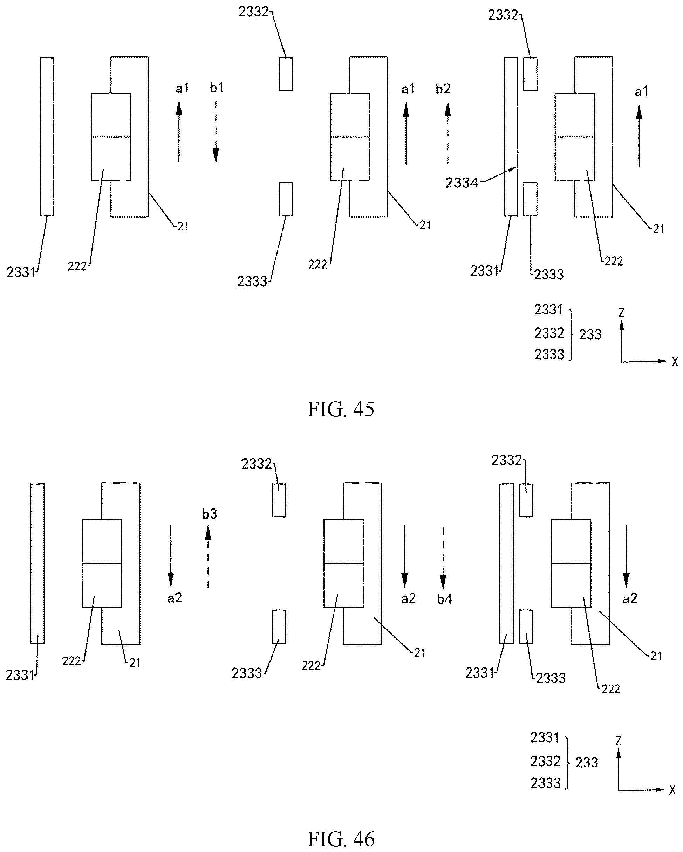

FIG. 45 is a simplified diagram of forces applied to the focusing magnetic-attractive piece 233 shown in FIG. 44 and the focusing magnetic piece 222 and the focusing bracket 21 shown in FIG. 5 during movement along a positive direction of the third direction Z. FIG. 46 is a simplified diagram of forces applied to the focusing magnetic-attractive piece 233 shown in FIG. 44 and the focusing magnetic piece 222 and the focusing bracket 21 shown in FIG. 5 during movement along a negative direction of the third direction Z.

As shown in FIG. 45, in this embodiment, the focusing magnetic-attractive piece 233 includes a first focusing magnetic-attractive piece 2331, a second focusing magnetic-attractive piece 2332, and a third focusing magnetic-attractive piece 2333. Along the third direction Z, the second focusing magnetic-attractive piece 2332 and the third focusing magnetic-attractive piece 2333 are disposed on the first focusing magnetic-attractive piece 2331 at a spacing, and both protrude relative to a front surface of the first focusing magnetic-attractive piece 2331. In addition, a center of the focusing magnetic piece 222 is located between a center of the second focusing magnetic-attractive piece 2332 and a center of the third focusing magnetic-attractive piece 2333.

As shown in FIG. 45, when the focusing magnetic piece 222 moves along the positive direction a1 (indicated by a solid line with an arrow in FIG. 45) along the third direction Z, the focusing magnetic piece 222 moves from a first position to a second position, a magnetic attraction force between the first focusing magnetic-attractive piece 2331 and the focusing magnetic piece 222 can enable the focusing magnetic piece 222 to generate a first restoring force b1 (indicated by a dashed line with an arrow in FIG. 45) along the negative direction of the third direction Z, and a magnetic attraction force between the second focusing magnetic-attractive piece 2332 and the focusing magnetic piece 222 can enable the focusing magnetic piece 222 to generate a second restoring force b2 (indicated by a dashed line with an arrow in FIG. 45) along the positive direction of the third direction Z. In this way, the first restoring force and the second restoring force can approximately counteract or completely counteract each other. In this case, the focusing bracket 21 has better stability during movement along the positive direction of the third direction Z.

As shown in FIG. 46, when the focusing magnetic piece 222 moves along the negative direction a2 (indicated by a solid line with an arrow in FIG. 46) along the third direction Z, the focusing magnetic piece 222 moves from a first position to a third position, a magnetic attraction force between the first focusing magnetic-attractive piece 2331 and the focusing magnetic piece 222 can enable the focusing magnetic piece 222 to generate a third restoring force b3 (indicated by a dashed line with an arrow in FIG. 46) along the positive direction of the third direction Z, and a magnetic attraction force between the third focusing magnetic-attractive piece 2333 and the focusing magnetic piece 222 can enable the focusing magnetic piece 222 to generate a fourth restoring force b4 along the negative direction of the third direction Z. In this way, the third restoring force and the fourth restoring force can approximately counteract or completely counteract each other. In this case, the focusing bracket 21 has better stability during movement along the third direction Z.

It can be understood that, in some other embodiments, the focusing magnetic-attractive piece 233 may alternatively be designed in a structure of covering the focusing circuit board 231. In this case, the circuit board assembly 23 may not include a reinforcing piece, and the focusing magnetic-attractive piece 233 provides reinforcement. The focusing magnetic-attractive piece 233 may include a first focusing magnetic-attractive piece 2331, a second focusing magnetic-attractive piece 2332, and a third focusing magnetic-attractive piece 2333; or may include a first focusing magnetic-attractive piece 2331 and not include a second focusing magnetic-attractive piece 2332 or a third focusing magnetic-attractive piece 2333.

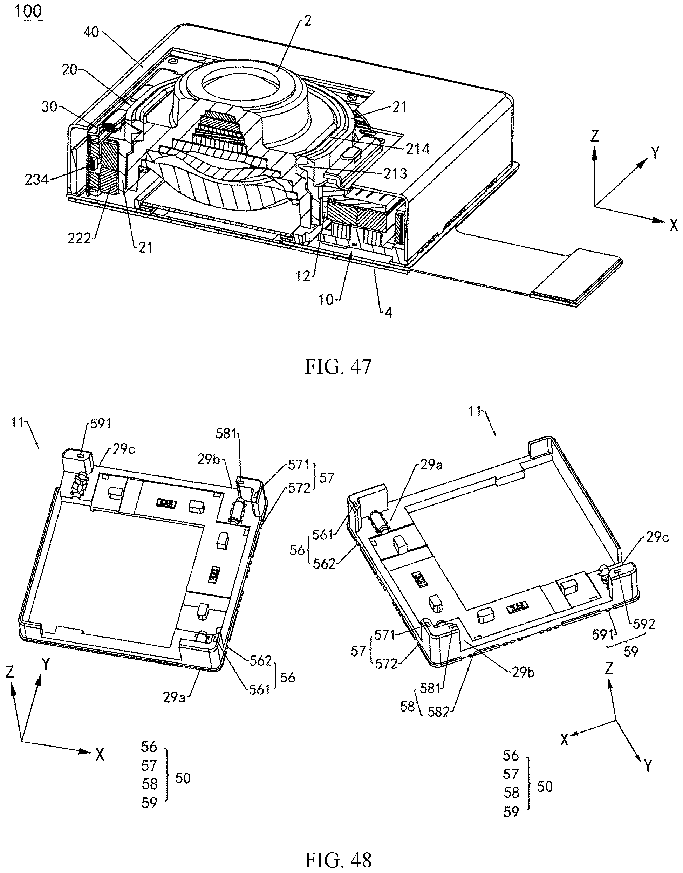

FIG. 47 is a partial cross-sectional view of the camera module 100 shown in FIG. 3 at a line I-I according to an embodiment.

In some embodiments, the focusing sensor 234 may be disposed opposite to the focusing magnetic piece 222. The focusing sensor 234 may be configured to detect magnetic field strength of the focusing magnetic piece 222 at different positions, to detect a position of the focusing bracket 21.

It can be understood that, when the focusing bracket 21 moves relative to the image stabilization bracket 12 along the third direction Z, the focusing bracket 21 may drive the focusing magnetic piece 222 to move relative to the image stabilization bracket 12 along the third direction Z. The focusing sensor 234 may detect magnetic field strength at a position of the focusing magnetic piece 222. In this way, when detecting magnetic field strength of the focusing magnetic piece 222, the focusing sensor 234 may determine displacement of the focusing bracket 21 based on the magnetic field strength. It can be understood that the focusing sensor 234 cooperates with the focusing magnetic piece 222 to accurately control displacement caused by movement of the focusing bracket 21 relative to the image stabilization bracket 12 along the third direction Z. This implements a closed-loop design of the lens 2 assembly.

In some embodiments, a protrusion 213 may be provided on an inner side of the focusing bracket 21. When the lens 2 is mounted to the focusing bracket 21, the protrusion 213 may be arranged opposite to a partial structure of a lens tube of the lens 2. In this case, an adhesive layer 214 is arranged between the protrusion 213 and the lens tube of the lens 2, so that the lens 2 is stably fastened to the focusing bracket 21. In addition, the protrusion 213 and the adhesive layer 214 may also form an interlocking structure, to further improve stability of a connection between the focusing bracket 21 and the lens 2.

In some embodiments, the position-limiting bracket 30 is fastened to the image stabilization bracket 12. A part of the lens 2 is located on a side, facing the module circuit board, of the position-limiting bracket 30. A part of the lens 2 passes through the position-limiting bracket 30, and is located on a side, away from the module circuit board, of the position-limiting bracket 30. In this way, when the focusing bracket 21 drives the lens 2 to move along the positive direction of the third direction Z, the position-limiting bracket 30 can limit a position of the lens 2 along the third direction Z, to prevent the focusing bracket 21 from sliding out of the image stabilization bracket 12 along the third direction Z.

In some embodiments, the position-limiting bracket 30 may be provided with a cushion. When the focusing bracket 21 drives the lens 2 to move to a highest position along the positive direction of the third direction Z, the lens 2 may be in contact with the cushion. Compared with a solution in which the lens 2 is in direct contact with the position-limiting bracket 30, the cushion in this embodiment can avoid damage or displacement of the lens 2 that is caused by direct collision between the lens 2 and the position-limiting bracket 30.

In some embodiments, the housing 40 may be fastened to the module circuit board 4. The housing 40 covers the image stabilization drive module 10, the focusing drive module 20, and a part of the lens 2. A part of the lens 2 passes through the housing 40, and is located outside the housing 40. The housing 40 may be configured to protect the image stabilization drive module 10, the focusing drive module 20, and the lens 2.

The following further describes in detail a circuit arrangement between the focusing drive chip 232 and the module circuit board 4 with reference to related accompanying drawings.

FIG. 48 is a diagram of structures of the base 11 shown in FIG. 5 at different angles according to an embodiment.

In some embodiments, the base 11 is provided with a plurality of wiring terminals 50. For example, the wiring terminals 50 include a first wiring terminal 56, a second wiring terminal 57, a third wiring terminal 58, and a fourth wiring terminal 59.

For example, the plurality of wiring terminals 50 are fastened to the base 11 at spacings. For example, the first wiring terminal 56, the second wiring terminal 57, the third wiring terminal 58, and the fourth wiring terminal 59 are all conducting wires. The first wiring terminal 56, the second wiring terminal 57, the third wiring terminal 58, and the fourth wiring terminal 59 may all be embedded in the base 11 at spacings.

For example, the first wiring terminal 56 may be embedded in a first corner portion 29a of the base 11. A lead-in end 561 of the first wiring terminal 56 may be exposed relative to a top surface of the first corner portion 29a. A lead-out end 562 of the first wiring terminal 56 may be exposed relative to a bottom surface of the first corner portion 29a.

For example, the second wiring terminal 57 may be embedded in a second corner portion 29b of the base 11. A lead-in end 571 of the second wiring terminal 57 may be exposed relative to a top surface of the second corner portion 29b. A lead-out end 572 of the second wiring terminal 57 may be exposed relative to a bottom surface of the second corner portion 29b.

For example, the third wiring terminal 58 may be embedded in the second corner portion 29b of the base 11 and spaced away from the second wiring terminal 57. A lead-in end 581 of the third wiring terminal 58 may be exposed relative to the top surface of the second corner portion 29b and spaced away from the lead-in end 571 of the second wiring terminal 57. A lead-out end 582 of the third wiring terminal 58 may be exposed relative to the bottom surface of the second corner portion 29b and spaced away from the lead-out end 572 of the second wiring terminal 57.

For example, the fourth wiring terminal 59 may be embedded in a third corner portion 29c of the base 11. A lead-in end 591 of the fourth wiring terminal 59 may be exposed relative to a top surface of the third corner portion 29c. A lead-out end 592 of the fourth wiring terminal 59 may be exposed relative to a bottom surface of the third corner portion 29c. The second corner portion 29b may be located between the first corner portion 29a and the third corner portion 29c.

It can be understood that the lead-out end 562 of the first wiring terminal 56, the lead-out end 572 of the second wiring terminal 57, the lead-out end 582 of the third wiring terminal 58, and the lead-out end 592 of the fourth wiring terminal 59 may be configured to electrically connect to the module circuit board 4 (refer to FIG. 47). In this way, an external power supply may supply power to the first wiring terminal 56, the second wiring terminal 57, the third wiring terminal 58, and the fourth wiring terminal 59 through the module circuit board 4 (refer to FIG. 47).

In other embodiments, the first wiring terminal 56, the second wiring terminal 57, the third wiring terminal 58, and the fourth wiring terminal 59 each may alternatively be arranged in a flexible circuit board structure. Alternatively, the first wiring terminal 56, the second wiring terminal 57, the third wiring terminal 58, and the fourth wiring terminal 59 may be integrated into one flexible circuit board.

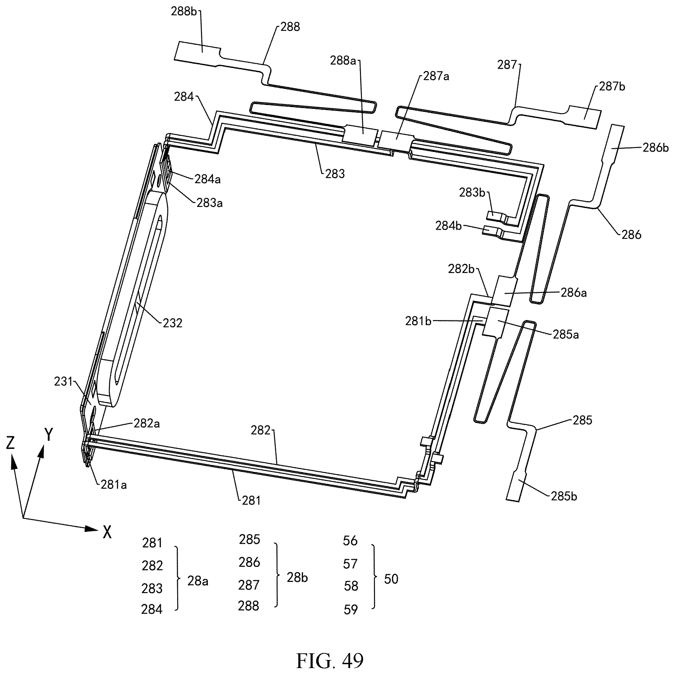

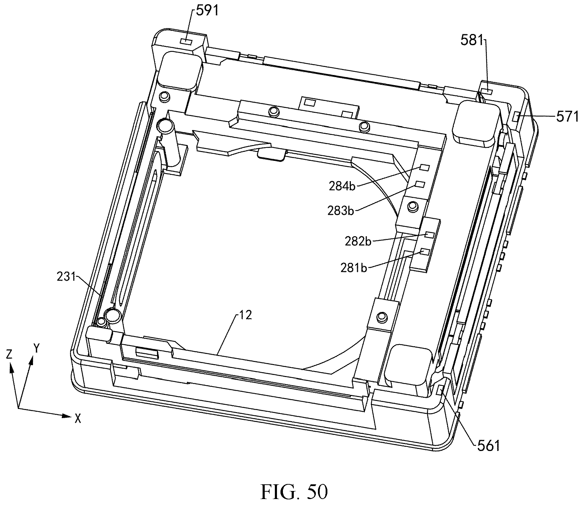

FIG. 49 is a diagram of a structure of lines for electrically connecting the focusing drive chip 232 shown in FIG. 5 to external structures according to an embodiment. FIG. 50 is a diagram of a partial structure of the motor 1 shown in FIG. 4 according to an embodiment.

In some embodiments, the focusing drive module 20 further includes a plurality of wires 28a and a plurality of conducting elastomers 28b. For example, the plurality of wires 28a include a first wire 281, a second wire 282, a third wire 283, and a fourth wire 284. The plurality of conducting elastomers 28b include a first conducting elastomer 285, a second conducting elastomer 286, a third conducting elastomer 287, and a fourth conducting elastomer 288. The plurality of conducting elastomers 28b may be an implementation structure of the plurality of first spring plates in FIG. 5 in the foregoing embodiments.

For example, the plurality of wires 28a are embedded in the image stabilization bracket 12 at spacings. For example, the first wire 281, the second wire 282, the third wire 283, and the fourth wire 284 are all conducting wires. The first wire 281, the second wire 282, the third wire 283, and the fourth wire 284 may all be embedded in the image stabilization bracket 12. In other embodiments, positions of the first wire 281, the second wire 282, the third wire 283, and the fourth wire 284 are not specifically limited.

For example, both a lead-in end and a lead-out end of each wire 28a are exposed relative to the image stabilization bracket 12. Lead-out ends of the plurality of wires 28a are electrically connected to a plurality of ports of the focusing drive chip 232 through the focusing circuit board 231 in a one-to-one correspondence.

For example, both a lead-in end 281a of the first wire 281 and a lead-out end 281b of the first wire 281 may be exposed relative to a surface of the image stabilization bracket 12. The lead-in end 281a of the first wire 281 may be electrically connected to an SDA signal end of the focusing drive chip 232 through the focusing circuit board 231. It can be understood that the SDA signal end may be configured to transmit a serial data (serial data, SDA) signal of an I2C signal.

For example, a lead-in end 282a of the second wire 282 may be exposed relative to a surface of the image stabilization bracket 12. The lead-in end 282a of the second wire 282 may be electrically connected to an SCL signal end of the focusing drive chip 232 through the focusing circuit board 231. A lead-out end 282b of the second wire 282 may be exposed relative to a top surface of the image stabilization bracket 12 and spaced away from the lead-out end 281b of the first wire 281. It can be understood that the SCL signal end may be configured to transmit a serial clock (serial clock, SCL) signal of an I2C signal.

For example, a lead-in end 283a of the third wire 283 may be exposed relative to a surface of the image stabilization bracket 12. The lead-in end 283a of the third wire 283 may be electrically connected to a positive power end of the focusing drive chip 232 through the focusing circuit board 231. A lead-out end 283b of the third wire 283 may be exposed relative to the top surface of the image stabilization bracket 12 and spaced away from the lead-out end 281b of the first wire 281 and the lead-out end 282b of the second wire 282.

For example, a lead-in end 284a of the fourth wire 284 may be exposed relative to a surface of the image stabilization bracket 12. The lead-in end 284a of the fourth wire 284 may be electrically connected to a negative power end of the focusing drive chip 232 through the focusing circuit board 231. A lead-out end 284b of the fourth wire 284 may be exposed relative to the top surface of the image stabilization bracket 12 and spaced away from the lead-out end 281b of the first wire 281, the lead-out end 282b of the second wire 282, and the lead-out end 283b of the third wire 283.

In other embodiments, the first wire 281, the second wire 282, the third wire 283, and the fourth wire 284 each may alternatively be arranged in a flexible circuit board structure. Alternatively, the first wire 281, the second wire 282, the third wire 283, and the fourth wire 284 may be integrated into one flexible circuit board. Specifically, the following provides detailed descriptions with reference to related accompanying drawings.

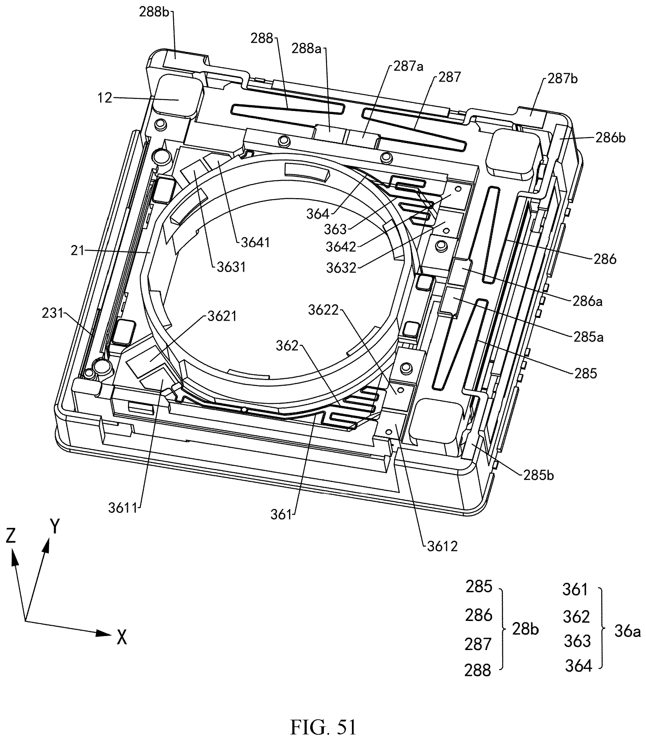

Refer to FIG. 49 to FIG. 51. FIG. 51 is a diagram of a partial structure of the motor 1 shown in FIG. 4 according to an embodiment.

In some embodiments, the first conducting elastomer 285, the second conducting elastomer 286, the third conducting elastomer 287, and the fourth conducting elastomer 288 may all be arranged in a metal elastomer structure. The first conducting elastomer 285, the second conducting elastomer 286, the third conducting elastomer 287, and the fourth conducting elastomer 288 are all deformable under stress, to be specific, have a stretchability function.

For example, the plurality of conducting elastomers 28b are fastened to the image stabilization bracket 12 at spacings. For example, the first conducting elastomer 285, the second conducting elastomer 286, the third conducting elastomer 287, and the fourth conducting elastomer 288 may all be disposed on the top surface of the image stabilization bracket 12. It can be understood that size space on the X-Y plane of the motor 1 may be used for the first conducting elastomer 285, the second conducting elastomer 286, the third conducting elastomer 287, and the fourth conducting elastomer 288. In this way, the first conducting elastomer 285, the second conducting elastomer 286, the third conducting elastomer 287, and the fourth conducting elastomer 288 can be disposed in a large area, to achieve a small movement reaction force. It can be understood that, when the image stabilization bracket 12 moves relative to the base 11 on the X-Y plane, the first conducting elastomer 285, the second conducting elastomer 286, the third conducting elastomer 287, and the fourth conducting elastomer 288 are deformed and generate elastic forces. When the elastic forces are opposite to a movement direction, the elastic forces are movement reaction forces. In this way, areas of the first conducting elastomer 285, the second conducting elastomer 286, the third conducting elastomer 287, and the fourth conducting elastomer 288 are increased, so that lengths of the first conducting elastomer 285, the second conducting elastomer 286, the third conducting elastomer 287, and the fourth conducting elastomer 288 are increased. This reduces elastic forces of the first conducting elastomer 285, the second conducting elastomer 286, the third conducting elastomer 287, and the fourth conducting elastomer 288, in other words, reduces movement reaction forces. If a movement reaction force of the conducting elastomer 28b appears in the following descriptions, refer to the descriptions of the movement reaction forces of the first conducting elastomer 285, the second conducting elastomer 286, the third conducting elastomer 287, and the fourth conducting elastomer 288. Details are not described again.

In other embodiments, the first conducting elastomer 285, the second conducting elastomer 286, the third conducting elastomer 287, and the fourth conducting elastomer 288 may alternatively be disposed on a peripheral surface of the image stabilization bracket 12.

For example, lead-in ends of the plurality of conducting elastomers 28b are electrically connected to the lead-out ends of the plurality of wires 28a in a one-to-one correspondence. In this case, the lead-in ends of the plurality of conducting elastomers 28b are electrically connected to the plurality of ports of the focusing drive chip 232 through the plurality of wires 28a and the focusing circuit board 231 in a one-to-one correspondence.

It can be understood that the lead-in end 285a of the first conducting elastomer 285 is electrically connected to the lead-out end 281b of the first wire 281. In this case, the first conducting elastomer 285 may be electrically connected to the SDA signal end of the focusing drive chip 232 through the first wire 281 and the focusing circuit board 231. The lead-in end 286a of the second conducting elastomer 286 is electrically connected to the lead-out end 282b of the second wire 282. In this case, the second conducting elastomer 286 may be electrically connected to the SCL signal end of the focusing drive chip 232 through the second wire 282 and the focusing circuit board 231. The lead-in end 287a of the third conducting elastomer 287 is electrically connected to the lead-out end 283b of the third wire 283. In this case, the third conducting elastomer 287 may be electrically connected to the positive power end of the focusing drive chip 232 through the third wire 283 and the focusing circuit board 231. The lead-in end 288a of the fourth conducting elastomer 288 is electrically connected to the lead-out end 284b of the fourth wire 284. In this case, the fourth conducting elastomer 288 may be electrically connected to the negative power end of the focusing drive chip 232 through the fourth wire 284 and the focusing circuit board 231.

In an embodiment, the lead-in end 285a of the first conducting elastomer 285 may be fastened to the lead-out end 281b of the first wire 281 through welding, conductive adhesive, or the like. For a connection manner for the lead-in end 286a of the second conducting elastomer 286 and the lead-out end 282b of the second wire 282, a connection manner for the lead-in end 287a of the third conducting elastomer 287 and the lead-out end 283b of the third wire 283, and a connection manner for the lead-in end 288a of the fourth conducting elastomer 288 and the lead-out end 284b of the fourth wire 284, refer to the connection manner for the lead-in end 285a of the first conducting elastomer 285 and the lead-out end 281b of the first wire 281. Details are not described herein again.

As shown in FIG. 48 to FIG. 51, lead-out ends of the plurality of conducting elastomers 28b are electrically connected to the plurality of wiring terminals 50 in a one-to-one correspondence.

For example, the lead-out end 285b of the first conducting elastomer 285 is electrically connected to the lead-in end 561 of the first wiring terminal 56, the lead-out end 286b of the second conducting elastomer 286 is electrically connected to the lead-in end 571 of the second wiring terminal 57, the lead-out end 287b of the third conducting elastomer 287 is electrically connected to the lead-in end 581 of the third wiring terminal 58, and the lead-out end 288b of the fourth conducting elastomer 288 is electrically connected to the lead-in end 591 of the fourth wiring terminal 59.

In an embodiment, the lead-out end 285b of the first conducting elastomer 285 may be fastened to the lead-in end 561 of the first wiring terminal 56 through welding, conductive adhesive, or the like. For a connection manner for the lead-out end 286b of the second conducting elastomer 286 and the lead-in end 571 of the second wiring terminal 57, a connection manner for the lead-out end 287b of the third conducting elastomer 287 and the lead-in end 581 of the third wiring terminal 58, and a connection manner for the lead-out end 288b of the fourth conducting elastomer 288 and the lead-in end 591 of the fourth wiring terminal 59, refer to the connection manner for the lead-out end 285b of the first conducting elastomer 285 and the lead-in end 561 of the first wiring terminal 56. Details are not described herein again.

It can be understood that the lead-in end 281a of the first wire 281 may be electrically connected to the SDA signal end of the focusing drive chip 232 through the focusing circuit board 231, the lead-in end 285a of the first conducting elastomer 285 is electrically connected to the lead-out end 281b of the first wire 281, the lead-out end 285b of the first conducting elastomer 285 is electrically connected to the lead-in end 561 of the first wiring terminal 56, and the lead-out end 562 of the first wiring terminal 56 is electrically connected to the module circuit board 4, so that the external power supply can input a signal to the SDA signal end of the focusing drive chip 232 through the module circuit board 4, the first wiring terminal 56, the first conducting elastomer 285, the first wire 281, and the focusing circuit board 231. Similarly, the external power supply may input a signal to the SCL signal end of the focusing drive chip 232 through the module circuit board 4, the second wiring terminal 57, the second conducting elastomer 286, the second wire 282, and the focusing circuit board 231. In addition, the external power supply may be electrically connected to the positive power end of the focusing drive chip 232 through the module circuit board 4, the third wiring terminal 58, the third conducting elastomer 287, the third wire 283, and the focusing circuit board 231. The external power supply may be electrically connected to the negative power end of the focusing drive chip 232 through the module circuit board 4, the fourth wiring terminal 59, the fourth conducting elastomer 288, the fourth wire 284, and the focusing circuit board 231.

It can be understood that, in this embodiment, because the image stabilization bracket 12 may move relative to the base 11 along any direction on the X-Y plane, a distance between the image stabilization bracket 12 and the base 11 changes during image stabilization. Therefore, in this embodiment, the first conducting elastomer 285 with an elastic force is disposed, to connect the first wiring terminal 56 of the base 11 to the first wire 281 of the image stabilization bracket 12. In this way, when a distance between the image stabilization bracket 12 and the base 11 changes, the first conducting elastomer 285 is stretched to counteract the distance change, to ensure that a line is not likely to break, and improve circuit stability. Similarly, the second conducting elastomer 286, the second conducting elastomer 286, and the fourth conducting elastomer 288 all have similar functions. Details are not described herein again.

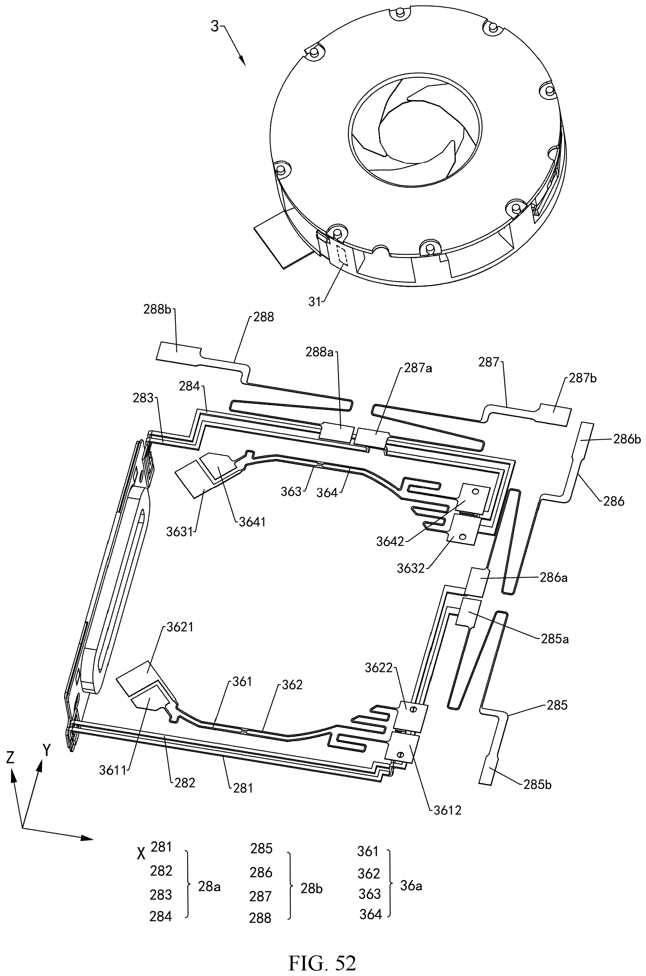

Refer to FIG. 51 and FIG. 52. FIG. 52 is a diagram of a structure of lines for electrically connecting the focusing drive chip 232 shown in FIG. 5 to external structures according to another embodiment.

In some embodiments, the variable-aperture stop 3 and the motor 1 may further include a plurality of conducting spring plates 36a. The plurality of conducting spring plates 36a may be an implementation structure of the plurality of second spring plates in the foregoing embodiments. The plurality of conducting spring plates 36a include a first conducting spring plate 361, a second conducting spring plate 362, a third conducting spring plate 363, and a fourth conducting spring plate 364.

For example, the first conducting spring plate 361, the second conducting spring plate 362, the third conducting spring plate 363, and the fourth conducting spring plate 364 may all be arranged in a metal elastomer structure. The first conducting spring plate 361, the second conducting spring plate 362, the third conducting spring plate 363, and the fourth conducting spring plate 364 are all deformable under stress, to be specific, have a stretchability function.

For example, the plurality of conducting spring plates 36a are fastened to the focusing bracket 21 at spacings. For example, the first conducting spring plate 361, the second conducting spring plate 362, the third conducting spring plate 363, and the fourth conducting spring plate 364 may all be disposed on a top surface of the focusing bracket 21 at spacings.

For example, lead-in ends of the plurality of conducting spring plates 36a are configured to electrically connect to a plurality of ports of the drive chip 31 of the variable-aperture stop 3 in a one-to-one correspondence.

It can be understood that a lead-in end 3611 of the first conducting spring plate 361 may be electrically connected to an SDA signal end of the drive chip 31 of the variable-aperture stop 3. In an embodiment, the lead-in end 3611 of the first conducting spring plate 361 may be electrically connected to the SDA signal end of the drive chip 31 of the variable-aperture stop 3 through a circuit board, a wiring terminal, and the like of the variable-aperture stop 3. It can be understood that FIG. 52 shows the drive chip 31 of the variable-aperture stop 3 by using dashed lines. An actual shape, an actual size, an actual position, and an actual structure of the drive chip 31 are not limited by FIG. 52 or the following accompanying drawings.

It can be understood that a lead-in end 3621 of the second conducting spring plate 362 may be electrically connected to an SCL signal end of the drive chip 31 of the variable-aperture stop 3. In an embodiment, the lead-in end 3621 of the second conducting spring plate 362 may be electrically connected to the SCL signal end of the drive chip 31 of the variable-aperture stop 3 through a circuit board, a wiring terminal, and the like of the variable-aperture stop 3.

It can be understood that a lead-in end 3631 of the third conducting spring plate 363 may be electrically connected to a positive power end of the drive chip 31 of the variable-aperture stop 3. In an embodiment, the lead-in end 3631 of the third conducting spring plate 363 may be electrically connected to a negative power end of the drive chip 31 of the variable-aperture stop 3 through a circuit board, a wiring terminal, and the like of the variable-aperture stop 3.

It can be understood that a lead-in end 3641 of the fourth conducting spring plate 364 may be electrically connected to a negative power end of the drive chip 31 of the variable-aperture stop 3. In an embodiment, the lead-in end 3641 of the fourth conducting spring plate 364 may be electrically connected to the negative power end of the drive chip 31 of the variable-aperture stop 3 through a circuit board, a wiring terminal, and the like of the variable-aperture stop 3.

As shown in FIG. 51 and FIG. 52, lead-out ends of the plurality of conducting spring plates 36a are electrically connected to the plurality of wires 28a in a one-to-one correspondence. In this case, the lead-out ends of the plurality of conducting spring plates 36a are electrically connected to the plurality of conducting elastomers 28b through the plurality of wires 28a in a one-to-one correspondence.

It can be understood that a lead-out end 3612 of the first conducting spring plate 361 is electrically connected to the first wire 281. For example, a part of a middle part of the first wire 281 may be exposed relative to the top surface of the image stabilization bracket 12. The lead-out end 3612 of the first conducting spring plate 361 is fastened to the middle part of the first wire 281 through welding, conductive adhesive, or the like. Certainly, in other embodiments, the lead-out end 3612 of the first conducting spring plate 361 may alternatively be electrically connected to the first wire 281 in another manner, and an electrical connection position is not specifically limited.

It can be understood that, for a connection manner for a lead-out end 3622 of the second conducting spring plate 362 and the second wire 282, a connection manner for a lead-out end 3632 of the third conducting spring plate 363 and the third wire 283, and a connection manner for a lead-out end 3642 of the fourth conducting spring plate 364 and the fourth wire 284, reference may be made to the connection manner for the lead-in end 3611 of the first conducting spring plate 361 and the first wire 281. Details are not described herein again.

It can be understood that the lead-in end 3611 of the first conducting spring plate 361 may be electrically connected to the SDA signal end of the drive chip 31 of the variable-aperture stop 3, the lead-out end 3612 of the first conducting spring plate 361 is electrically connected to the first wire 281, the lead-in end 285a of the first conducting elastomer 285 is electrically connected to the lead-out end 281b of the first wire 281, the lead-out end 285b of the first conducting elastomer 285 is electrically connected to the lead-in end 561 of the first wiring terminal 56, and the lead-out end 562 of the first wiring terminal 56 is electrically connected to the module circuit board 4, so that the external power supply can input a signal to the SDA signal end of the drive chip 31 of the variable-aperture stop 3 through the module circuit board 4, the first wiring terminal 56, the first conducting elastomer 285, the first wire 281, and the first conducting spring plate 361. Similarly, the external power supply may input a signal to the SCL signal end of the drive chip 31 of the variable-aperture stop 3 through the module circuit board 4, the second wiring terminal 57, the second conducting elastomer 286, the second wire 282, and the second conducting spring plate 362. In addition, the external power supply may be connected to the positive power end of the drive chip 31 of the variable-aperture stop 3 through the module circuit board 4, the third wiring terminal 58, the third conducting elastomer 287, the third wire 283, and the third conducting spring plate 363. The external power supply may be electrically connected to the negative power end of the drive chip 31 of the variable-aperture stop 3 through the module circuit board 4, the third wiring terminal 58, the third conducting elastomer 287, the third wire 283, and the fourth conducting spring plate 364.

It can be understood that a line for the SDA signal end of the focusing drive chip 232, a line for the SCL signal end of the focusing drive chip 232, a line for the positive power end of the focusing drive chip 232, and a line for the negative power end of the focusing drive chip 232 are reused as a line for the SDA signal end of the drive chip 31 of the variable-aperture stop 3, a line for the SCL signal end of the drive chip 31 of the variable-aperture stop 3, a line for the positive power end of the drive chip 31 of the variable-aperture stop 3, and a line for the negative power end of the drive chip 31 of the variable-aperture stop 3. In this way, a line arrangement of the motor 1 is simpler, and a structure of the motor 1 is simpler.

It can be understood that, in this embodiment, because the focusing bracket 21 may move relative to the image stabilization bracket 12 along the third direction Z, a distance between the focusing bracket 21 and the image stabilization bracket 12 changes during focusing. Therefore, in this embodiment, the first conducting spring plate 361 with an elastic force is disposed, to connect the variable-aperture stop 3 of the focusing bracket 21 to the first wire 281 of the image stabilization bracket 12. In this way, when a distance between the focusing bracket 21 and the image stabilization bracket 12 changes, the first conducting spring plate 361 is stretched to counteract the distance change, to ensure that a line is not likely to break, and improve circuit stability. Similarly, the second conducting spring plate 362, the second conducting spring plate 362, and the fourth conducting spring plate 364 all have similar functions. Details are not described herein again.

The foregoing describes an embodiment of a circuit arrangement for the focusing drive chip 232 and the drive chip 31 of the variable-aperture stop 3 with reference to related accompanying drawings. The following describes operation of the focusing drive chip 232 and the drive chip 31 of the variable-aperture stop 3 with reference to related accompanying drawings.

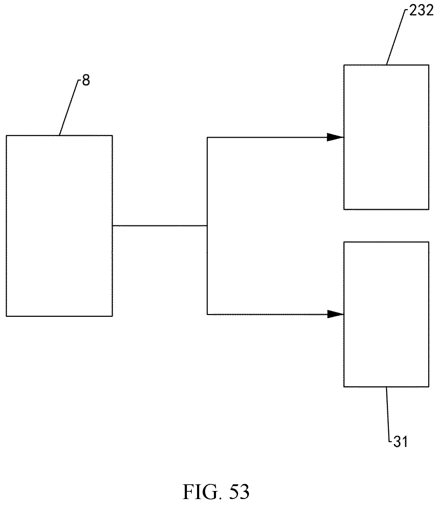

FIG. 53 is a diagram of an electrical connection relationship between a controller 8 of the motor 1, the focusing drive chip 232, and the drive chip 31 of the variable-aperture stop 3 shown in FIG. 4 according to an embodiment.

In some embodiments, the camera module 100 includes the controller 8. The controller 8 may be fastened to the module circuit board 4 (refer to FIG. 47) and electrically connected to the module circuit board 4. The controller 8 is communicatively connected to the focusing drive chip 232. The controller 8 is further communicatively connected to the drive chip 31 of the variable-aperture stop 3. For example, the controller 8 may control operation statuses of the focusing drive chip 232 and the drive chip 31 of the variable-aperture stop 3 through address control.

When the camera module 100 needs to enter a focusing state, the controller 8 controls the focusing drive chip 232 to be in an operating state, and also controls the drive chip 31 of the variable-aperture stop 3 to be in a non-operating state (for example, the drive chip 31 of the variable-aperture stop 3 cannot form a current loop). As shown in FIG. 48 to FIG. 50, an SDA signal may be transmitted to the SDA signal end of the focusing drive chip 232 through the module circuit board 4, the first wiring terminal 56, the first conducting elastomer 285, the first wire 281, and the focusing circuit board 231. In addition, an SCL signal may be transmitted to the SCL signal end of the focusing drive chip 232 through the module circuit board 4, the second wiring terminal 57, the second conducting elastomer 286, the second wire 282, and the focusing circuit board 231. In addition, the external power supply may supply power to the focusing drive chip 232 through the module circuit board 4, the third wiring terminal 58, the third conducting elastomer 287, the third wire 283, the fourth wiring terminal 59, the fourth conducting elastomer 288, the fourth wire 284, and the focusing circuit board 231.

When the camera module 100 needs to enter an aperture hole adjustment state, the controller 8 controls the focusing drive chip 232 to be in a non-operating state (for example, the focusing drive chip 232 cannot form a current loop), and also controls the drive chip 31 of the variable-aperture stop 3 to be in an operating state. As shown in FIG. 48 to FIG. 52, an SDA signal may be transmitted to the SDA signal end of the drive chip 31 of the variable-aperture stop 3 through the module circuit board 4, the first wiring terminal 56, the first conducting elastomer 285, the first wire 281, and the first conducting spring plate 361. In addition, an SCL signal may be transmitted to the SCL signal end of the drive chip 31 of the variable-aperture stop 3 through the module circuit board 4, the second wiring terminal 57, the second conducting elastomer 286, the second wire 282, and the second conducting spring plate 362. In addition, the external power supply may supply power to the drive chip 31 of the variable-aperture stop 3 through the module circuit board 4, the third wiring terminal 58, the third conducting elastomer 287, the third wire 283, the third conducting spring plate 363, the fourth wiring terminal 59, the fourth conducting elastomer 288, the fourth wire 284, and the fourth conducting spring plate 364.

The foregoing describes an embodiment of a circuit arrangement for the focusing drive chip 232 and the drive chip 31 of the variable-aperture stop 3 with reference to related accompanying drawings. The following further specifically describes another embodiment of a circuit arrangement for the focusing drive chip 232 and the drive chip 31 of the variable-aperture stop 3 with reference to related accompanying drawings.

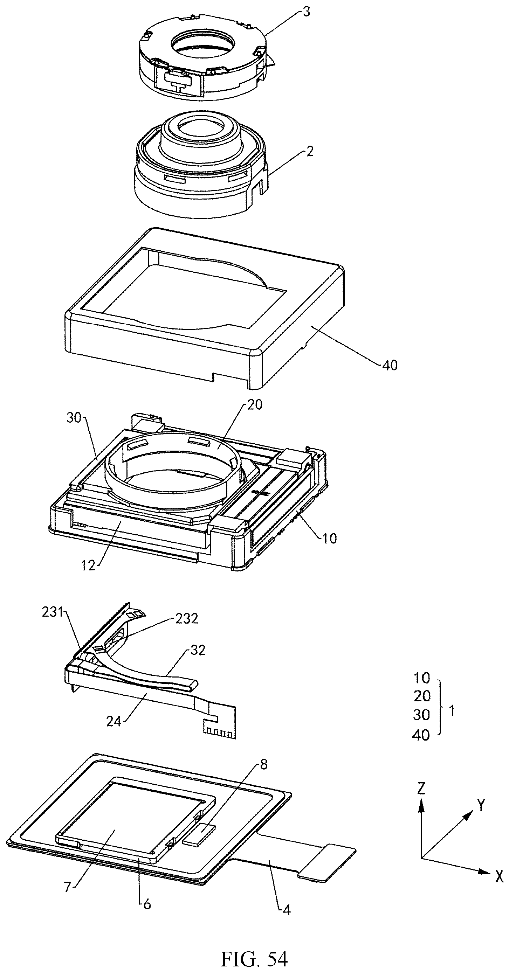

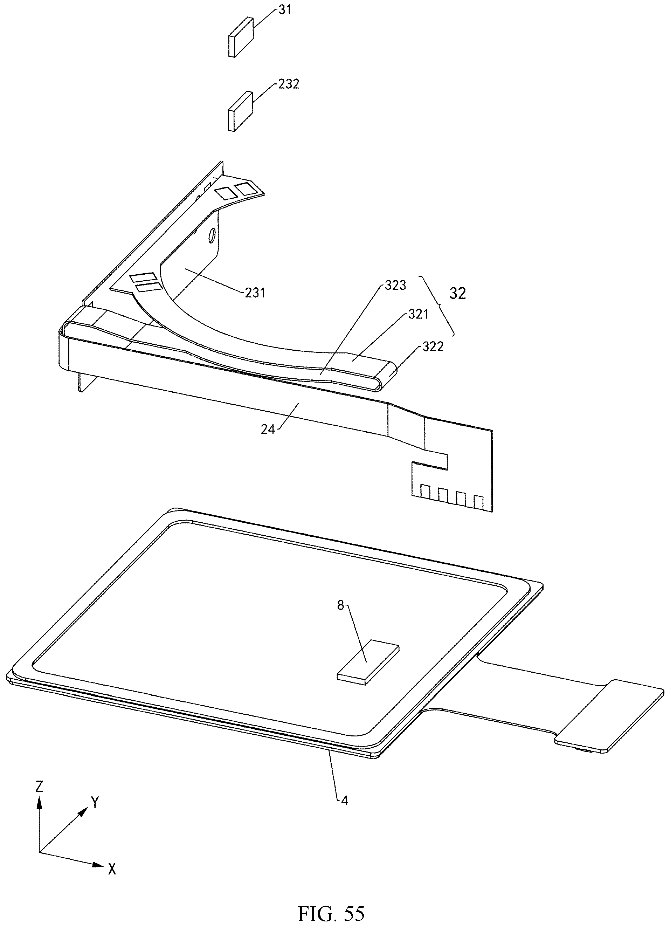

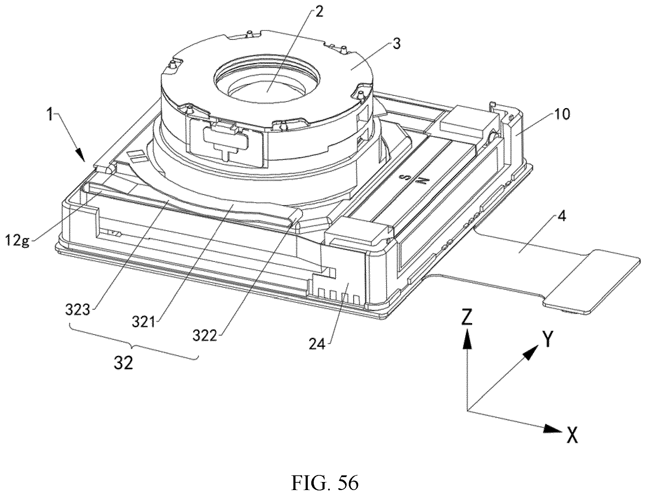

FIG. 54 is a partial schematic exploded view of the camera module 100 shown in FIG. 3 according to another embodiment. FIG. 55 is a partial schematic exploded view of the motor 1 shown in FIG. 54 according to an embodiment. FIG. 56 is a diagram of a partial structure of the camera module 100 shown in FIG. 3 according to another embodiment.

In some embodiments, the focusing drive module 20 further includes a first flexible circuit board 24. The first flexible circuit board 24 is electrically connected between the focusing circuit board 231 and the module circuit board 4. The plurality of ports of the focusing drive chip 232 may be electrically connected to the module circuit board 4 through the focusing circuit board 231 and the first flexible circuit board 24.

It can be understood that, when the camera module 100 needs to enter a focusing state, the controller 8 controls the focusing drive chip 232 to be in an operating state, and also controls the drive chip 31 of the variable-aperture stop 3 to be in a non-operating state (for example, the drive chip 31 of the variable-aperture stop 3 cannot form a current loop). In this way, an SDA signal can be transmitted to the SDA signal end of the focusing drive chip 232 through the module circuit board 4, the first flexible circuit board 24, and the focusing circuit board 231. In addition, an SCL signal may be transmitted to the SCL signal end of the focusing drive chip 232 through the module circuit board 4, the first flexible circuit board 24, and the focusing circuit board 231. In addition, the external power supply may supply power to the focusing drive chip 232 through the module circuit board 4, the first flexible circuit board 24, and the focusing circuit board 231.

In some embodiments, a part of the first flexible circuit board 24 may alternatively be located between the fourth edge portion 12g of the image stabilization bracket 12 and the base 11, to be specific, the first flexible circuit board 24 is located in magnetic-free space, to reduce impact on a magnetic piece in the motor 1. In other embodiments, a position of the first flexible circuit board 24 is not specifically limited.

In some embodiments, the first flexible circuit board 24 may alternatively be located in length space around the image stabilization bracket 12, so that the first flexible circuit board 24 has a long cantilever, to achieve a small movement reaction force. It can be understood that, when the image stabilization bracket 12 moves relative to the base 11 on the X-Y plane, the first flexible circuit board 24 is bent or deformed, and generates an acting force in an opposite direction, namely, a movement reaction force. In this way, a length of the first flexible circuit board 24 is increased to reduce a movement reaction force of the first flexible circuit board 24. If a movement reaction force of the first flexible circuit board 24 appears in the following descriptions, refer to the descriptions of the movement reaction force of the first flexible circuit board 24. Details are not described again.

As shown in FIG. 54 to FIG. 56, the variable-aperture stop 3 further includes a second flexible circuit board 32. One end of the second flexible circuit board 32 is electrically connected to the plurality of ports of the drive chip 31 of the variable-aperture stop 3, and the other end is electrically connected to the first flexible circuit board 24. In this way, the plurality of ports of the drive chip 31 of the variable-aperture stop 3 can be electrically connected to the module circuit board 4 through the second flexible circuit board 32 and the first flexible circuit board 24.

It can be understood that, in this embodiment, the second flexible circuit board 32 and the first flexible circuit board 24 may form an integrated structure. In other embodiments, the second flexible circuit board 32 and the first flexible circuit board 24 may be two independent circuit boards. Then the two independent circuit boards are electrically connected to each other through an electrical connector.

It can be understood that, when the camera module 100 needs to enter an aperture hole adjustment state, the controller 8 controls the focusing drive chip 232 to be in a non-operating state (for example, the focusing drive chip 232 cannot form a current loop), and also controls the drive chip 31 of the variable-aperture stop 3 to be in an operating state. In this way, an SDA signal can be transmitted to the SDA signal end of the drive chip 31 of the variable-aperture stop 3 through the module circuit board 4, the first flexible circuit board 24, and the second flexible circuit board 32. In addition, an SCL signal may be transmitted to the SCL signal end of the drive chip 31 of the variable-aperture stop 3 through the module circuit board 4, the first flexible circuit board 24, and the second flexible circuit board 32. In addition, the external power supply may supply power to the drive chip 31 of the variable-aperture stop 3 through the module circuit board 4, the first flexible circuit board 24, and the second flexible circuit board 32.

It can be understood that a line for the SDA signal end of the focusing drive chip 232, a line for the SCL signal end of the focusing drive chip 232, a line for the positive power end of the focusing drive chip 232, and a line for the negative power end of the focusing drive chip 232 are reused as a line for the SDA signal end of the drive chip 31 of the variable-aperture stop 3, a line for the SCL signal end of the drive chip 31 of the variable-aperture stop 3, a line for the positive power end of the drive chip 31 of the variable-aperture stop 3, and a line for the negative power end of the drive chip 31 of the variable-aperture stop 3. In this way, a line arrangement of the motor 1 is simpler, and a structure of the motor 1 is simpler.

As shown in FIG. 50, the second flexible circuit board 32 includes a first section 321, a second section 322, and a third section 323. The second section 322 is connected between the first section 321 and the third section 323. The first section 321 and the third section 323 are arranged opposite to each other. The second section 322 is in a bent shape. In this way, the second flexible circuit board 32 is in an up-down folding state. The first section 321 is electrically connected to the plurality of ports of the drive chip 31 of the variable-aperture stop 3. The third section 323 is electrically connected to the first flexible circuit board 24 through the focusing circuit board 231.

It can be understood that the second flexible circuit board 32 is in the up-down folding state, so that when a distance between the focusing bracket 21 and the image stabilization bracket 12 changes, a bendability property of the second flexible circuit board 32 is used to counteract the distance change, to ensure that a line is not likely to break, and improve circuit stability. In addition, a quite small movement reaction force of the second flexible circuit board 32 can also be achieved.

In some embodiments, the second flexible circuit board 32 is located on the top of the motor 1, and a projection of the second flexible circuit board 32 on the motor 1 is staggered with a focusing magnet. In other words, magnetic-free space on the top of the motor 1 is used for the second flexible circuit board 32, to reduce impact on the focusing magnet of the motor 1. In other embodiments, a position of the second flexible circuit board 32 is not specifically limited.

It can be understood that several circuit arrangements are described in the foregoing embodiments. In other embodiments, circuit arrangements of the focusing drive chip 232 and the drive chip 31 of the variable-aperture stop 3 are not specifically limited.

It should be noted that embodiments of this application or features in embodiments may be combined with each other if there is no conflict, and any combination of features in different embodiments also falls within the protection scope of this application. In other words, the plurality of embodiments described above may alternatively be combined according to an actual requirement.

It should be noted that all of the foregoing accompanying drawings are example drawings of this application, and do not represent actual sizes of products. In addition, a size proportion relationship between components in the accompanying drawings is not intended to limit an actual product in this application.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A motor (1), comprising a base (11), an image stabilization bracket (12), a first image stabilization magnetic piece (132), a second image stabilization magnetic piece (134), a first image stabilization coil (131), and a second image stabilization coil (133), wherein the image stabilization bracket (12) comprises a first corner portion (12a), a first edge portion (12b), a second corner portion (12c), a second edge portion (12d), and a third corner portion (12e) that are sequentially connected, the first edge portion (12b) and the second edge portion (12d) are arranged at an included angle, the first image stabilization magnetic piece (132) is fastened to the first edge portion (12b), and the second image stabilization magnetic piece (134) is fastened to the second edge portion (12d);
the image stabilization bracket (12) is movably connected to the base (11), both the first image stabilization coil (131) and the second image stabilization coil (133) are fastened to the base (11), the first image stabilization coil (131) is disposed facing the first image stabilization magnetic piece (132) and is configured to drive the image stabilization bracket (12) to move relative to the base (11) along a first direction, the second image stabilization coil (133) is disposed facing the second magnetic image stabilization piece (134) and is configured to drive the image stabilization bracket (12) to move relative to the base (11) along a second direction, and the second direction intersects with the first direction;
the first image stabilization magnetic piece (132) and the first image stabilization coil (131) are arranged along a third direction, the second image stabilization magnetic piece (134) and the second image stabilization coil (133) are arranged along the third direction, and the third direction is perpendicular to the first direction and the second direction; and
the motor (1) further comprises a guide bracket (14), the guide bracket (14) is L-shaped, the guide bracket (14) comprises three support portions (141, 143, and 145) that are spaced apart, the three support portions (141, 143, and 145) are all located between the image stabilization bracket (12) and the base (11) and are disposed in a one-to-one correspondence with the first corner portion (12a), the second corner portion (12c), and the third corner portion (12e), and the three support portions (141, 143, and 145) are connected to the base (11) through a plurality of first support pieces (151) and are connected to the image stabilization bracket (12) through a plurality of second support pieces (152), so that a relative movement direction of the image stabilization bracket (12) and the guide bracket (14) is different from a relative movement direction of the guide bracket (14) and the base (11).

2. The motor (1) according to claim 1, wherein the image stabilization bracket (12) further comprises a third edge portion (12f) and a fourth edge portion (12g), the third edge portion (12f) is connected to the third corner portion (12e) and is disposed opposite to the first edge portion (12b), and the fourth edge portion (12g) is connected to the first corner portion (12a) and is disposed opposite to the second edge portion (12d); and
the motor (1) further comprises a focusing bracket (21), a focusing magnetic piece (222), and a focusing coil (221), the focusing bracket (21) is located on an inner side of the image stabilization bracket (12), the focusing magnetic piece (222) is fastened to the focusing bracket (21), and the focusing coil (221) is fastened to the third edge portion (12f) or the fourth edge portion (12g), is disposed facing the focusing magnetic piece (222), and is configured to drive the focusing bracket (21) to move relative to the image stabilization bracket (12) along the third direction.

3. The motor (1) according to claim 2, wherein the third edge portion (12f) or the fourth edge portion (12g) is provided with a through hole (126), the focusing coil (221) is at least partially located in the through hole (126), the motor (1) further comprises a focusing circuit board (231), and the focusing coil (221) is fastened to the image stabilization bracket (12) through the focusing circuit board (231).

4. The motor (1) according to any one of claims 1 to 3, wherein the three support portions (141, 143, and 145) comprise a first support portion (141), a second support portion (143), and a third support portion (145), the guide bracket (14) further comprises a first connection portion (142) and a second connection portion (144), the first connection portion (142) connects the first support portion (141) to the second support portion (143), and the second connection portion (144) connects the second support portion (143) to the third support portion (145); and
the image stabilization bracket (12) has movement space (124), the first connection portion (142) is located on a side, backing the movement space (124), of the first edge portion (12b) and the first image stabilization magnetic piece (132), and the second connection portion (144) is located on a side, backing the movement space (124), of the second edge portion (12d) and the second image stabilization magnetic piece (134).

5. The motor (1) according to claim 4, wherein the first connection portion (142) comprises a first body (142a) and a first reinforcing piece (142b) embedded in the first body (142a), and strength of the first reinforcing piece (142b) is greater than strength of the first body (142a); and
the first body (142a) is plate-shaped, a size of the first body (142a) along the third direction is greater than a size of the first body (142a) along the first direction, the first reinforcing piece (142b) is plate-shaped, and a size of the first reinforcing piece (142b) along the third direction is less than a size of the first reinforcing piece (142b) along the first direction.

6. The motor (1) according to any one of claims 1 to 5, wherein the motor (1) further comprises an image stabilization magnetic-attractive piece (16), the image stabilization magnetic-attractive piece (16) is fastened to the base (11) and is disposed facing the first image stabilization magnetic piece (132) and the second image stabilization magnetic piece (134), and magnetic forces between the image stabilization magnetic-attractive piece (16) and the first image stabilization magnetic piece (132) and between the image stabilization magnetic-attractive piece (16) and the second image stabilization magnetic piece (134) make the base (11), the first support piece (151), the guide bracket (14), the second support piece (152), and the image stabilization bracket (12) keep in contact.

7. The motor (1) according to claim 6, wherein the image stabilization magnetic-attractive piece (16) comprises a first image stabilization magnetic-attractive piece (161) and a second image stabilization magnetic-attractive piece (162), the first image stabilization magnetic-attractive piece (161) is disposed facing the first image stabilization magnetic piece (132), a center distance between the first image stabilization magnetic-attractive piece (161) and the first corner portion (12a) is less than a center distance between the first image stabilization magnetic-attractive piece (161) and the second corner portion (12c), the second image stabilization magnetic-attractive piece (162) is disposed facing the second image stabilization magnetic piece (134), and a center distance between the second image stabilization magnetic-attractive piece (162) and the third corner portion (12e) is less than a center distance between the second image stabilization magnetic-attractive piece (162) and the second corner portion (12c).

8. The motor (1) according to claim 7, wherein the first image stabilization magnetic-attractive piece (161) is disposed directly facing the first image stabilization magnetic piece (132), and a size of the first image stabilization magnetic-attractive piece (161) along the first direction is greater than a size of the first image stabilization magnetic piece (132) along the first direction; and/or the second image stabilization magnetic-attractive piece (162) directly faces the second image stabilization magnetic piece (134), and a size of the second image stabilization magnetic-attractive piece (162) along the second direction is greater than a size of the second image stabilization magnetic piece (134) along the second direction.

9. The motor (1) according to any one of claims 6 to 8, wherein the base (11) comprises a bottom plate (111) and a side frame (112), the side frame (112) is connected to a periphery of the bottom plate (111), the first image stabilization coil (131), the second image stabilization coil (133), and the image stabilization magnetic-attractive piece (16) are all fastened to the bottom plate (111), the image stabilization bracket (12) is located on an inner side of the side frame (112), and the three support portions (141, 143, and 145) are located between the image stabilization bracket (12) and the bottom plate (111).

10. The motor (1) according to claim 9, wherein the motor (1) further comprises a plurality of first spring plates (18), the plurality of first spring plates (18) are arranged on a plane perpendicular to the third direction and are located on a side, backing the bottom plate (111), of the image stabilization bracket (12), a part of the first spring plates (18) connect the first edge portion (12b) to the side frame (112), and the other part of the first spring plates (18) connect the second edge portion (12d) to the side frame (112).

11. The motor (1) according to any one of claims 6 to 8, wherein the base (11) comprises a bottom plate (111), a side frame (112), and a top plate (113), the top plate (113) and the bottom plate (111) are disposed opposite to each other, the side frame (112) is connected between the bottom plate (111) and the top plate (113), the first image stabilization coil (131) and the second image stabilization coil (133) are fastened to the bottom plate (111), the image stabilization magnetic-attractive piece (16) is fastened to the top plate (113), the image stabilization bracket (12) is located on an inner side of the side frame (112), and the three support portions (141, 143, and 145) are located between the image stabilization bracket (12) and the top plate (113).

12. The motor (1) according to claim 11, wherein the motor (1) further comprises a plurality of first spring plates (18), the plurality of first spring plates (18) are arranged on a plane parallel to the third direction and are located on a side, backing the first edge portion (12b) or the second edge portion (12d), of the image stabilization bracket (12), and the plurality of first spring plates (18) connect the image stabilization bracket (12) to the bottom plate (111).

13. The motor (1) according to claim 11 or 12, wherein the top plate (113) is L-shaped, and the top plate (113) is disposed in a correspondence with the guide bracket (14); and/or the image stabilization magnetic-attractive piece (16) is located on a side, backing the guide bracket (14), of the top plate (113), and the image stabilization magnetic-attractive piece (16) is an integrated mechanical part.

14. The motor (1) according to any one of claims 1 to 8, wherein the first image stabilization coil (131) comprises a first sub-coil (1311) and a second sub-coil (1312), the base (11) comprises a bottom plate (111), a side frame (112), and a top plate (113), the top plate (113) is disposed opposite to the bottom plate (111), the side frame (112) is connected between the bottom plate (111) and the top plate (113), the image stabilization bracket (12) is located on an inner side of the side frame (112), the first sub-coil (1311) is fastened to the bottom plate (111) and is disposed facing the first image stabilization magnetic piece (132), and the second sub-coil (1312) is fastened to the top plate (113) and is disposed facing the first image stabilization magnetic piece (132).

15. The motor (1) according to claim 14, wherein the first sub-coil (1311), the first image stabilization magnetic piece (132), and the second sub-coil (1312) are disposed in alignment with each other along the third direction; or
along the first direction, the first sub-coil (1311) is disposed with a deviation toward one side relative to the first image stabilization magnetic piece (132), and the second sub-coil (1312) is disposed with a deviation toward the other side relative to the second image stabilization magnetic piece (134).

16. The motor (1) according to claim 14 or 15, wherein the first image stabilization magnetic piece (132) comprises a first magnetic sub-piece (1321) and a second magnetic sub-piece (1322) that are arranged along the third direction, polarity direction arrangements of the first magnetic sub-piece (1321) and the second magnetic sub-piece (1322) are consistent, and the first magnetic sub-piece (1321) and the second magnetic sub-piece (1322) each have two opposite polarity directions; or
the first image stabilization magnetic piece (132) comprises a first magnet (1323) and a second magnet (1324), the first magnet (1323) and the second magnet (1324) are arranged along the first direction, and a polarity direction of the first magnet (1323) is opposite to a polarity direction of the second magnet (1324); or
the first image stabilization magnetic piece (132) is a Halbach magnet array; or
the first image stabilization magnetic piece (132) comprises one magnet, and the magnet comprises two parts with opposite polarity directions.

17. The motor (1) according to claim 14 or 15, wherein the first image stabilization magnetic piece (132) comprises a first magnetic sub-piece (1321) and a second magnetic sub-piece (1322), the motor (1) further comprises a first image stabilization magnetic-conductive piece (135), the first image stabilization magnetic-conductive piece (135) comprises a first part (135a) and a second part (135b) connected to the first part (135a), the first part (135a) is embedded in the first edge portion (12b), the second part (135b) is exposed relative to the image stabilization bracket (12), the first magnetic sub-piece (1321) is fastened to a side surface of the second part (135b), the second magnetic sub-piece (1322) is fastened to another side surface of the second part (135b), and the first magnetic sub-piece (1321), the first image stabilization magnetic-conductive piece (135), and the second magnetic sub-piece (1322) are arranged along the third direction.

18. A camera module (100), comprising a lens (2), an image sensor (5), and the motor (1) according to any one of claims 1 to 17, wherein the lens (2) is mounted to the motor (1), and the image sensor (5) is located on a light exit side of the lens (2).

19. The camera module (100) according to claim 18, wherein the camera module (100) further comprises a variable-aperture stop (3), and the variable-aperture stop (3) is located on a light entrance side of the lens (2).

20. An electronic device (1000), comprising a device housing (200) and the camera module (100) according to claim 18 or 19, wherein the camera module (100) is disposed in the device housing (200).
